Europäisches Patentamt

European Patent Office

Office européen des brevets

(19)

(11) Publication number: **0 200 227**
A2

(12) **EUROPEAN PATENT APPLICATION**

(21) Application number: 86106028.3

(22) Date of filing: 02.05.86

(51) Int. Cl.⁴: **G 06 F 15/20**

(30) Priority: 03.05.85 US 730331

(43) Date of publication of application:
05.11.86 Bulletin 86/45

(84) Designated Contracting States:
DE FR GB

(71) Applicant: **Minolta Camera Kabushiki Kaisha**
Osaka Kokusai Building 30, Azuchi-machi 2-chome
Higashi-ku Osaka 541(JP)

(72) Inventor: **Caruso, Jeffrey L.**
229 Lexington Rd.
Concord Massachusetts(US)

(72) Inventor: **Dunn, Thomas E., III**
422 Highland Ave.
Winchester Massachusetts(US)

(72) Inventor: **Johnson, Theodore C.**
666 Main St., No. 204
Winchester Massachusetts(US)

(72) Inventor: **Kadomiya, Ronald H.**
126c Oxford St.
Cambridge Massachusetts(US)

(72) Inventor: **Miller, Barbara S.**
48 Beacon St.
Arlington Massachusetts(US)

(74) Representative: **Glawe, Delfs, Moll & Partner**
Patentanwälte
Postfach 26 01 62 Liebherrstrasse 20
D-8000 München 26(DE)

(54) Word processor system capable of displaying and arranging stored documents.

(57) A word processor which comprises a display unit, a keyboard including a manipulatable input arrangement utilizeable for keying in the characters and others and also for causing document control data to be displayed on the screen or editing the document control data on the screen; a printer, a document composing device for composing a document based on data inputed from the keyboard, storing the document in a recording medium, and outputing it to the printer, and a document control for inputing the document control data in a document control data section at a predetermined location of the recording medium, or outputing the data stored in the recording medium to the display means in dependence on an input signal from the keyboard. The document control data in the recording medium comprrises a first record, having a name of the document, a level of the document and access information to a file of the recording medium corresponding to such document, which name, level and access information are recorded in the recording medium, and a second record having a name and a level of a folder for dividing for each unit of a group of documents of lower level to be brought together, which second record is arranged preceding the first record of documents included in the folder.

Fig.1

EP 0 200 227 A2

- 1 -

## BACKGROUND OF THE INVENTION

### Field of the the Invention

The present invention generally relates to a word processing system and, more particularly, to a word processor having a file control system for registering and processing documents in a directory.

### Description of the Prior Art

Generally, in a word processor, a particular name (document name) is given to each document and it's stored in an external recording medium such as, for example, a floppy disk in the form of a file (a set of data brought together). An operating system of the word processor processes data for each unitary document. The recording medium is provided with a directory in which files are brought together. A directory file stores document name, and information or the like concerned of portions of the recording medium where respective files are stored. The operating system of the word processor performs, by the use of the directory, a process connected with control, recording and input/output of documents (files).

The document can be arranged in a tree structure. Thanks to this tree structure, the documents can be sorted for the control. A name is given to each node of the tree structure.

The word processor is provided with a display unit and the manipulation of the word processor can be carried out by the utilization of a display on a screen of the display unit and an input/output keyboard even in the case of the document control.

In the conventional word processor, in the case where a document name in the recording medium designated is to be displayed on the screen, when, for example, a node of the tree structure is designated, only document names belonging to such designated node can be listed up and displayed on the screen. In addition, only nodes of the tree structure of the document names which are in the most shallow level are listed up and displayed on the screen. When the display is desired to be effected to the lowest level, and when a node is selected, document names belonging to the selected node are displayed on a new screen.

Moreover, the document control (compilation and deletion of documents, change of the document names and others) has hitherto been performed by inputing a command from a keyboard and by suitably selecting a command in a menu system.

However, where a number of documents are to be handled, it is recognized that, if the document control is carried out by the use of one and the same screen, the arrangement, search and other procedures of the documents can readily be executed.

- 3 -

## SUMMARY OF THE INVENTION

The present invention has for its object to provide a word processor with which the document control can be quickly accomplished.

According to one aspect of the present invention, a word processor herein disclosed comprises a word processor· which comprises a display means for displaying characters and others on a screen; a key input means including a manipulatable input means utilizeable for keying in the characters and others and also for causing document control data to be displayed on the screen or editing the document control data on the screen; a printing means for printing document data; a document composing means for composing a document based on data inputed from the key input means, storing the document in a recording medium, and outputing it to the printing means; and a document control means for inputing the document control data in a document control data section at a predetermined location of the recording medium, or outputing the data stored in the recording medium to the display means in dependence on an input signal from the key input means, said document control data in the recording medium comprising a first record, having a name of the document, a level of the document and access information to a file of the recording medium corresponding to such document, said name, level and access information being recorded in the recording medium, and a second record having

- 4 -

a name and a level of a folder for dividing for each unit of a group of documents of lower level to be brought together, said second record being arranged preceding the first record of documents included in said folder, said document control means being operable upon receipt from the manipulatable input means of a signal instructing a file display to cause the document name, the folder name and a list of data including the name of the document within the folder to be successively displayed on the screen of said display means from the record stored in the document control data section, said document control means including a folder specifying means for specifying a folder at the time of display of data connected with the folder.

According to another aspect of the present invention, the document control means is operable upon receipt from the manipulatable input means a signal, instructing of a file display, to cause the display means to successively display from top to bottom on the screen a list of at least names of respective documents included in the record stored in the document control data section, and including a folder specifying means for specifying a folder at the time of display of data connected with the folder, an editing means for editing the document control data on the screen in response to a signal from the manipulatable input means, and a renewing means for renewing the document control data in correspondence with the edition.

With the word processor according to the present invention, a list of folders and documents can be displayed on one and the same screen and, also, a distinction between the folder and the document can be clearly displayed.

It is also possible to open the folder on the same screen for permitting an operator to look at the contents of the folder, and to close the folder once opened. While viewing the screen, one can insert a document into a folder or take the document out of the folder. Accordingly, a procedure heretofore carried out in handling paper-made folders and in manual document control can be followed while the operator views the screen. Both the search and arrangement of documents can also be easily accomplished.

BRIEF DESCRIPTION OF THE DRAWINGS

This and other objects and features of the present invention will become clear from the following description taken in conjunction with a preferred embodiment thereof with reference to the accompanying drawings, in which:

Fig. 1 is a diagram shown an example of a list of documents displayed on a cathode ray tube (CRT) screen;

Fig. 2 is a perspective view of a word processor;

Fig. 3 is a block diagram showing an internal structure of the word processor;

Fig. 4 is a diagram showing an example of the screen of the word processor;

- 6 -

Fig. 5 is a diagram showing a portion of a keyboard arrangement;

Fig. 6 is a diagram showing an example of a tree structure of document names;

Fig. 7 is a flowchart for files editing;

Fig. 8, composed of Figs. 8(a) and 8(b), is a flowchart for the display of the list of documents;

Fig. 9 is a diagram showing a list of documents displayed when a Files key is depressed;

Figs. 10 and 11 are flowcharts for respective processes of moving a cursor downwards and upwards;

Fig. 12 is a flowchart for the display of a list of documents when the Select key is depressed and also for a process of opening and closing a folder;

Fig. 13 is a flowchart for a process which takes place when an Enter key is depressed;

Fig. 14 is a flowchart for a process of displaying documents in a folder;

Fig. 15 is a flowchart for a process of preparing an empty document and an empty folder and copying of a document and a folder;

Fig. 16 is a flowchart for a process of depressing the Enter key subsequent to the movement of the cursor;

Figs. 17(a) to 17(e) and Figs. 18(a) to 18(b) are diagrams showing sequences of preparing respective empty folders;

Fig. 19 is a flowchart for a process of preparing the empty folder;

Figs. 20(a) and 20(b) are diagrams showing a sequence of preparation of the empty document;

Fig. 21 is a flowchart for a process of preparing the empty document;

Figs. 22(a) to 22(c) are diagrams showing the sequence of copying of the document;

Fig. 23 is a flowchart for a process of copying a document;

Figs. 24(a) to 24(d) and Figs. 25(a) to 25(d) are diagrams showing respective sequences of a process of copying closed and opened folders;

Figs. 26 and 27 are flowcharts for a process of copying the closed and opened folders, respectively;

Fig. 28 is a flowchart for a process of moving a document and a folder;

Figs. 29(a) to 29(d) are diagrams showing a sequence of the process for moving the document;

Fig. 30 is a flowchart for a process of moving the document;

Figs. 31(a) to 31(d) and Figs. 32(a) to 32(d) are diagrams showing respective sequences of a process of moving the closed and opened folders;

Figs. 33 and 34 are flowcharts for respective processes of moving the closed and opened folders;

Fig. 35 is a flowchart for a process of deleting a document and a folder;

Figs. 36(a) to 36(c) are diagrams showing a sequence of the process of deleting the folder;

Figs. 37 and 38 are flowcharts for respective processes of deleting the folder and the document;

Figs. 39(a) to 39(c) are diagrams showing a sequence of a sorting process;

Fig. 40 is a flowchart for the sorting process;

Figs. 41(a) to 41(d) are diagrams showing a sequence of a processor for search; and

Fig. 42 is a flowchart for the search process.

DETAILED DESCRIPTION OF THE EMBODIMENT

(a)  Structure of the Word Processor

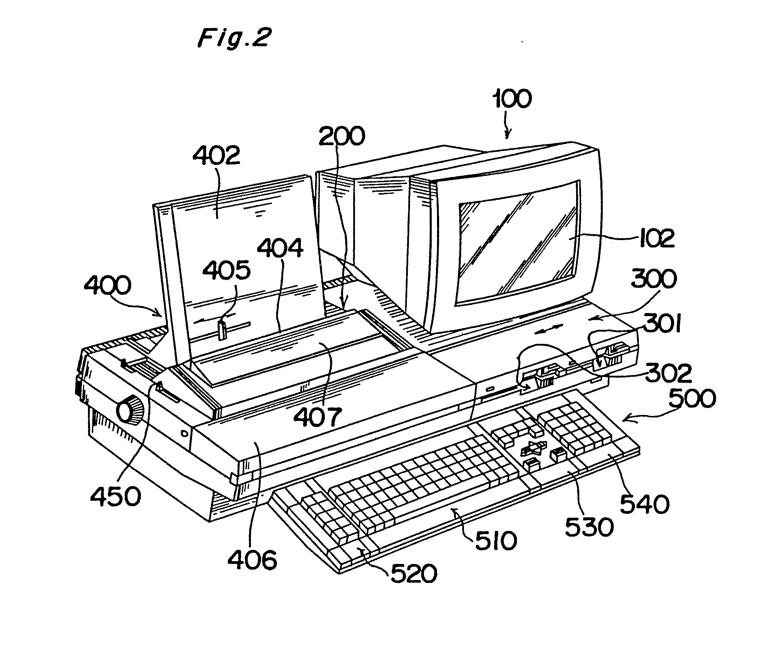

The outer appearance of a word processor embodying the present invention is shown in Fig. 2.

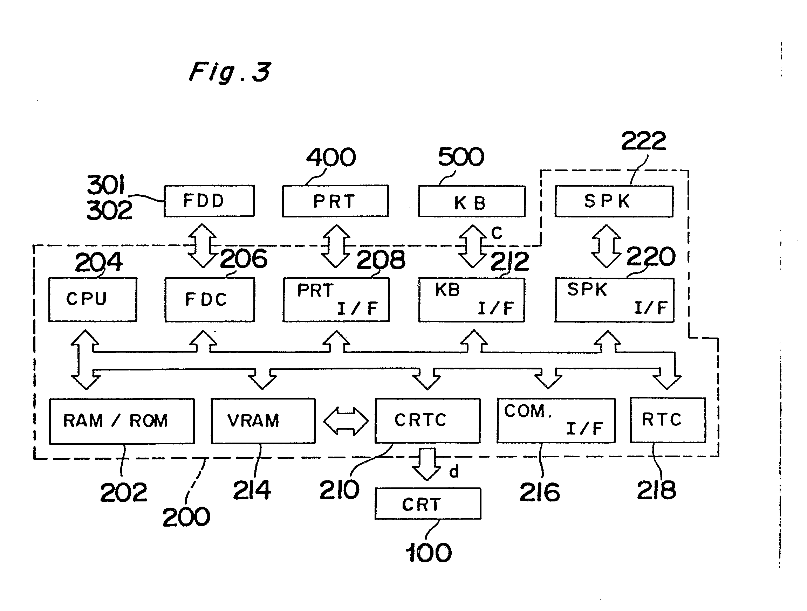

The word processor includes a keyboard 500 which is an external input device, a host computer 200 (See Fig. 3) which comprises electronic component parts such as CPU, ROM, RAM and others and an electric power source, a main body 300 equipped with floppy disk drive units 301 and 302 which are external storage devices, a display unit 100 and a printer 400 of a type utilizing a daisy wheel, which printer is an external output device.

The main body 300 is equipped with a main switch (not shown) adapted to be manipulated by an operator, and the floppy disk drive units 301 and 302 which constitute the external storage devices.

The display unit 100 is provided with a brightness adjusting knob (not shown) adapted to be manipulated by the operator when necessity arises, and a cathode ray tube 102 for displaying information inputed from the keyboard 500.

Keys arranged on an operating board (See Fig. 2) of the keyboard 500 constituting the external input device include character keys 510 for keying in alphanumeric characters one at a time as is the case with an ordinary typewriter, function keys 520 which are assigned with special commands when and so long as a program for the word processor is loaded, and ten keys 540 for keying in numerals one at a time.

The printer 400 of a type utilizing the daisy wheel comprises a paper rest 402, a paper alignment guide 405 for aligning a paper at the time of insertion of a paper, a front cover 406, a silencer cover 407 for minimizing the emission of noises, a visor 404 for minimizing the reflection of external light, and a bail lever 450 serving concurrently as a switch for semi-automatic paper insertion and as a paper retainer for retaining the paper during the printing.

A procedure for making a document by the use of the work processor will now be described.

- 10 -

Before the power supply is effected, a system disk containing programs for the word processor and a data disk for the storage of contents of a document to be made are inserted respectively into the floppy disk drive units 301 and 302, and the main switch on the main body 300 is subsequently turned on. The host computer 200 accommodated in the main body 300 goes to read out the contents of the system disk inserted into the floppy disk drive unit 301. When the contents of the programs for the word processor, which are stored in the system disk, are loaded the CRT screen 102 of the display unit 100 displays a framework 104 representative of the space in which the printer 400 can print out alphanumeric characters, and a cursor 31 at the leftmost character position on the first line corresponding to the first character to be printed out. Starting from this condition, and when one of the character keys 510 on the keyboard 500 is depressed, a corresponding character is displayed at a location specified by and immediately above the cursor 31.

(b)  Structure of the Host Computer

The schematic structure of the host computer 200 (shown in Fig. 3) and the transaction of data in a ROM/RAM memory 202 and signals from and to CPU 204 will now be described.

CPU 204 is a so-called microcomputer capable of performing an arithmetic operation and since registers, input and output ports and others as well as the function thereof are well known to those skilled in the art, the details thereof are not herein described for the sake of brevity. FDC 206 is a floppy disk controller for controlling the input to, and the output from, the floppy disk drive units 301 and 302. PRT I/F 208 is an input/output interface for the transaction of signals to and from PRT (printer) 400, and likewise, a CRT controller 210 is an input/output interface for the transaction with CRT (display unit) 100 and connected with a video memory 214. A keyboard interface (KB I/F) 212 is an input interface with the keyboard (KB) 500. COM I/F 216 is an input output interface with the outside, and RTC 218 is a clock showing the current date and time. SPK I/F 220 is an input/output interface with a loudspeaker (SPK) 222. The loudspeaker 222 is used to issue a warning sound.

At the outset, when the main switch on the main body 300 is turned on while the system disk and the data disk are inserted in the floppy disk drive units 301 and 302, respectively, CPU 204 causes the contents of the system disk to be stored at a RAM area of the RAM/ROM memory 202 through the floppy disk controller 206 according to the contents of a program stored in a ROM area of the RAM/ROM memory 202. Input signals from the keyboard 500 are inputed to CPU 204 through the keyboard interface 212. Subsequently, CPU 204 performs a process according to contents in a screen compiling routine storage unit, outputs signals to CRT (display unit) 100 through the CRT controller 210, and displays such signals on the CRT screen 102. Input signals from the keyboard 500 are stored in the RAM of the RAM/ROM memory 202 as a document memory.

After the completion of the input, that is, the composition of a document, the output to the printer 400 takes place and this will now be described.

In order for the composed document to be printed out by the printer 400, a Print key (not shown) on the keyboard 500 has to be depressed.

When a signal generated from the Print key is inputed to CPU 204 as an input signal from the keyboard 500, CPU 204 executes a print-out signal generating routine stored in the RAM/ROM memory 202 and outputs to the printer 400 the contents of a document then displayed on the CRT screen 102.

(c) Keyboard

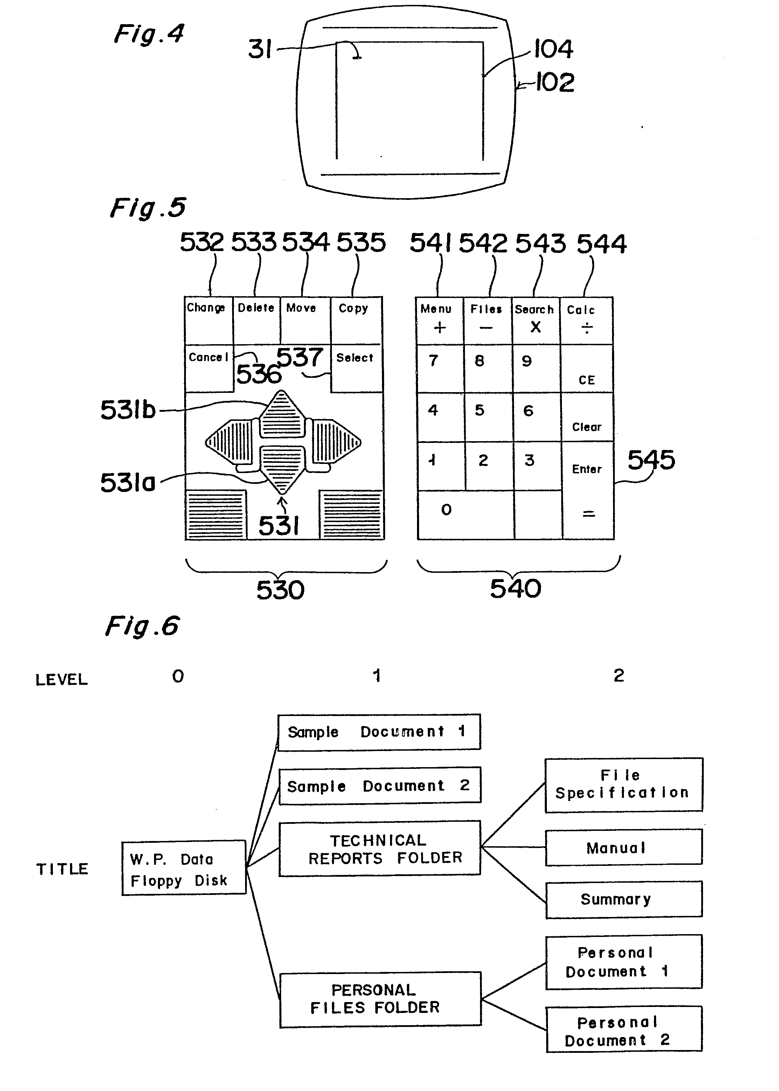

Operating keys on the keyboard 500 will now be described to such an extent as to be required for the understanding of the description of the embodiment of the present invention. It is to be noted that Fig. 5 illustrates the details of the cursor moving keys 530 and the ten keys 540.

- 13 -

Of the cursor moving keys 530 arranged somewhat rightwards of the center of the keyboard 500, four pentagonal keys located centrally thereof are for moving the cursor 31 on the CRT screen 102, as shown in Fig. 4, in respective directions (upward, downward, leftward and rightward) represented by the acute-angled corners. Two square keys disposed below the pentagonal keys are for moving the cursor 31 fast. Of the six keys disposed above the pentagonal keys, four keys, i.e., Change, Delete, Move and Copy keys 532, 533, 534 and 535 are used when the contents of a document composed on the CRT screen are to be copied, deleted, moved and dealt with in any other way, respectively. A location desired to be edited can be specified by moving the cursor 31 to such location. A Select key 537 is adapted to be depressed when a sub-menu, or a content of the menu, is to be selected from the menu displayed on the CRT screen 102 by the selection of a key such as a Menu key 541 and others as will be described later. For example, by depressing the Select key, a document or a folder can be selected. A Cancel key 536 is a key used for cancelling the aforesaid operation.

Of the ten keys 540 arranged at the top right position on the keyboard 500, Menu, Files, Search and Calc keys have the following respective functions. When the Menu key 541 is depressed, a menu is displayed on the CRT screen

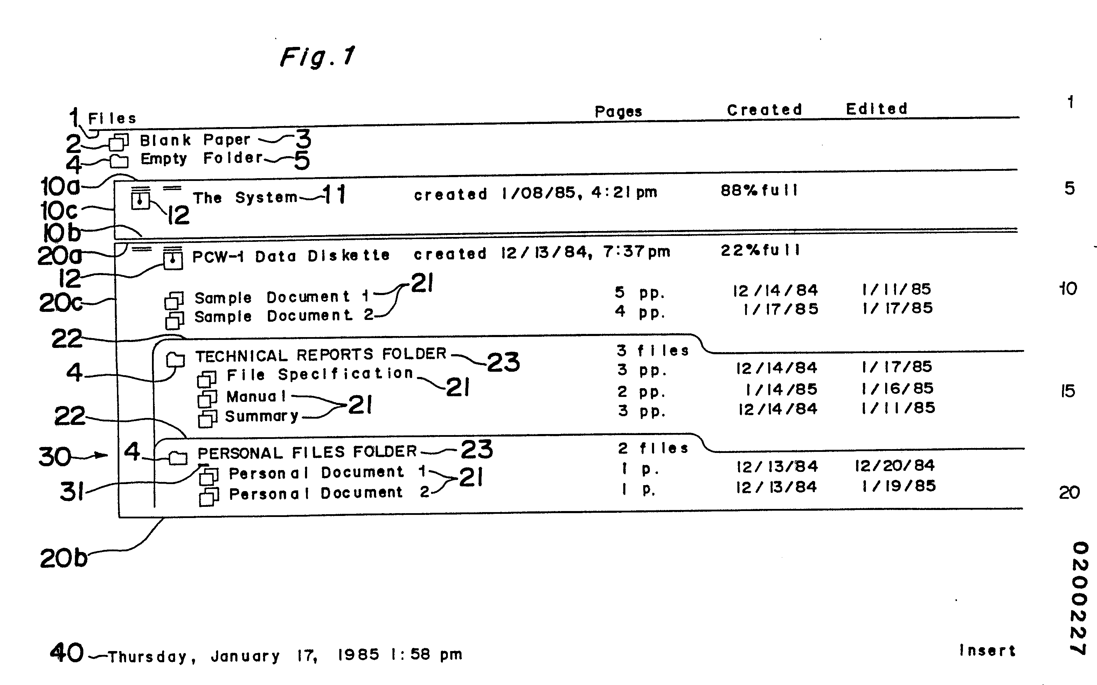

102. When the Files key 542 is depressed, a list of all data files (a files screen) is formulated, e.g. see Figure 1, from both disks inserted in the drive units, that is a compilation of all the files and operative modes of working with the files is displayed.

The user is not required to generate any commands to retrieve the documents for display but rather the present invention forces the user to interact with the system in response to being presented with the full content of both disks. This approach minimizes training since the system forces the user to respond and select an operation from the list of data displayed. Thus, a positive approach is utilized that leads the user by a full prompt display on the screen rather than requiring the user to enter preliminary commands.

When the Search key 543 is depressed, the name of a document or a folder specified is retrieved.

When the Calc key 544 is depressed, a desk-top calculator is displayed without destroying the contents then displayed on the CRT screen 102 and can be used as a desk-top calculator entirely independent of the word processor. At this time, the ten keys 540 are used as input keys.

Functions of the function keys 520 arranged on the keyboard 500 leftwards of the character keys 510 can be changed arbitrarily by a program to be loaded. In the case of the program for the word processor now under discussion, when,

-14a-

for example, a function key of #9 is depressed, the contents of a document composed on the CRT screen 102 are filed in the data diskette inserted in the floppy disk drive unit 302.

(d)   Document and Folder

Display of document names on the CRT screen 102 will now be described by way of an example wherein a tree structure is composed of such document names as shown in Fig. 6.

In this example, a diskette having a diskette name, PCW-1 Data Diskette, has seven documents stored therein (which documents bear respective document names, Sample Document 1, Sample Document 2, File Specification, Manual, Summary, Personal Document 1, and Personal Document 2). Means for dividing into a unit a group of documents comprising a plurality of documents to be bundled is herein referred to as a folder. In this example, the three documents, File Specification, Manual and Summary, belong to a folder named TECHNICAL REPORTS FOLDER, and the two documents (Personal Document 1 and Personal Document 2) belong to a folder named PERSONAL FILES FOLDER. In the tree structure, the independent documents, Sample Document 1 and Sample Document 2, lay in the same level as the two folders, TECHNICAL REPORTS FOLDER and PERSONAL FILES FOLDER.

A directory of diskettes stores data of the documents stored, so that they can be displayed in the form of a table. The data are stored in a unit (shown by one horizontal line) composed of columns for type, level, file name, title, number of contents, date of composition, date of renewal and others.

Where the type column is C, D and F, it means that a single line recording is carried out for each of the diskette, the document and the folder. The level column represents the level in the tree structure. The file name

- 16 -

column represents the name (file name) in the diskette for each document. The title column gives the name of the diskette, the name of the document and the name of the folder. The content number column is shown with the storage capacity (%) of the diskette being used and in the case of the document and the folder, the number of pages and the number of document stored are respectively shown. The date-of-composition column and the date-of-renewal column are shown with the date and the time, respectively, of composition of a directory file in the case of the diskette, and with the date and the current renewal date, respectively, of composition in the case of the document.

## Table 1

| Type | Level | File Name | Title | Content Nos. | Date of Composition | Date of Renewal |
|------|-------|-----------|-------|--------------|---------------------|-----------------|
| C | 0 | | PCW-1 Data Diskette | 22 | 12/13/84 | 7:37 pm |
| D | 1 | 1 U 041 AN | Sample Document 1 | 5 | 12/14/84 | 1/11/85 |
| D | 1 | 1 U 041 CE | Sample Document 2 | 4 | 1/17/85 | 1/17/85 |
| F | 1 | | TECHNICAL REPORTS FOLDER | 3 | | |
| D | 2 | 1 U 041 EO | File Specification | 3 | 12/14/84 | 1/17/85 |
| D | 2 | 1 U1 J 036 | Manual | 2 | 1/14/85 | 1/16/85 |
| D | 2 | 1 U 041 D5 | Summary | 3 | 12/14/84 | 1/11/85 |
| F | 1 | | PERSONAL FILES FOLDER | 2 | 12/13/84 | 12/20/84 |
| D | 2 | 1 UO J 2FG | Personal Document 1 | 1 | 12/13/84 | 12/20/84 |
| D | 2 | 1 UO J 2FI | Personal Document 2 | 1 | 12/13/84 | 1/19/85 |

- 17 -

(e)  Display of List of Documents (File Screen)

When the Files Key 542 is depressed, a list of document names and folder names (hereinafter referred to as a document list or files screen) can be displayed on the CRT screen 102 as shown in Fig. 1.

At the first line on the screen (the line number being shown at the rightmost part of Fig. 1 for better understanding), the name of the column (Files, Pages, Created and Edited) is displayed above the underline 1.  In the column of Files, the contents of the type column, the level column and the title column of the directory are displayed.  In each of the Pages column, the Created column and the Edited column, the contents of the content number column, the date-of-composition column and the date-of-renewal column are displayed.

At the second line both a ⌐⌐ symbol 2 and a name "Blank Paper" 3 are displayed.  The ⌐⌐ symbol 2 indicates that the name following the symbol is the name of a document. As will be described later, this document is used when a document having no content is to be composed.

At the third line, both a ⌐⌐ symbol 4 and a name "Empty Folder" 5 are displayed.  The ⌐⌐ symbol 4 indicates that the name following the symbol is the name of the folder. As will be described later, this folder is used when a folder having no content is to be composed.

At the fifth line separated from a line 10a at the fourth line, the name 11 of the system disk of the word processor system inserted in the left-hand disk drive unit 301, the date of composition, the hour of composition, and the percentage of the disk used are displayed. A ⊡ symbol 12 indicates that the name following this symbol is the name of the diskette. The display is separated by the line 10b (the seventh line) below a blank line. Lines 10a and 10b at the fourth and seventh lines are connected together by a vertical line 10c at the left side.

After another line 20a at the seventh line, each of the lines following the eighth line inclusive is used to display the contents corresponding to a respective line of the contents of the directory shown in Table 1. At the eighth line, and following the ⊡ symbol 12 at the right-hand position indicating the diskette (type C) inserted in the right-hand disk drive unit 302, the diskette name, the date of composition, the hour of composition and the percentage of the disk used are successively displayed. At the tenth and eleventh lines following a blank line, the document names 21, the number of pages, the dates of composition and the dates of renewal of the respective documents, Sample Document 1 and Sample Document 2 are displayed. A line 22 extending in the leftmost and central portions of the twelfth line and in the rightmost portion of the thirteenth line and further extending downwards from the leftmost portion of the twelfth line so as to depict a contour similar to the shape of an upper edge of an actually existing paper folder indicates that the information displayed below such line 22 is the contents of the folder. The thirteenth line displays both the folder name 23 (TECHNICAL REPORTS FOLDER) and the number of documents contained in this folder. From the fourteenth line to the sixteenth line, the document frames 21 (shown as rightwardly indented sequentially since the level is displaced one line below), the numbers of pages, the dates of composition, and the dates of renewal of the respective documents belonging to this folder are displayed.

Similarly, the presence between the seventh and eighteenth lines of a line 22 shaped so as to represent the contour of the upper edge of another actually existing paper folder indicates that the information therebelow represents the contents of the folder (the vertical components of the two lines 22 being connected together at the right-hand side). At the eighteenth line, both the folder name PERSONAL FILES FOLDER and the number of documents contained in this folder are displayed. At the nineteenth and twentieth line, the dates of composition and the dates of renewal of the respective documents belonging to this folder are displayed.

At the twenty-first line, a line 20b is displayed. This line 20b is connected at a left-hand portion with the

- 21 -

second line at the seventh line through a vertical line 20c to indicate that the display associated with all of the documents has been made.

A cursor position indicator 30 represented by a marking ▶ shown at the leftmost margin indicates the line at which the cursor 31 is located. The last line (a prompt line) 40 of the screen provides a display of advice made to the operator.

Since, as hereinabove described, the files screen is associated with the type of the directory, the level, the title, the number of contents, the date of composition and the date of renewal, the contents of the directory files can be renewed by editing on the screen in a manner which will now be described. It is, however, to be noted that, where all cannot be displayed on the same screen because of too many documents, they can be displayed when they are scrolled up and down by operating the cursor keys 531.

(f)  Document Editing Flow for Document Control

The document editing (the opening and closing of the folder, the preparation of an empty folder, the copying of a document, the copying of a folder, the movement of a document, the movement of a folder, the deletion of the folder, the arrangement of documents within a folder, the retrieval of the document or the folder, and others) to be done by the use of a list of documents (Fig. 1) in the diskette displayed on the screen will now be described.

- 22 -

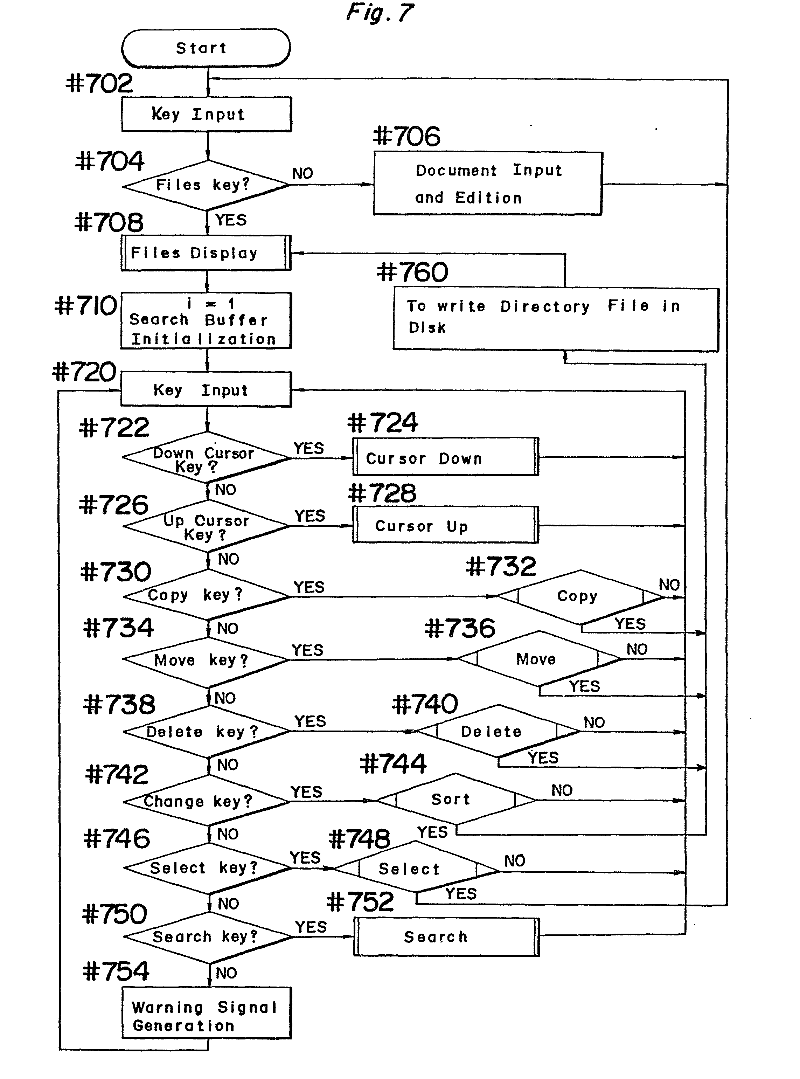

At this mode, a flowchart (shown in Fig. 7) of a program about the files edition stored in the RAM/ROM memory 202 will be described.

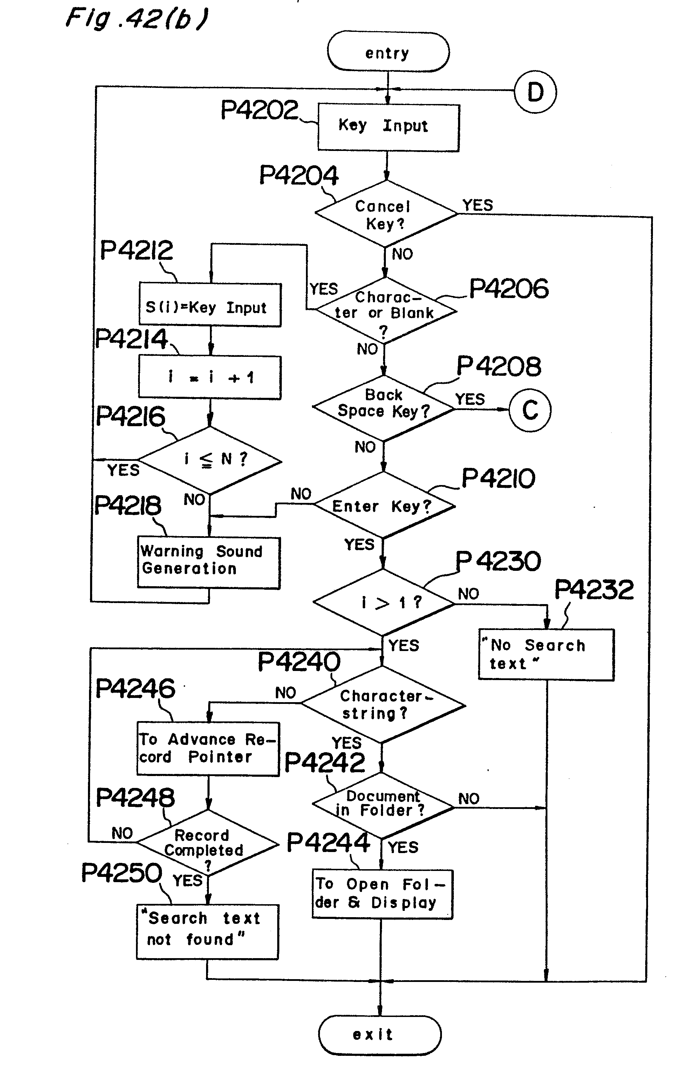

When a key input is fed at step #702, a decision is made at step #704 to determine whether or not the Files key 542 has been depressed. If the Files key 542 has not been depressed, a subroutine for the document input and edition is initialed at step #706 and, thereafter, step #702 is resumed. On the other hand, if the Files key 542 has been depressed, the list of the documents (Files screen) is displayed at step #708. (See section (g)). Then, a search buffer index i is rendered to be 1 and, after a search buffer has been initialized at step #710, a key input is awaited at step #720. It is to be noted that the search buffer S and the search buffer index i are used in Fig. 42.

When the key input has been made at step #710, a decision is made to determine the nature of the key input. At the outset, it is determined at step #722 whether or not a Down Cursor key 531a has been depressed. If the key 531a has been depressed, a subroutine for Cursor Down (see section (h)) is executed at step #724 and then a key input is again awaited at step #720. If, however, the key 531a has not been depressed, another decision is made at step #726 to determine if an Up Cursor key 531b has been depressed. If it has been depressed, a subroutine for Cursor Up (see section (g)) is executed at step #728 and then a key input is again awaited at step #720. On the other hand, if the Up Cursor key 513b has not been depressed, a decision is made at step #730 to determined if the Copy key 535 has been depressed. Should the key 535 be found to have been depressed, a subroutine for Copy (see section (k)) is executed at step #732, a result of which is written in the directory file of the disk at step #760 and is then displayed on the screen at step #708. It is, however, to be noted that, in the event of the occurrence of an input from a Cancel key during the execution of the copying subroutine, the key input is again awaited at step #720. If the Copy key 535 has not been depressed, a decision is made at step #734 to determine if the Move key 534 has been depressed. If it has been found to be the Move key 534, a subroutine for Move is executed at step #736, the result of which is written in the directory file of the disk at step #760 and is then displayed on the screen at step #708. It is, however, to be noted that, when the Cancel key is depressed during the execution of the Move subroutine, a key input is again awaited at step #720. If it has not been depressed, a decision is made at step #738 to determine if the Delete key 533 has been depressed. If the result of the decision is "YES", a subroutine for Delete (see section (m)) is executed at step #740, the result of which is written in the directory file of the disk at step #760 and is then displayed on the screen at step #708. It is, however, to be noted that, when the Cancel key is depressed during the execution of the Delete subroutine, a key input is again awaited at step #720. If the result of the decision indicates "NO", a further decision is made at step #742 to determine if the Change key 532 has been depressed. If the result of the decision indicates "YES", a subroutine for Sort (see section (n)) is executed at step #744, written in the directory file of the disk at step #760, and finally displayed on the screen at step #708. However, if the Cancel key is depressed during the execution of the Sort subroutine, a key input is again awaited at step #720. On the other hand, if the result of the decision indicates "NO", a decision is made at step #746 to determine if the Select key 537 has been depressed. If it has been depressed, a subroutine for Select (see section (ℓ)) is executed at step #748 and the program flow returns to the key input at step #702. If, however, the Cancel key is depressed during the execution of the Select subroutine, a key input is again awaited at step #720. If the result of the decision indicates "NO", a decision is made at step #750 to determine whether or not the Search key 543 has been depressed. If it is, a subroutine for Search (see section (o)) is executed at step #752 and a key input is then awaited at step #720. If it is not, it means that a wrong key has been erroneously depressed, and accordingly, a warning sound (beep) is generated at step #754 and a key input is again awaited at step #720.

- 25 -

(g)  Display of List of Document Names

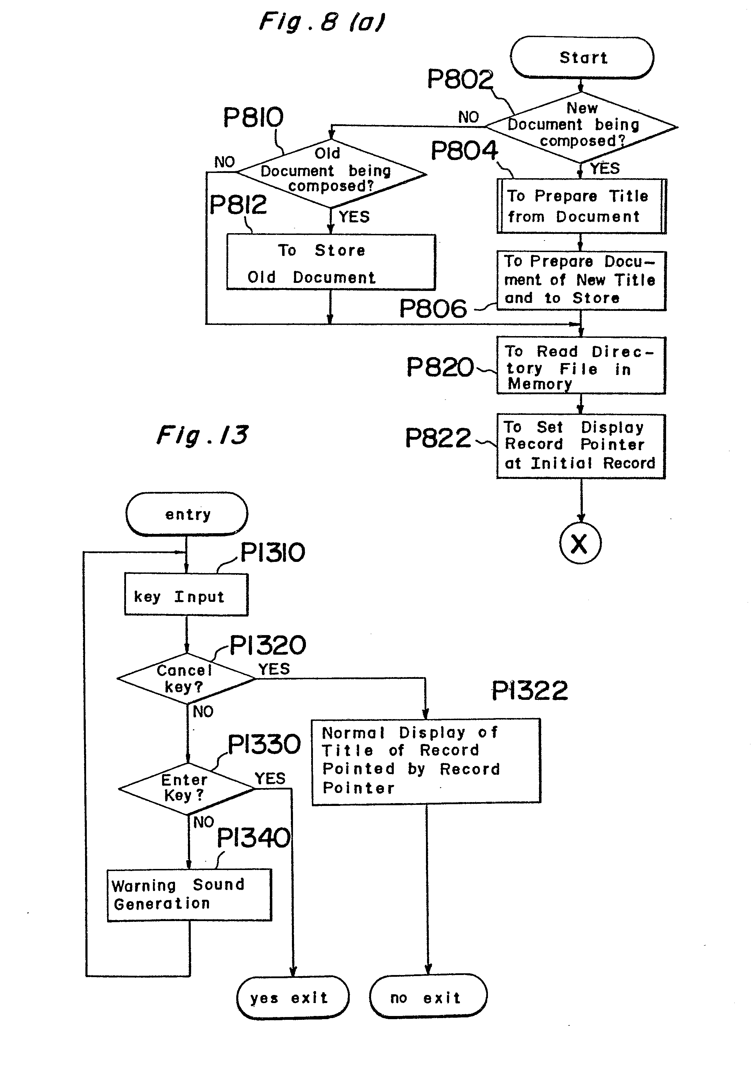

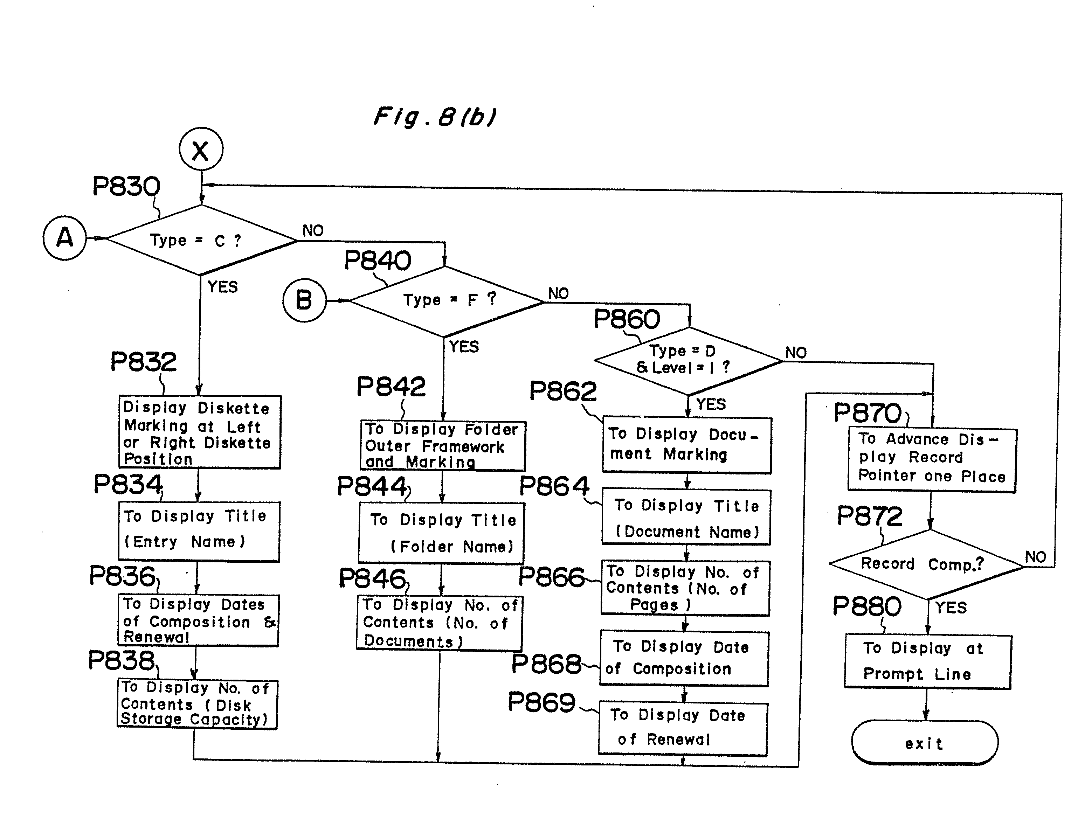

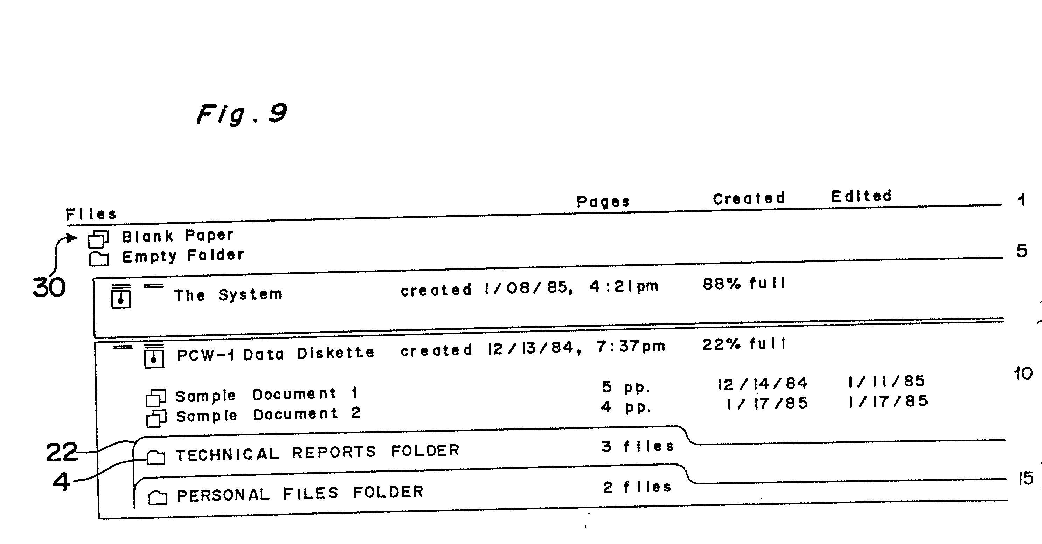

The display of a list of document names which takes place at step #708 shown in Fig. 7 when the Files key 542 has been depressed is carried out according to a flowchart shown in Fig. 8, composed of Figs. 8(a) and 8(b).  The display on the screen of the directory of the table is shown in Fig. 9 (wherein line numbers are shown at the rightmost margin for the purpose of quick reference).

At step P802, a decision is made to determine whether or not a new document is being composed.  If it is, the title is prepared at step P804 from this document (which will not be herein described) and, after the storage at step P806 of the composition of the document of the new title, the program proceeds to step P820.  If it is not, a decision is made at step P810 to determine whether or not an old document is being composed.  If it is being composed, the old document is stored at step P812.

Subsequently, the directory file is read in the memory at step P820.  After the display of the column names and others (the first line to the seventh line in Fig. 9), a display record pointer is placed at a position of the initial record of the directory at step P822.

Different decisions are successively performed at steps P830, P840 and P860 to determine whether or not the type of the record indicated by the pointer is C, whether or not it is F, and whether or not it is D and the level is 1, respectively.

In the event that the type is C, a disk marking corresponding to one of the left-hand and right-hand disk positions, the title (name of entry), the date of composition, and the storage capacity of the disk are successively displayed at respective steps P832, P834, P836 and P838 (see the eighth line in Fig. 9).

In the event that the type is F, both the outer framework 11 of the folder and a folder marking 2 are displayed at step P842, and the name of the folder and the number of documents included in the folder are successively displayed at respective steps P844 and P846 (see the twelfth line to the thirteenth line in Fig. 9), followed by step P870.

In the even that the type is D and the level is 1, the document marking, the document name, the number of pages, the date of composition and the date of renewal are successively displayed at respective steps P862, P864, P866, P868 and P869 (see the tenth line in Fig. 9).

Then the display record pointer is advanced one place at step P870, followed by a decision at step P872 to determine whether or not the record has been completed. Should the record have been completed, the hour is displayed on the prompt line at step P880, followed by the return. On the other hand, in the event that the record has not been completed, step P830 is again resumed to continue the display. From the directory file shown in the foregoing table, the display of the diskette and the display of both the folder and the document wherein the level is 1 are carried out as shown in Fig. 9. In this case, the folder is closed. In other words, no document name within the folder is displayed (refer to section (j) as to the display of the documents within the folder).

(h) Movement of the Cursor Position Indicator

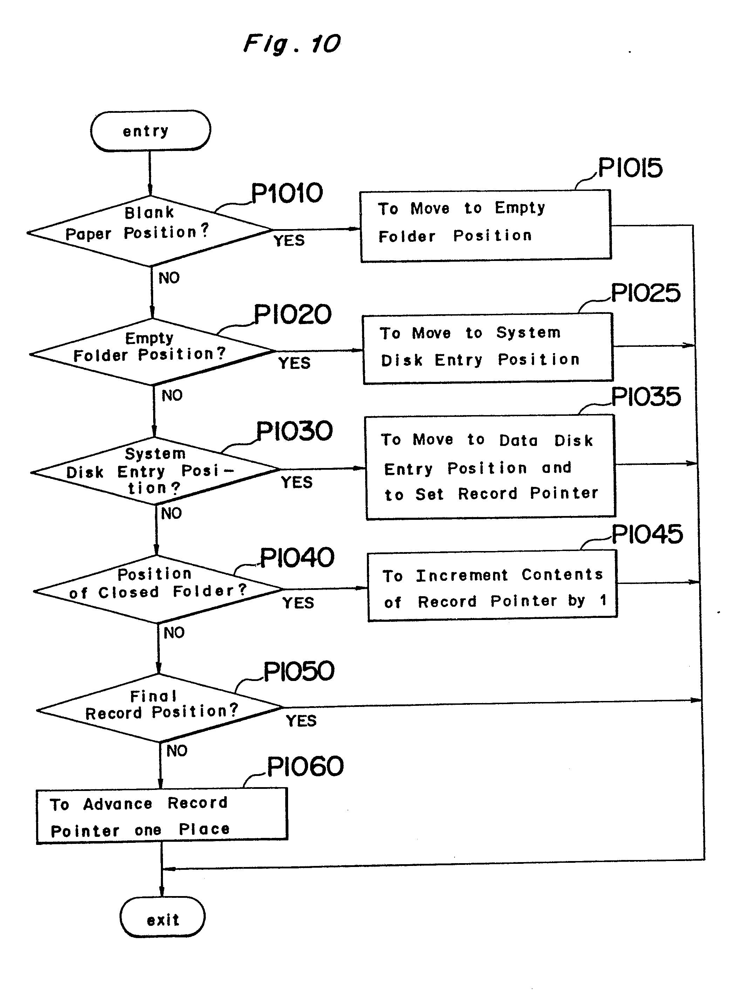

The subroutine for moving the cursor position indicator 30 downwards (step #724 in Fig. 7) is executed according to a flowchart shown in Fig. 10.

When the Cursor Down key 531a is depressed, and when it is indicated at step P1010 that the cursor position indicator 30 is located at a Blank Paper position, it is moved to an Empty Folder position. If it is determined at step P1020 that it is located at the Empty Folder position, it is moved to a System Disk Entry position at step P1025. If it is determined at step P1030 that it is located at a System Disk Entry Position, it is moved to a Data Disk Entry position and the record pointer is replaced at the initial position at step P1035. If it is determined at step P1040 that it is located at a position of the closed folder, the contents of the record point are incremented by 1 at step P1045. If it is determined that it is located at the final record position, it is not moved. If it is not located at any one of the foregoing positions, the display record pointer is advanced one place at step P1060.

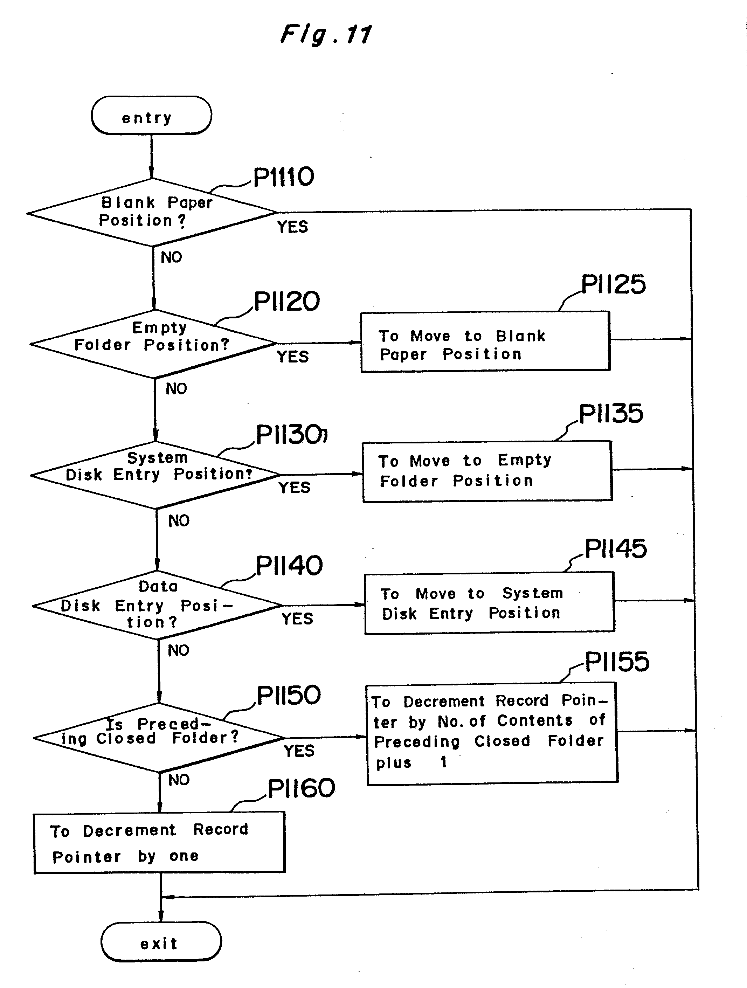

A Cursor Up subroutine to be performed when the Cursor Up key 531b for moving the cursor 31 upwards is depressed is executed according to a flowchart of Fig. 11.

When at step P1110 it is determined that the cursor position indicator 30 is located at the Blank Paper position, no movement is allowed. However, when at step P1120 it is determined that the indicator 30 is located at the Empty Folder position, it is moved to the Blank Paper position at step P1125. When at step P1130 it is determined that the indicator 30 is located at the System Disk Entry position, it is moved to the Empty Folder position at step P1135. When at step P1140 it is determined that it is located at the Data Disk Entry position, it is moved to the System Disk Entry position at step P1145. When at step P1150 it is determined that the indicator 30 is located one place below the closed folder, the record pointer is decremented by the number of contents of the closed folder plus one. If it is determined that the indicator 30 is not located at any one of the foregoing positions, the record pointer is decremented by one at step P1160.

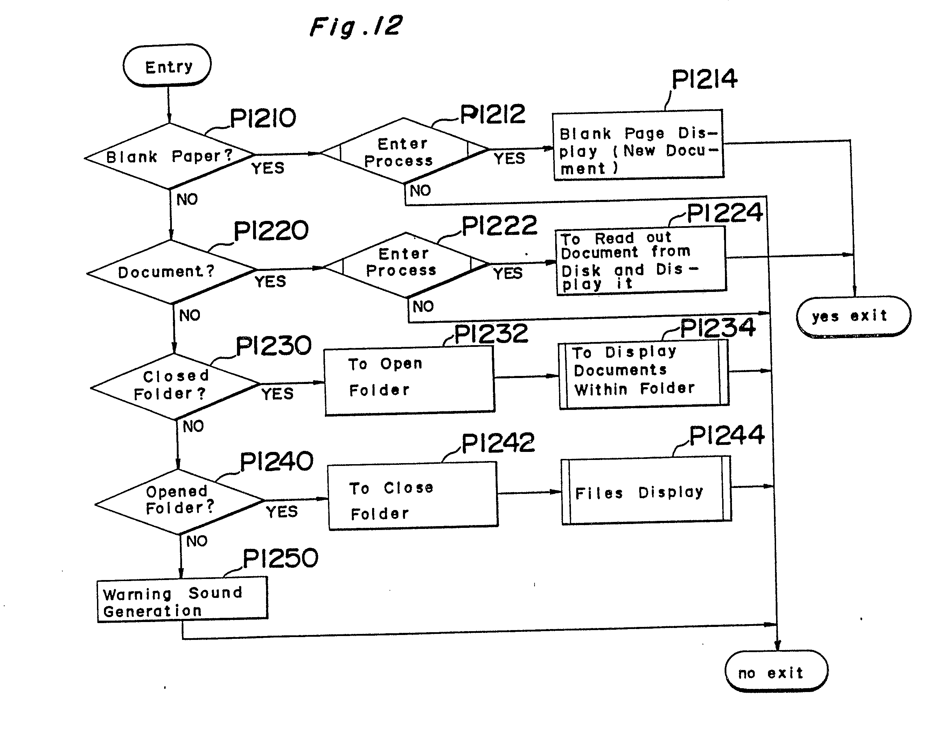

(i)  Display of Documents When the Select key 537 is depressed (step #746 in Fig. 7), the display of the files screen and the opening and closing of the folder are enabled as shown by a flowchart of Fig. 12.

When the cursor position indicator 30 is located at the Blank Paper position (see step P1210) at the time the Select key 537 has been depressed, and when the Enter key 545 is subsequently depressed (see step P1212), a blank document (blank page) is displayed at step P1214 on the screen and the next key input is awaited (step #702 in Fig. 7).

When the position indicator 30 is located at a document position, and the Enter key 545 is subsequently depressed at step P1222, a document specified by the cursor 31 is read out from the disk and then displayed on the screen at step P1224, and the next key input is awaited (step #702 in Fig. 7).

When the indicator 30 is located at a closed folder position at step P1230, as will be described later, the folder is opened at step P1232, the documents in the folder are displayed at step P1234, and the next key input is awaited (step #720 in Fig. 7).

When the indicator 30 is located at an opened folder position at step P1240, the folder is closed at step P1242, the documents explained under section (g) are displayed at step P1244, and the next key input is awaited (step #720 in Fig. 7).

- 30 -

If the indicator 30 is not located at any one of the foregoing positions, and when the Select key 537 is depressed, a warning sound is generated at step P1250 and the next key input is awaited (step #720 in Fig. 7).

Processes which take place at respective steps P1212 and P1222 when the Enter key 545 is depressed are performed according to a flowchart shown in Fig. 13. A key input subsequent to the depression of the Select key 537 takes place at step P1310. If the key which has been depressed is found to be the Cancel key 536 at step P1320, the title of the record pointed by the document record pointer is returned to a normal display at step P1322. If the Enter key 545 has been depressed, the next succeeding step takes place. If it is not any one of the above mentioned keys, a warning sound is generated at step P1340 and a key input is awaited at step P1310.

(j) Opening and Closing of Folder

The opening and closing of the folder (steps P1230 to P1244 in Fig. 12) referred to under the Select process (section (h)) will be described in detail.

The folder once closed can be opened in the following manner.

Referring to the main flow shown in Fig. 7, if it is determined at step #704 that the key input at step #702 is the Files key 542, both the closed file and an independent document (level = 1) can be displayed on the screen at step #708.

The opening of the closed folder can be accomplished by manipulating the Cursor Down key 531a and the Cursor Up key 531b at respective steps #722 and #726, moving the cursor position indicator 30 to a position of the folder to be opened, and finally depressing the Select key 537 at step #746. By way of example, when the closed folders TECHNICAL REPORTS FOLDER and PERSONAL FILES FOLDER as shown in Fig. 9 are opened, the result will be such as shown in Fig. 1 and the document name within the folder is displayed.

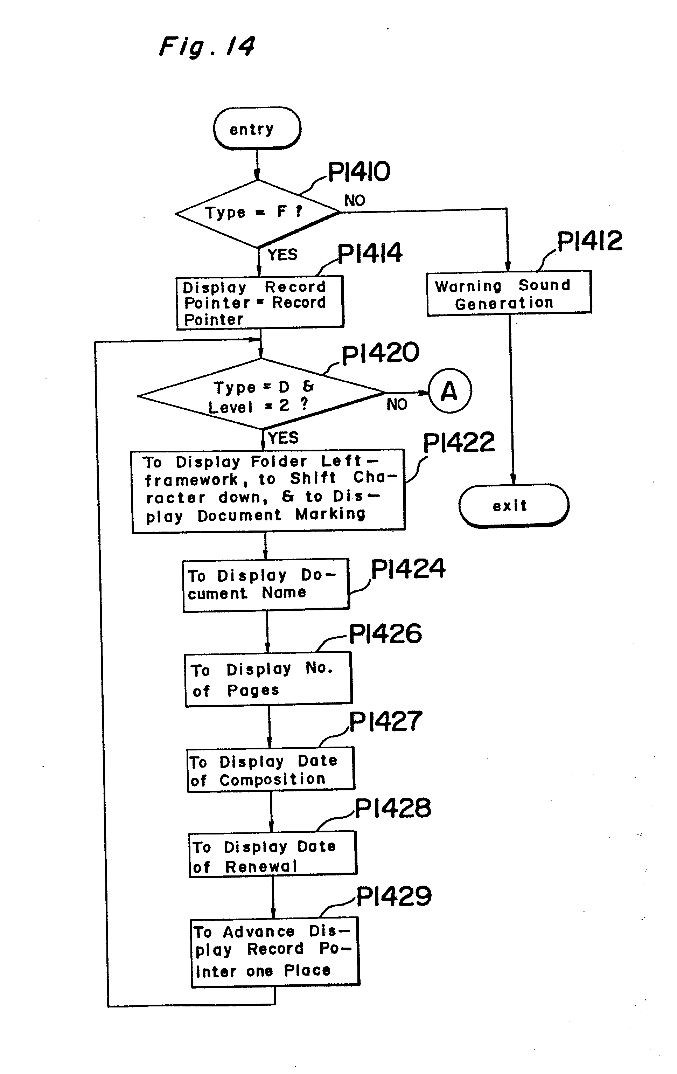

A process for displaying the document within the folder which takes place at step P1234 is carried out according to a flowchart shown in Fig. 14. At the outset, it is determined at step P1414 whether or not the type of record corresponding to the position of the cursor at the time the Select key 537 has been depressed is F (Folder). If it is not a folder, a warning sound is generated at step P1412 and the process terminates. If it is a folder, the value of the record pointer is rendered at step P1414 to be a value of a display record pointer.

Subsequently, a decision is made at step P1420 whether or not the record type is D and the level is 2, that is, whether or not it is a document within the folder. If it is a document within the folder, the left-hand framework of the folder is displayed, a character is shifted down and

- 32 -

the document marking is displayed at step P1422. Then, the document name, the number of pages, the date of composition and the date of renewal are sequentially displayed at respective steps P1424, P1426, P1427, and P1428. The displayed record pointer is then advanced one place at step P1429, with the process returning to step P1420 in readiness for the next record processing. Up until all of the documents within the folder are displayed, a process from step P1420 to step P1429 is repeated. If the decision at step P1420 indicates that it is not a document within the folder, the process returns to step P830 and the following records are displayed.

The folder once opened can be closed in the following manner. The cursor moving keys 531 are manipulated at steps #722 and #726 to move the cursor 31 to a position of the folder to be closed, and when the Select key 537 is subsequently depressed at step #746, and after the value of the display record pointer has been rendered equal to the value of the record pointer (P1242), a flow for the screen display is performed from B of Fig. 8 and only the folder and the independent document are displayed on the screen.

(k)  Preparation of Blank Document and Blank Folder
    Copying of Document and Folder

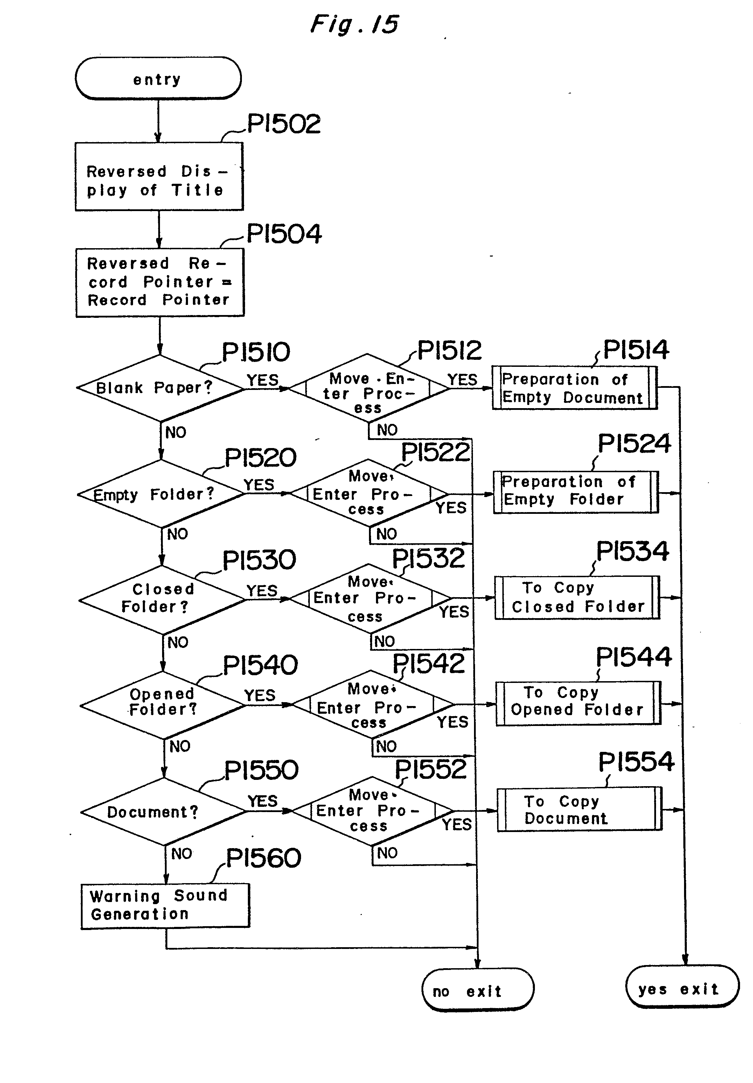

During the copying process (step #732) in the main flow of Fig. 7, the preparation of a blank document and a blank folder, and the copying of the document and the opened

- 33 -

and closed folders take place, according to a flowchart shown in Fig. 15.

By depressing the Files keys 542 at step #704, displaying the files screen (Fig. 9, Fig. 1 and other) at step #708, manipulating the cursor moving keys 531 at steps #722 and #726 to move the cursor 31 to a position of the record to be handled and depressing the Copy key 535 at step #730, the copying process is performed. At the outset, the record title pointed by the record pointer is displayed at step P1502 in the form as reversed, and the value of the reversed record pointer is then rendered equal to the value of the record point at step P1504. Also, an indication reading "Copy where? Point where file is to go and press ENTER. Press CANCEL to quit." is displayed at the prompt line in the form as reversed.

Then, when the position of the cursor 31 at the time of depression of the Copy key 535 is determined to be Blank Paper at step P1510, and when the cursor is moved to the next position and the Enter key 545 is subsequently depressed at step P1512, a blank document can be prepared at that position at step P1514 (see section <k-2>).

If the position of the cursor 31 at the time of the depression of the Copy key 535 is determined at step P1520 to be Empty Folder, and when the cursor 31 is moved and the Enter key 545 is subsequently depressed at step

- 34 -

P1522, a blank folder is prepared at that position at step P1524 (see section <k-4>).

If the position of the cursor 31 at the time of the depression of the Copy key 535 is determined at step P1530 to be a closed folder, and when the Enter key 545 is depressed at step P1532 after the cursor 31 has been moved to a different position, the closed folder is copied at that position at step P1534 (see section <k-4>).

If the position of the cursor 31 at the time of the depression of the Copy key 535 is determined at step P1540 to be an opened folder, and when the Enter key 545 is depressed at step P1542 after the cursor 31 has been moved to a different position, the opened folder is copied at that position at step P1544 (see section <k-4>).

If the position of the cursor 31 at the time of the depression of the Copy key 535 is determined at step P1550 to be a document, the document is copied at step P1552 at the position at which the Enter key 545 is depressed at step P1552 after the cursor 31 has been moved to a different position (see section <k-3>).

When the Copy key 535 is depressed while the cursor 31 is located at a position other than the above mentioned positions, a warning sound is generated at step P1560 and the program flow for Copy terminates while the next succeeding key input is awaited.

- 35 -

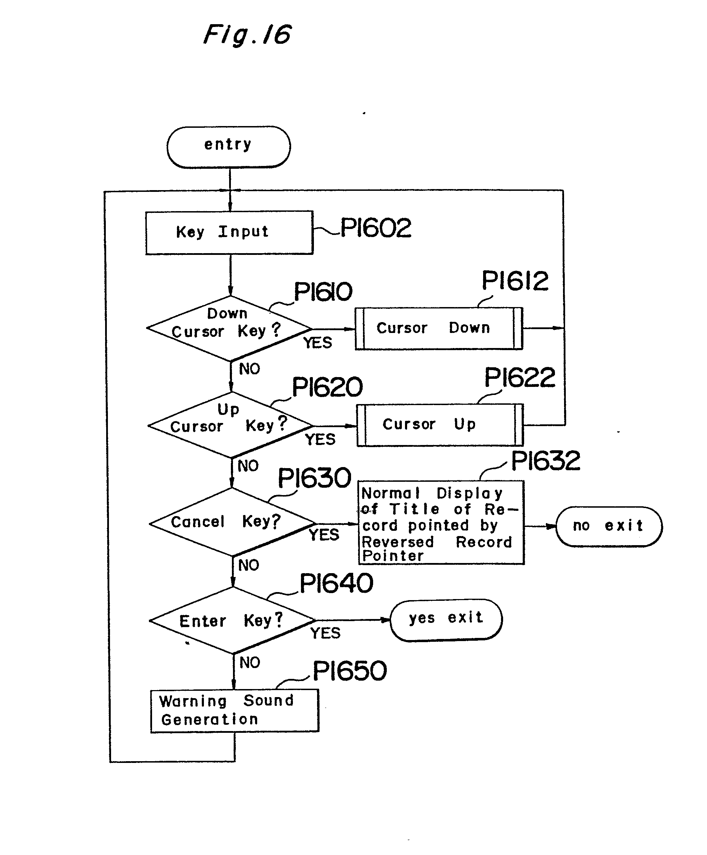

A Move·Enter process (step P1512 and others) wherein after the cursor 31 used during the copying manipulation has been moved, the Enter key is depressed, is carried out according to a flowchart shown in Fig. 16. When a key input occurs at step P1602 subsequent to the depression of the Copy key 535, a decision is made at step P1610 to determine whether or not the key then depressed is the Cursor Down key 531a. If it is determined that the key 531a has been depressed, the Cursor Down subroutine described with reference to Fig. 10 is executed at step P1612 and the next succeeding key input is awaited at step p1602. Thereafter, another decision is made at step P1620 to determined whether or not it is the Cursor Up key 531b. If it is, the Cursor Up subroutine described with reference to Fig. 11 is executed at step P1622 and the next succeeding key input is awaited at step P1602. In this way, the cursor 31 is moved to the position at which a copy is to be made, by the use of the cursor moving keys 531.

Thereafter, a decision is made at step P1630 to determine if it is the Cancel key 536. If it is, the title of the record pointed by the reversed pointer is returned at step P1632 to an ordinary display, and this flow is terminated in readiness for the next succeeding key input.

Another decision is also made at step P1640 to determine if it is the Enter key 545. If it is, a subroutine for the next succeeding copying is resumed to effect the copying (see Fig. 15).

If it is not any one of the above mentioned keys, a warning sound is generated at step P1650 and the key input is again awaited at step P1612.

<k-1> Preparation of Empty Folder

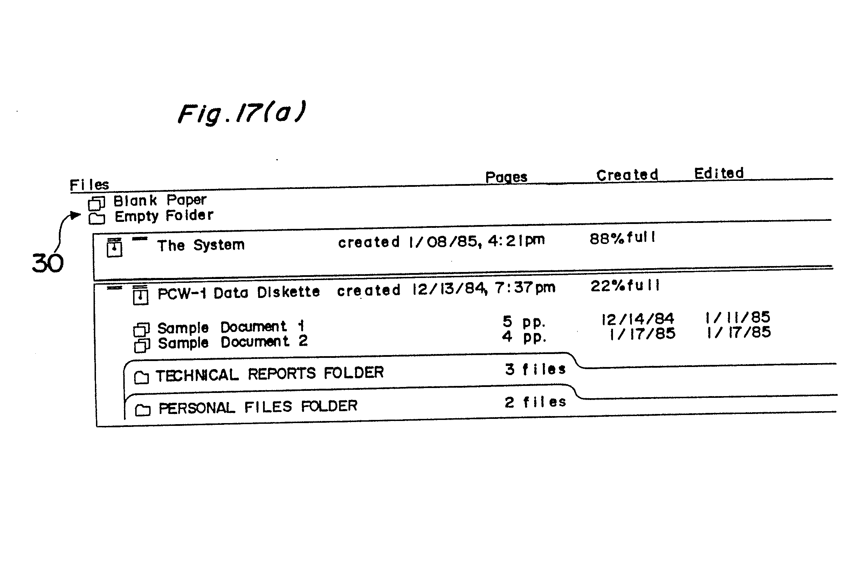

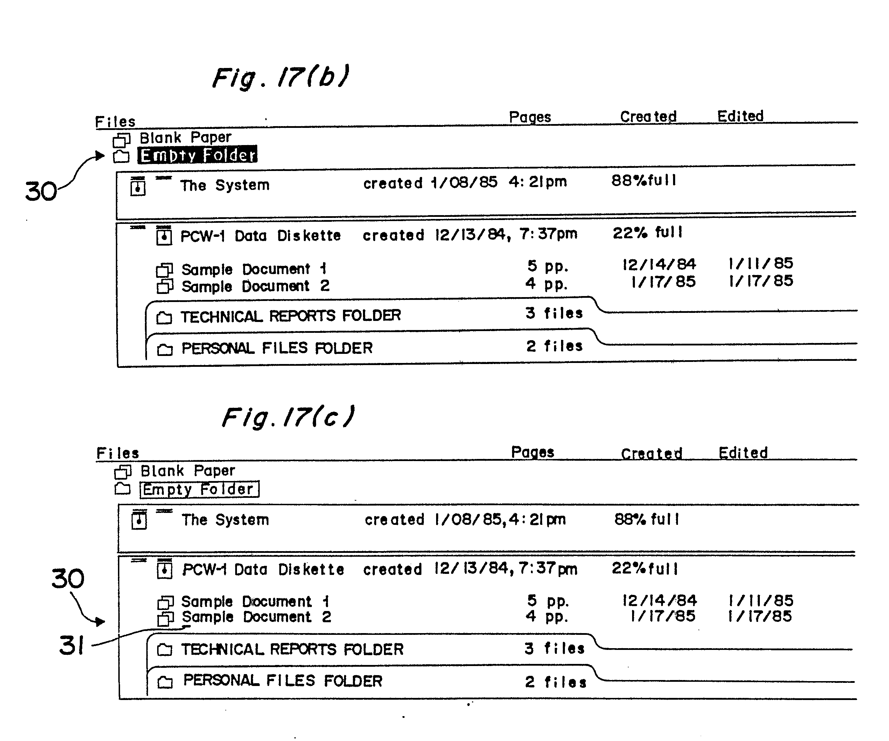

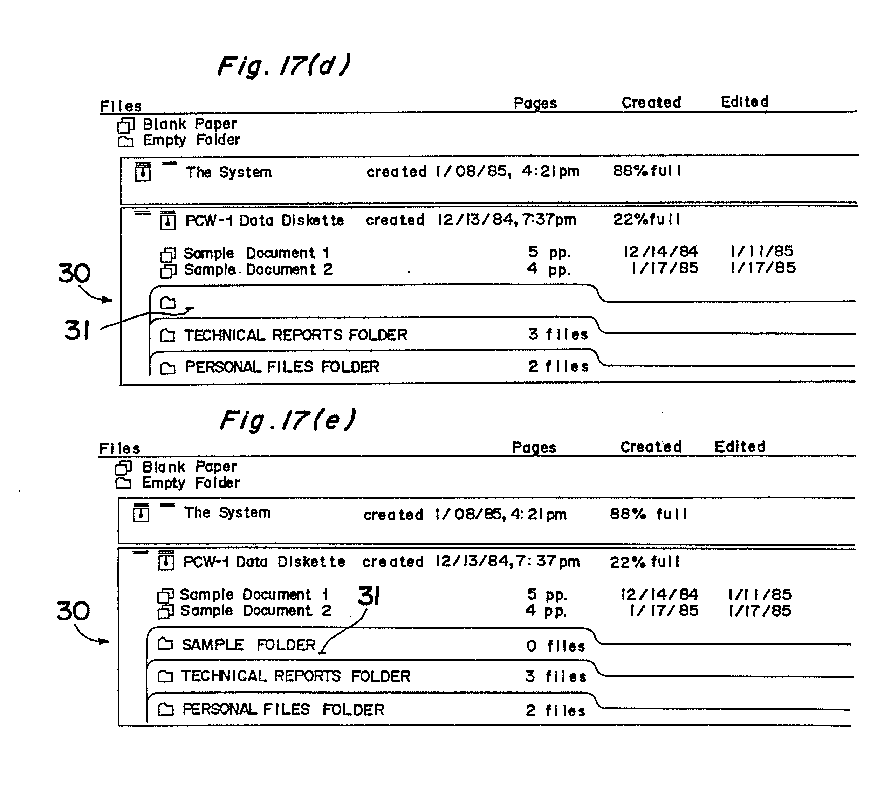

The blank folder can be prepared by the following procedure. In the files screen (such as shown, for example, in Fig. 9), the cursor 31 is moved up and down by the manipulation of the cursor moving keys 531 to move it to a position of Empty Folder, and the Copy key 535 is then depressed. In this way, as shown in Fig. 17(b), "Empty Folder" is displayed at step P1502 on the screen in the form as reversed (It is to be noted that, for the sake of brevity, any display which occurs on the screen in the form as reversed is shown by a rectangular box enclosing a legend in the drawings except for Fig. 17(b).) and a direction (not shown) is also displayed at the prompt line in the form as reversed. Subsequently, as shown in Fig. 17(c), the cursor 31 is moved to a position where the empty folder is desired to be prepared. When the Enter key 545 is then depressed at step P1522, the empty folder is prepared one line below such position at step P1524 as shown in Fig. 17(d). Thereafter, as shown in Fig. 17(e), the folder name is keyed in from the keyboard 500.

- 37 -

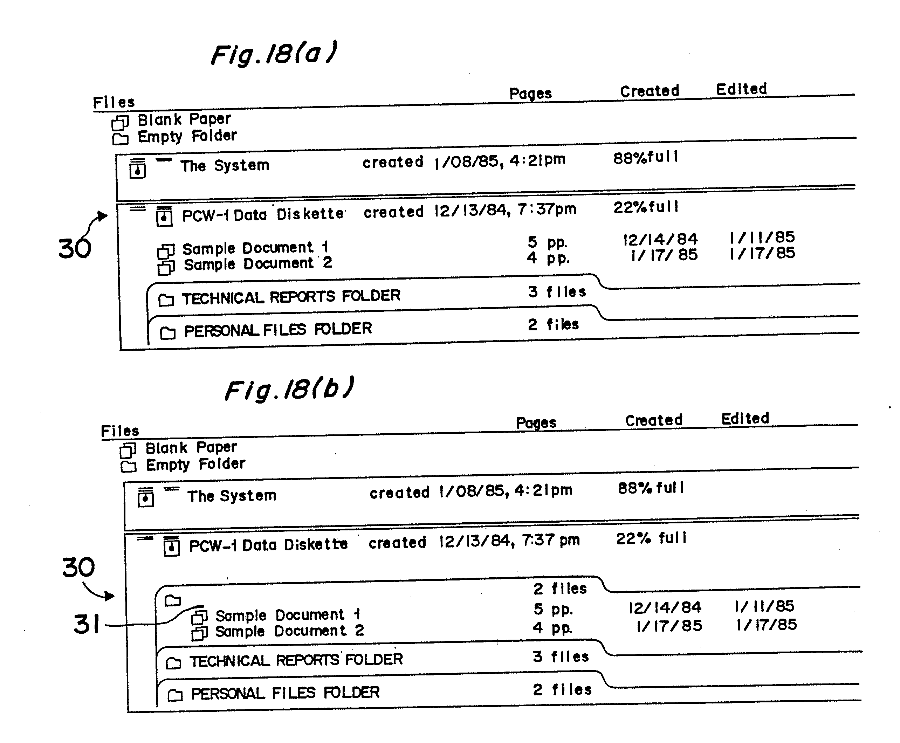

Where a document exists below the position at which the empty folder is to be prepared (for example, as shown in Fig. 18(a)), this document is included within a new folder (Fig. 18(b)).

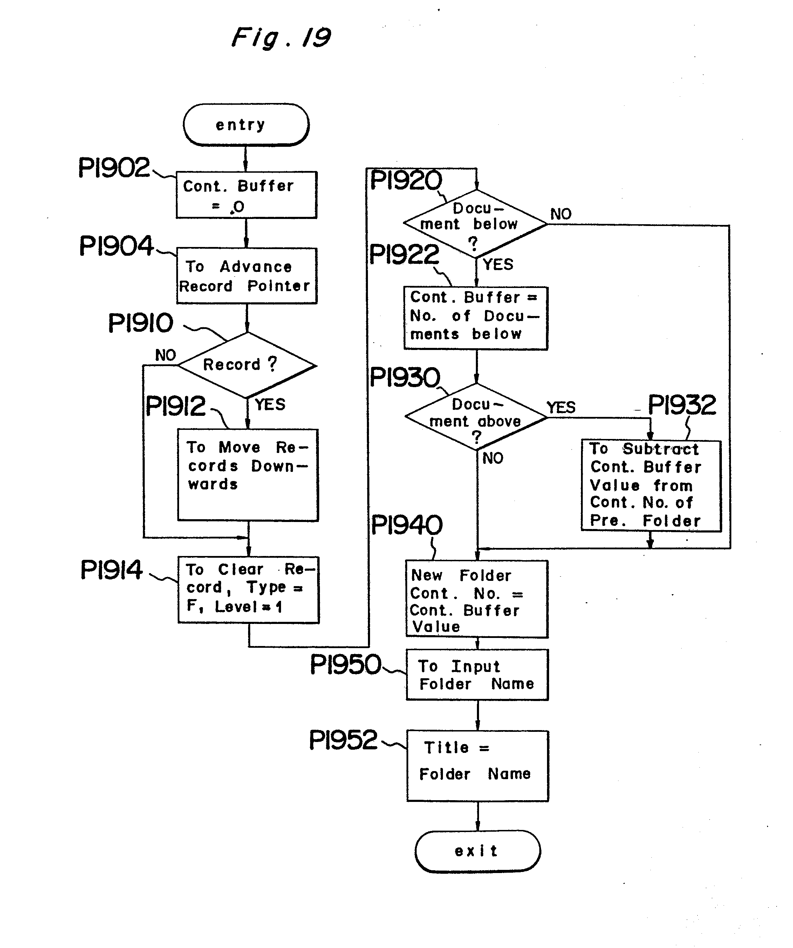

The preparation of the empty folder (step P1524) is carried out according to a flowchart shown in Fig. 19. At the beginning, a buffer for the number of contents is zeroed at step P1902, and the record pointer is advanced one place at step P1904. Then, a decision is made at step P1910 to determine if the record pointed by the record pointer exists. If it exists, all of the records from such record to the last record are downwardly shifted a distance corresponding to each record at step P1912. If it does not exist, the next succeeding step is assumed.

Thereafter, the record pointed out by the record pointer is erased, the type is rendered to be F, and the level is set to 1 at step P1914.

A decision is then made at step P1920 to determine whether or not any document exists below and between the next folders. If it exists, the number of the documents below is inputed to the buffer for the number of contents at step P1911. Subsequently, a decision is made at step P1930 to determined whether or not any folder exists above. If it exists, the number of contents of the proceding folder is subtracted by the value of the buffer for the number of contents at step P1932. Then, the number of contents of a new folder is rendered to be the value of the buffer for the number of contents at step p1940. In this way, the empty folder is displayed on the screen. It is, however, to be noted that, if it is found at step P1920 that no document exists below, step P1940 is resumed.

Figs. 17(a) to 17(e) illustrate an example wherein the empty file is prepared on the screen at a location preceding TECHNICAL REPORTS FOLDER. In this example, since no document exists therebelow and preceding the next succeeding folder, the number of documents accommodated in this folder is zero.

Figs. 18(a) and 18(b) illustrate an example wherein the empty folder is prepared at the location of SAMPLE DOCUMENT 1. In this example, two documents, SAMPLE DOCUMENT 1 and SAMPLE DOCUMENT 2, are included in this empty folder.

When the folder name (for example, SAMPLE FOLDER) composed of characters within the framework of 33 characters is keyed in at step P1950 by manipulating character keys 510, the folder name so inputed is inputed into the title of the folder and displayed on the screen at step P1952.

After the above described manipulation, a new content is written in the directory file of the disk at step #760.

- 39 -

<i-2>  Preparation of Empty Document

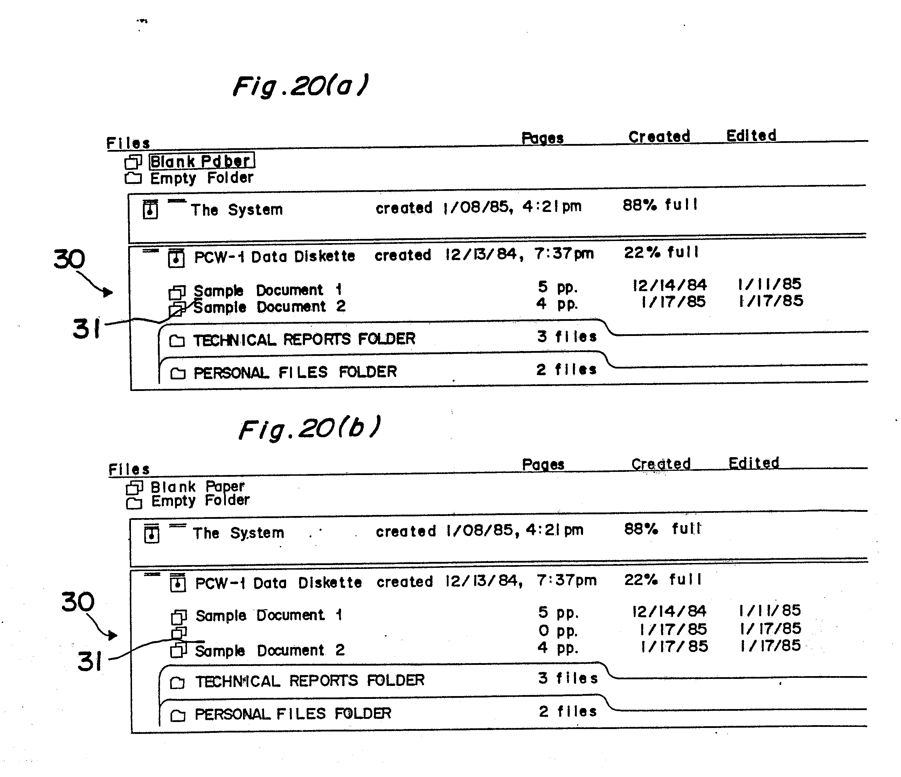

The empty document can be prepared in the following manner.  In the files screen (for example, as shown in Fig. 9), the cursor 31 is moved up and down by manipulating the cursor moving keys 531 to move it to a position of Blank Paper, and the Copy key 535 is then depressed. In this way, as shown in Fig. 20(a), "Blank Paper" is displayed (see step P1502 in Fig. 15) in the form as reversed and a direction (not shown) is also displayed at the prompt line in the form as reversed.  Thereafter, the cursor 31 is moved to a position where the empty document is desired to be prepared. The subsequent depression of the Enter key 545 at step P1512 results in the preparation, at step P1514, of the empty document at a location one line therebelow as shown in Fig. 20(b).

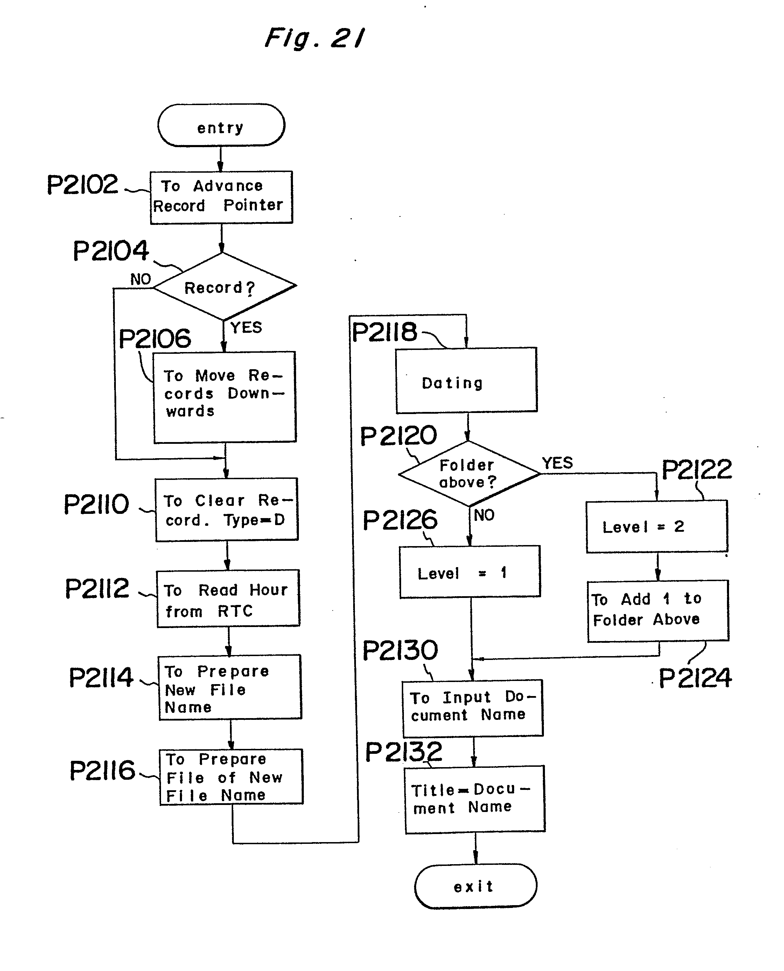

The preparation of the empty document at step P1514 is carried out according to a flowchart shown in Fig. 21.  At the beginning, the record pointer is advanced one place at step P2102, and a decision is then made at step P2104 to determine whether or not there exists the record pointed by the record pointer.  If it exists, all of the records from such record to the last record are downwardly shifted a distance corresponding to each record at step P2106.  If it does not exist, the next succeeding step is resumed.

Thereafter, the record pointed by the record pointer is erased and the type is rendered to be D at step P2110. Then, the read-out of the date from RTC 218 at step P2112, the preparation of a new file name corresponding to the date, the naming of the file at step P2114, the preparation of a file of the new file name at step P2116, and the dating as at step P2118 of the date of preparation of both the date of composition and the date of renewal are successively and sequentially performed.

Thereafter, a decision is made at step P2120 to determine whether or not there exists a folder thereabove. If it exists, the level is rendered to be 2 at step P2112, the number of contents of the folder thereabove is incremented by 1 at step P2124, and the empty document so prepared is included within this folder. If it does not exist, the level is rendered to be 1 at step P2126, thereby rendering it to be an independent document.

Thereafter, by manipulating character keys 510, the document name is keyed in at step P2130, and the document name so inputed is displayed at step P2132 on the screen as a title.

Figs. 20(a) and 20(b) illustrate an example wherein, in the files screen shown in Fig. 1, the empty document is prepared at a position of Sample Document 1 by depressing the Enter key 545.

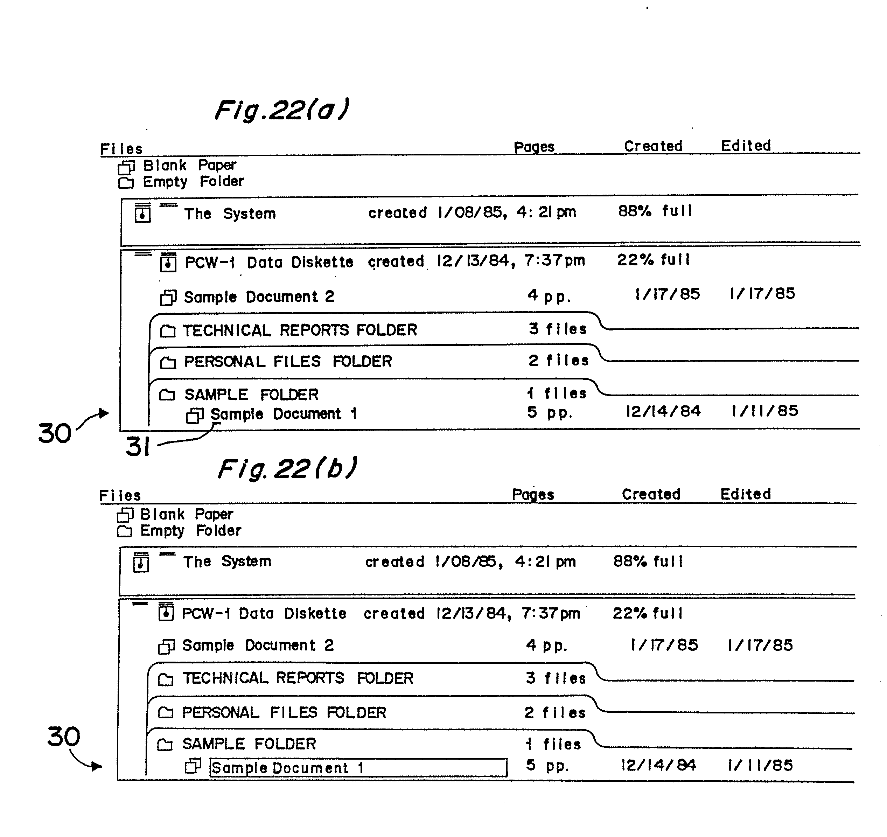

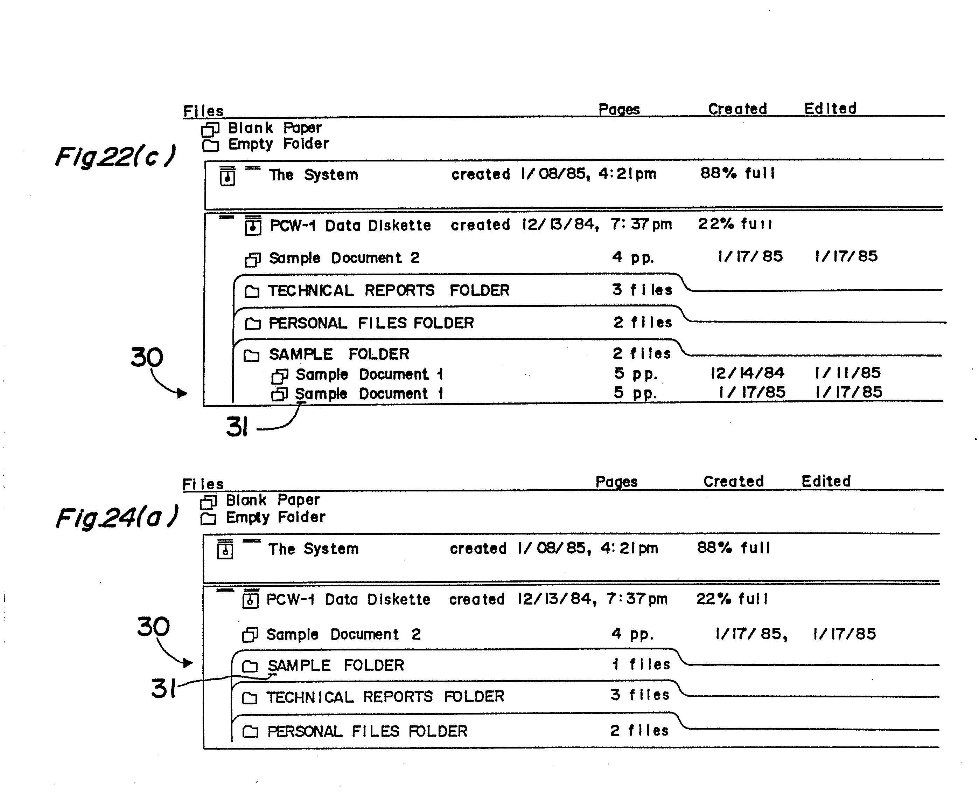

<k-3> Copying of Document The document can be copied in the following procedure. In the files screen, the cursor 31 is moved up

- 41 -

and down by the manipulation of the cursor moving keys 531 to move it to a position of a document desired to be copied as shown in Fig. 22(a), and the Copy key 535 is then depressed. Then, as shown in Fig. 22(b), this document is displayed (at step P1502 in Fig. 15) in the form as reversed. and a direction (not shown) is also displayed at the prompt line in the form as reversed. When the Enter key 545 is depressed (step P1552 in Fig. 15) after the cursor 31 has been moved to a position desired to be copied (it is to be noted that in Fig. 22(b), the cursor 31 is not moved), the document desired to be copied is brought to a position one line therebelow as shown in Fig. 22(c). At this time, the copied document, although having the initially given document name and the initial document number of pages, is dated as of the date of composition and the date of renewal which are the date on which it has been copied.

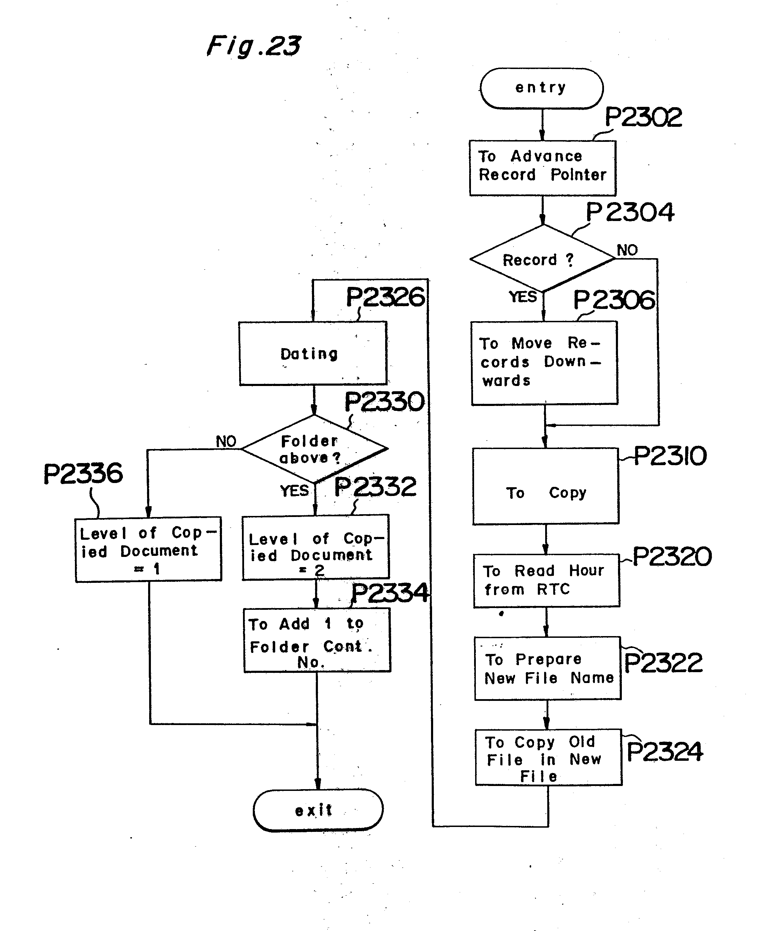

The copying of the document (step P1554 in Fig. 15) is carried out according to a flowchart shown in Fig. 23. At the beginning, the record pointer is advanced one place at step P2302, and a decision is made at step P2304 to determine whether or not there exists a record pointed by the record pointer. If it exists, all of the records from such record to the last record are shifted downwards a distance corresponding to each record, but if it does not exist, the next succeeding step is resumed.

Then, the document pointed by the reversed record pointer (step P1504) is copied at a position of the record pointer at step P2310.

Then, the hour is read from RTC 218 at step P2320; a new file name corresponding to the hour is prepared and is given a file name at step P2322; the old file is copied in the new file at step P2324; and the date of composition and the date of renewal are rendered to be the date of preparation at step P2326.

After that, a decision is made at step P2330 to determine if there is a folder thereabove. If there is, the level is rendered to be 2 at step P2332, the number of contents of the folder thereabove is incremented by 1 at step P2334, and the copied document is included within this folder. If it is not, the level is rendered to be 1 at step P2336 thereby rendering it to be an independent document.

<k-4> Copying of Folder

When the folder is to be copied, the operation differs depending on whether such folder is closed or whether is it opened. In the case of the opened folder, only the folder is copied, but not any document within the folder. On the other hand, in the case of the closed folder, not only the folder, but also the documents within such folder are copied.

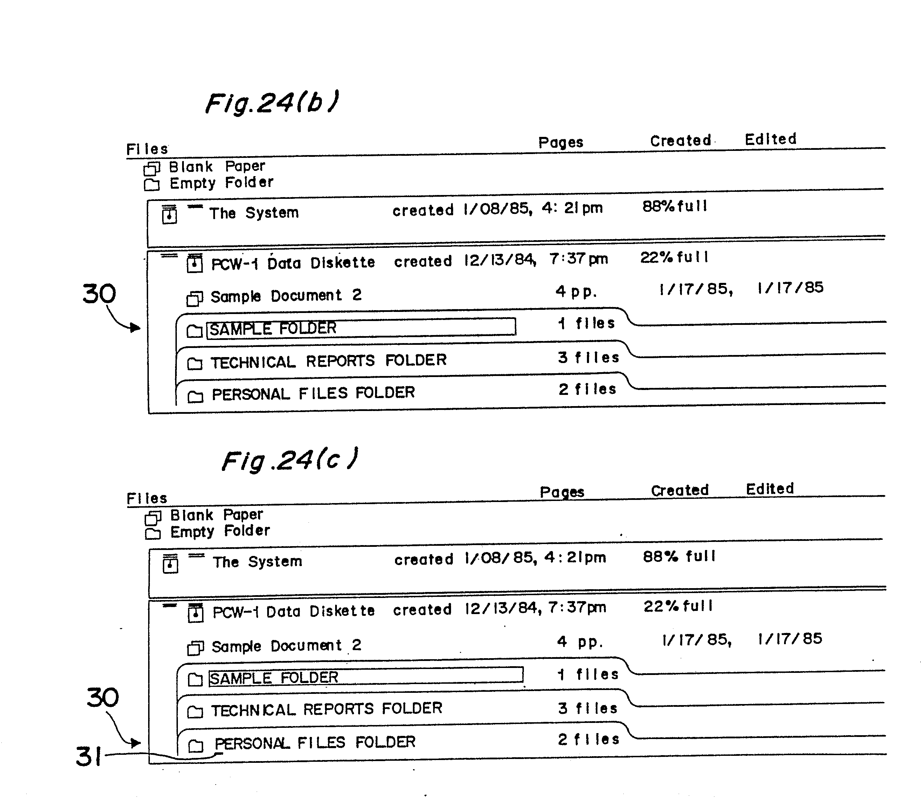

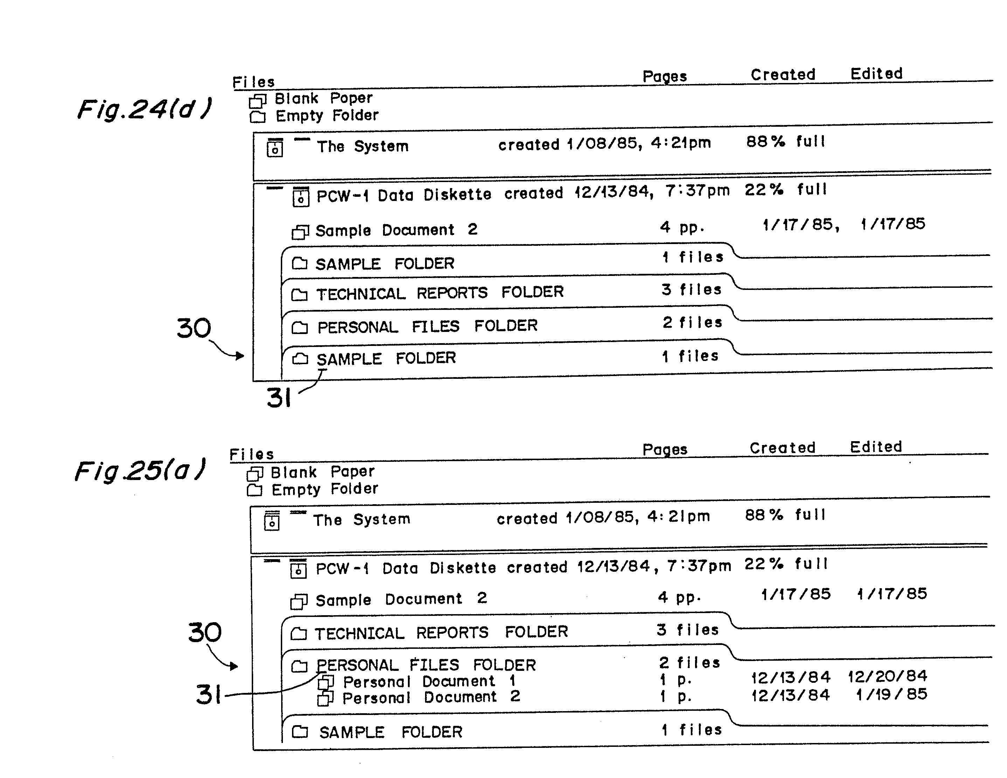

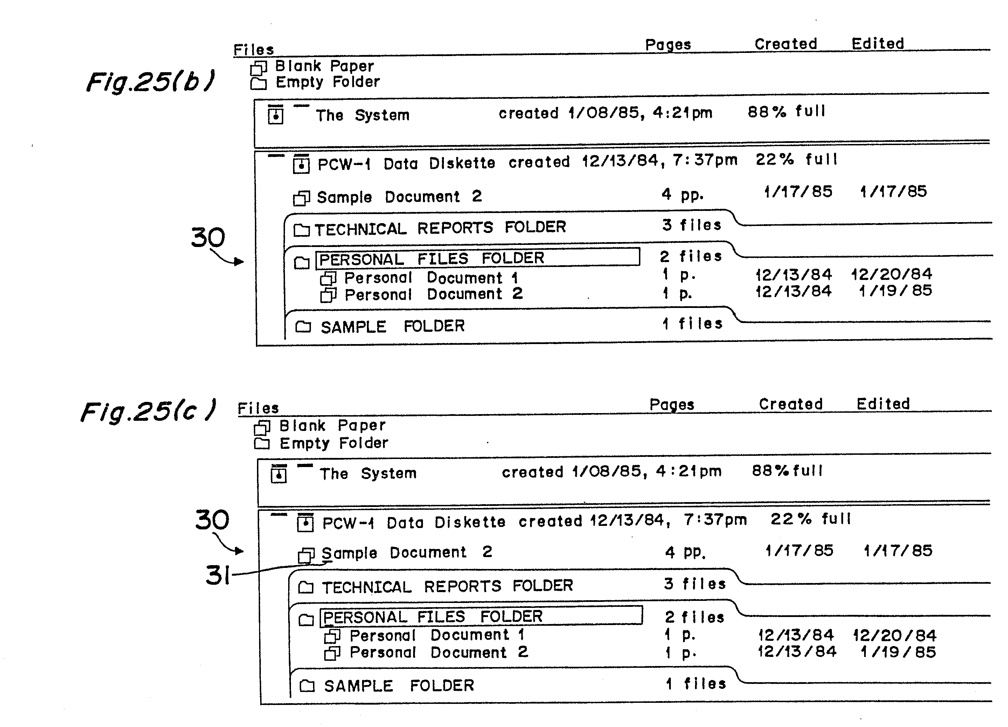

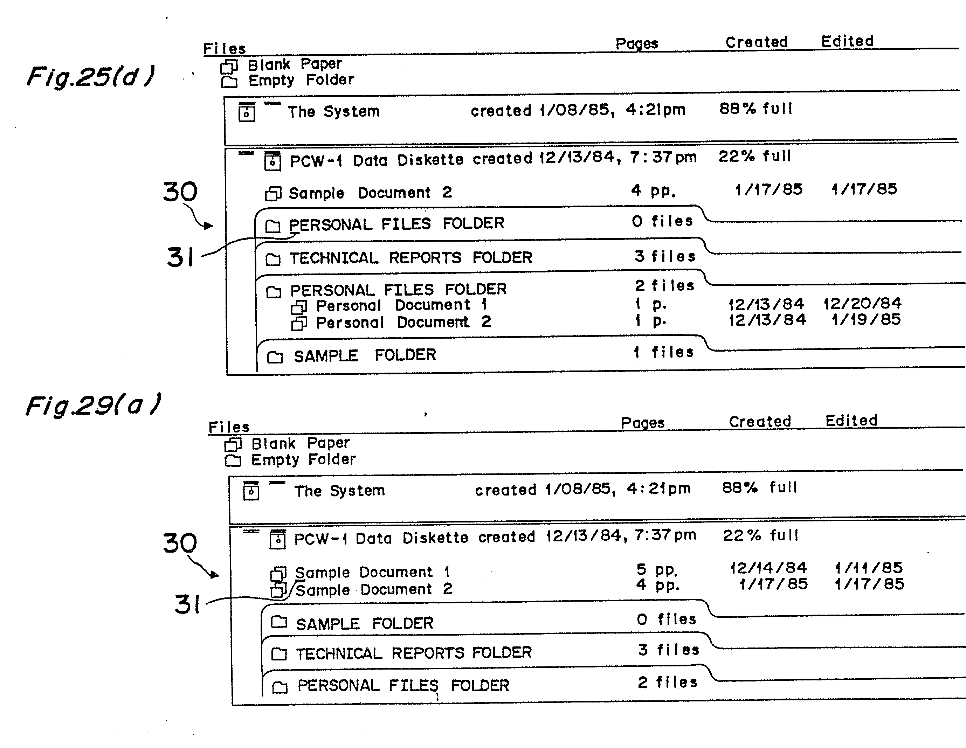

The folder can be copied in the following procedure. An example of a copy of the closed folder and that of the opened folder are respectively shown in Figs. 24(a) to 24(d) and Figs. 25(a) to 25(d). In the files screen, the cursor 31 is moved up and down by the manipulation of the cursor moving keys 531 to move it to a position of the folder to be copied (Fig. 24(a)). Should only the folder be desired to be copied, the folder is opened (Fig. 25(a)). On the other hand, if the document within the folder is desired to be copied as well, the folder is left closed. And, the Copy key 535 is depressed wherefore, in the screen, the name of the folder to be copied is displayed in the form as reversed and a direction is also displayed at the prompt line in the form as reversed (Fig. 24(b) and Fig. 25(b)). When the Enter key 545 is depressed after the cursor 31 has been moved to a position of the folder desired to be copied (Fig. 24(c) and Fig. 25(c)) (steps P1532 and P1542 in Fig. 15), the folder is prepared one line below such position (step P1534 and P1544 in Fig. 15) (Fig. 24(d) and Fig. 25(d)).

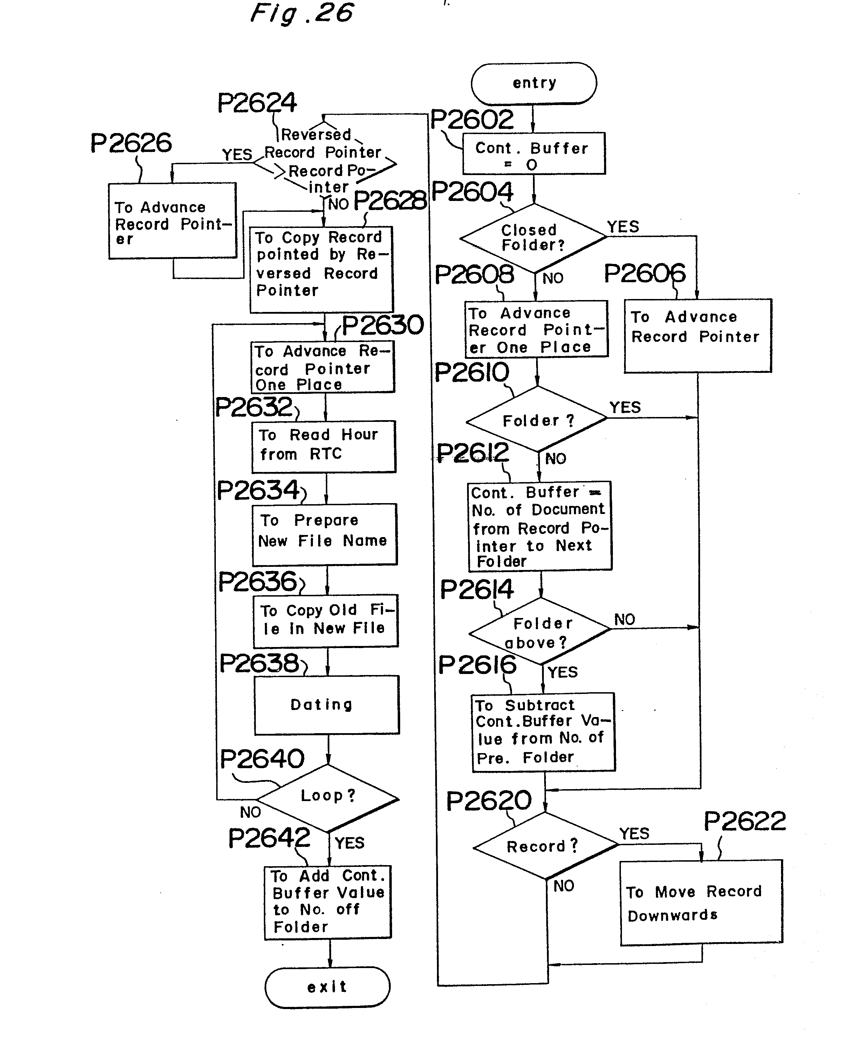

The copying of the closed folder (step P1534) is carried out according to a flowchart shown in Fig. 26. At the beginning, the buffer for the number of contents is zeroed at step P2602. A decision is then made at step P2604 to determine if the position of the cursor is the closed folder. If it is, the record pointer is advanced the number of contents of the folder plus 1 at step P2606. If it is not, the recorder pointer is advanced one place at step

- 44 -

P2608 and the following process is carried out. At the outset, a decision is made at step P2610 to determine if such record is a folder and, if it is not, that is, if it is a document, the number of documents from the record pointer to the next succeeding folder is rendered to be a buffer for the number of contents at step P2612 in order to insert in the copied folder. Moreover, another decision is made at step P2614 to determine whether or not there is a folder thereabove, and if it exists, it means that such document has been included in that folder and, therefore, the number of contents of such folder is subtracted by the value of the buffer for the number of contents at step P2616. Then, the program flow proceeds to the next step.

A decision is then made at step P2620 to determine whether or not there is a record pointed by the record pointer, and if it exists, all of the records from such record to the last record are downwardly moved the number of contents of the folder pointed by the record pointer (the number of documents) plus 1 at step P2622.

Thereafter, a decision is made at step P2624 to determine if the value of the reversed record pointer is greater than the value of the record pointer. If it is greater than the value of the record pointer, the reversed record pointer is advanced at step P2626 a number equal to the number over which it has been moved.

Then, the record pointed by the reversed record pointer is copied at step P2628 at the position of the record pointer a number of times equal to the number of contents of the folder plus 1.

Then, the record pointer is advanced one place at step P2630. Subsequently, the hour is read from RTC 218 at step P2632; a new file name corresponding to the hour is prepared and rendered to be as a file name at step P2634; the old file is copied in the new file at step P2636; and the date of composition and the date of renewal are dated at step P2638. Thereafter, a decision is made at step P2640 to determine if the process from step P2630 to step P2638 has been repeated a number of times equal to the number of contents of the folder. If it is not, this process is repeated. However, if it has been done, the number of contents of the folder is added at step P2642 with the value of the buffer for the number of contents and, thereafter, the program flow returns.

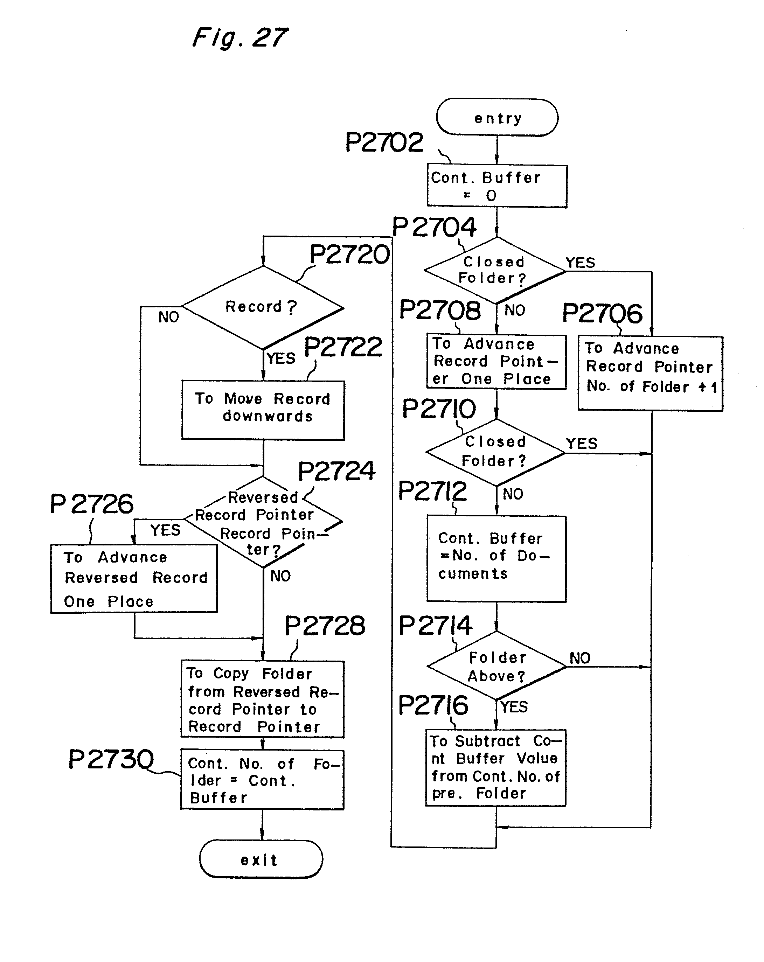

The copying of the opened folder (step P1544) is carried out according to a flowchart shown in Fig. 27. At the beginning, the buffer for the number of contents (hereinafter referred to as "content buffer") is zeroed at step P2702 and a decision is subsequently made at step P2704 to determine whether or not the position of the cursor is the closed folder. If it is, the record pointer is advanced the number of contents of the folder plus 1 at step P2706.

However, if it is not, the record pointer is advanced one place at step P2708 and the following process takes place. In the first place, a decision is made at step P2710 to determine whether or not such record is a folder. If it is not, it means that the record is a document and, therefore, in order to insert it in the copied folder, the number of documents from the record pointer to the next succeeding folder is rendered to be the content buffer at step P2712. Another decision is made at step P2714 to determine whether or not there is a folder thereabove, and if it exists, it means that such document has been included in that folder and, therefore, the number of contents of such folder is subtracted by the value of the content buffer at step P2716.

Subsequent to step P2716, a decision is made at step P2720 to determine whether or not there is a record pointed by the record pointer. If there is, all of the record from such record to the final record are downwardly shifted a distance equal to each record at step P2722.

Then, another decision is made at step P2724 to determine whether or not the value of the reversed record pointer is greater than the record pointer, and if it is, the reversed record pointer is advanced one place at step P2726.

Thereafter, the folder pointed by the reversed record pointer is copied at the position of the record pointer at step P2728.

(ℓ)  Movement

The movement (step #736) of the folder and document to another position in the files screen can be performed by the following procedure. When the Move key 534 is depressed after the Files key 542 has been depressed to effect the files screen (step #708 in Fig. 7), and the cursor has subsequently been moved by the manipulation of the cursor moving keys 531 to a position of the document or folder desired to be moved (steps #724 and #728), a Move subroutine is initiated at step #736. In the screen, the title is displayed in the form as reversed and a direction reading "Move where? Point of where file is to go and press ENTER. Press CANCEL to quit." is also displayed at the prompt line in the form as reversed. Subsequently, the cursor 31 is moved to a position to which the document or folder is to be moved, and the Enter key 545 is then depressed. In this way, the document or folder is displayed one line below such position and deleted from the original position.

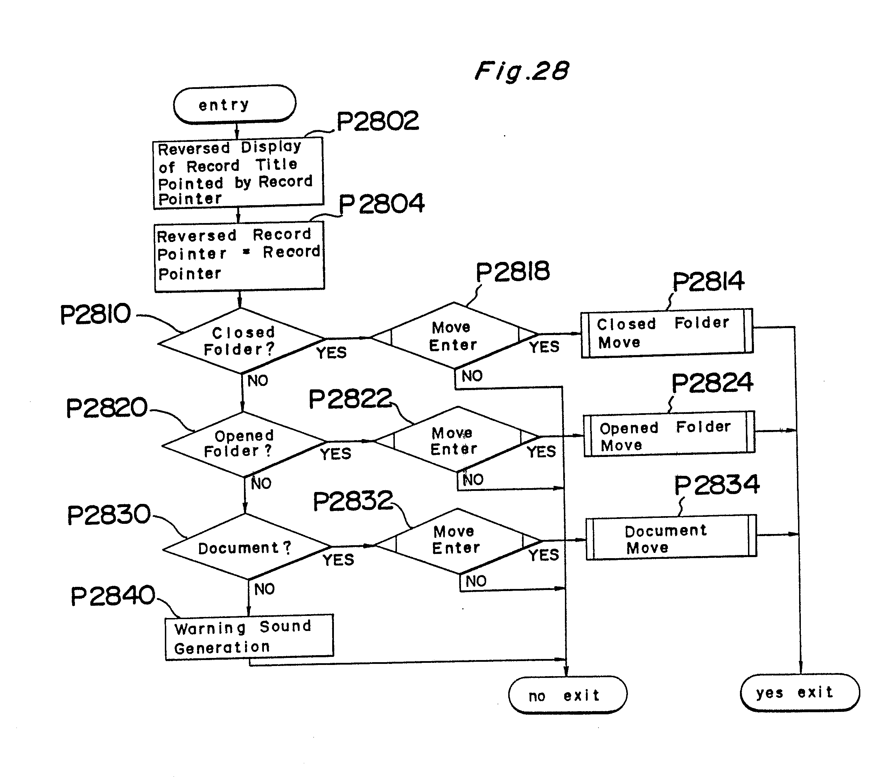

The movement at step #736 is carried out according to a flowchart shown in Fig. 28. When the Move key 534 is depressed after the cursor 31 has been moved to a position of the document or document to be moved, the title of the record pointed by the record pointer is displayed in the form as reversed at step P2802, and the value of the

- 48 -

reversed record pointer is rendered to be the value of the record pointer at step P2804.

Then, a decision is made at step P2810 to determine whether or not such record is a closed folder. If it is, and when a Move·Enter process is effected at step P2812 wherein after the cursor has been moved to the position to which the folder or document is to be moved the Enter key 545 is depressed, a Move process for the closed folder takes place at step P2814, followed by the process step #760 shown in Fig. 7.

Then, another decision is made at step P2820 to determine whether or not such record is an opened folder. If it is, and when the above mentioned Move·Enter process is performed at step P2832, a process of the document Move is performed at step P2834 followed by the process step #760 in Fig. 7.

In event that such record is neither the folder nor the document, a warning sound is generated at step P2840 and the next succeeding key input is awaited (step #720 in Fig. 7).

<£-2>  Movement of Document

In connection with the movement of the document, where it is moved within the folder, such document is included in the folder with the number of documents in such folder consequently increased by one. At this time, when the movement is executed even though such folder is closed, the folder is opened and the document moved is displayed at the top of such folder.

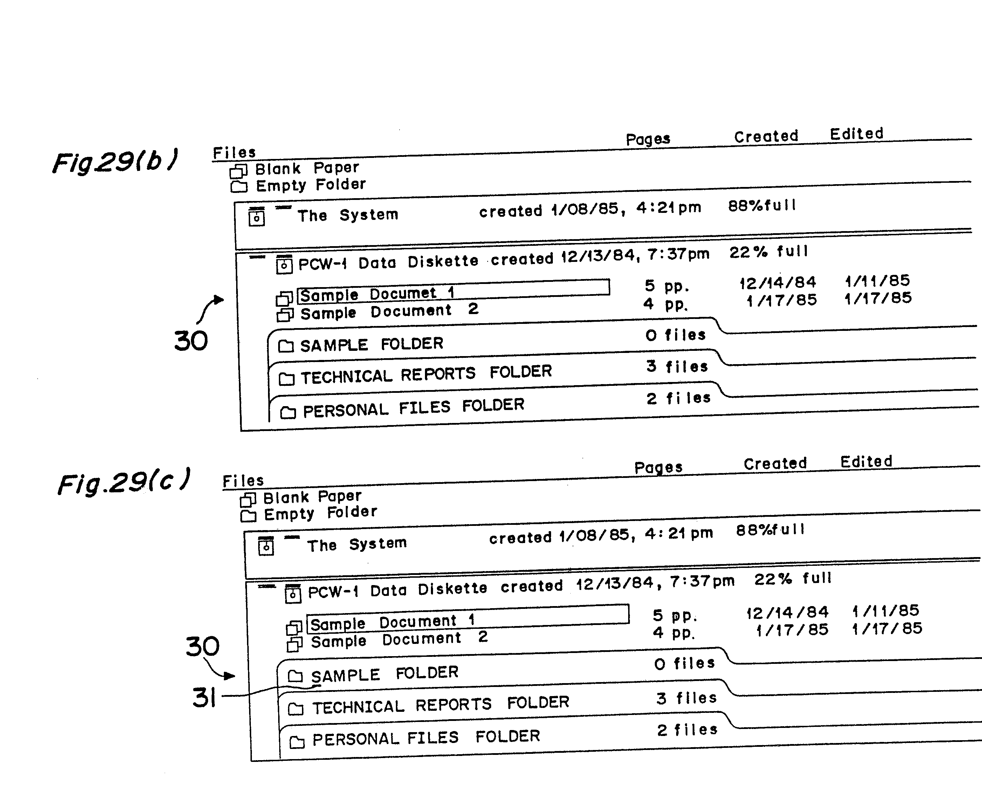

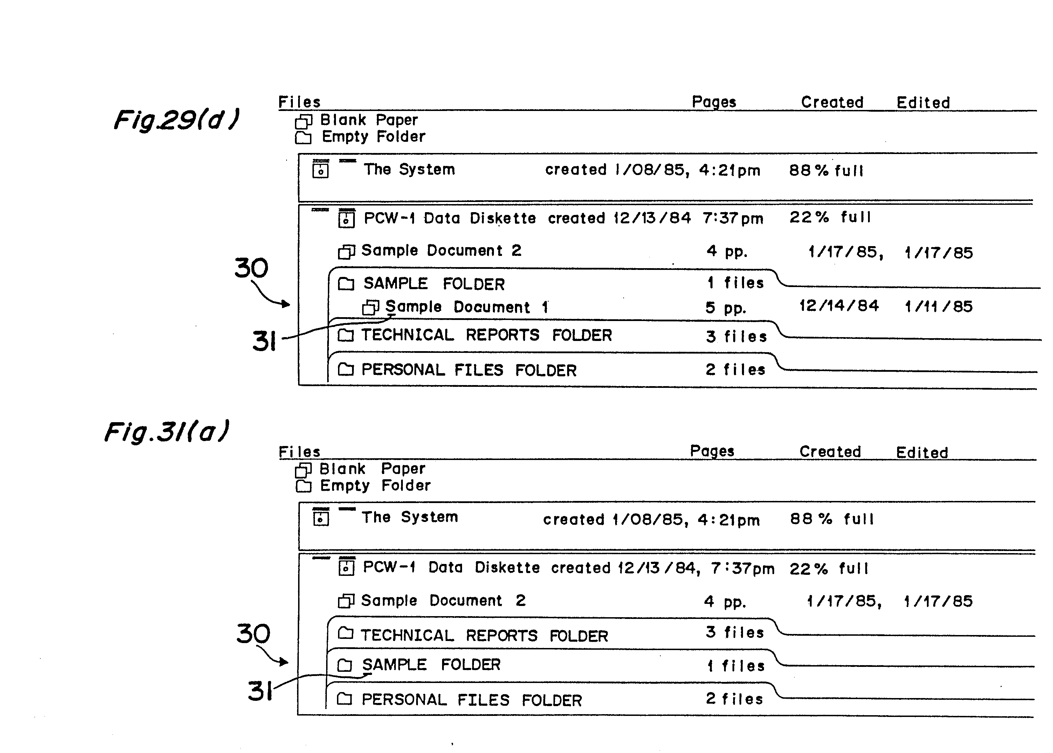

Figs. 29(a) to 29(d) illustrate diagrams of screen displays showing the sequence of process for the movement of the document to the closed folder. In the files screen, the cursor 31 is moved to a position of a document (Sample Document) desired to be moved (Fig. 29(a)). When the Move key 534 is depressed, the document name is displayed in the form as reversed and, although not shown, a direction is also displayed at the prompt line in the form as reversed (Fig. 29(b)). Thereafter, the cursor 31 is moved to the position of the folder desired to be moved (Fig. 29(c)). The subsequent depression of the Enter key 545 at step P2832 results in the opening of the folder and the document moved is displayed at the top of the opened folder (In this example, since no documents have existed in the original folder, only the document moved is displayed) Fig. 29(d)).

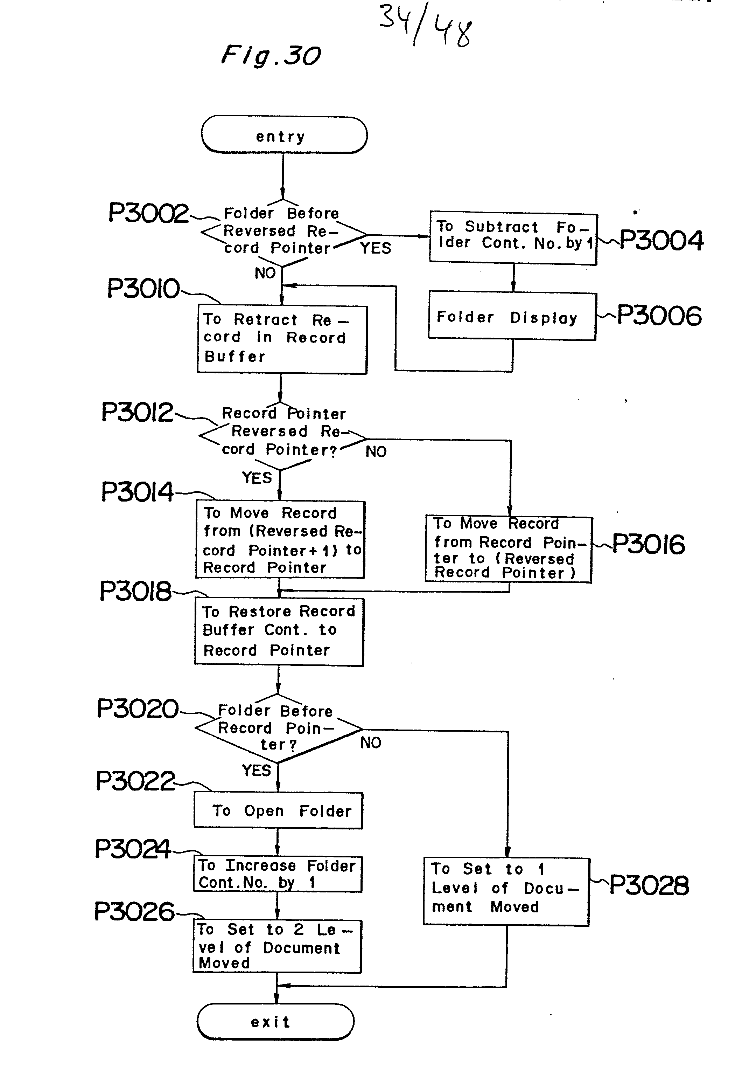

A process for the document movement at step P2834 is carried out according to a flowchart shown in Fig. 30. At the outset, a decision is made at step P3002 to determine whether or not there is a folder preceding a position of the reversed record pointer. If there is, that is, if the folder contains a document to be moved, the number of contents of the folder is decreased by one at step P3004 and the folder is displayed at step P3006. If there is not, the next succeeding process step is resumed.

Then, the record at the position of the reversed record printer is retreated in a record buffer at step P3010. Then, another decision is made at step P3012 to determine whether or not the value of the record pointer is greater than the value of the reversed record pointer. If it is greater, that is, when the document is to be moved below, all of the records from the reversed record pointer plus 1 to the record are moved upwards a distance equal to each record at step P3014. On the other hand, if it is smaller, that is, when the document is to be moved upwards, all of the records from the record to the reversed record pointer plus 1 are moved downwards a distance equal to each record at step P3016. Thereafter, the contents of the record buffer is restored at step P3018 to the record at the position of the record pointer.

At step P3020, a decision is made to determine whether or not there is a folder above the position of the record pointer. If there is, that is, when the folder contains the document moved, the folder is opened at step P3022, the number of contents of the folder is increased by one at step P3024, and the level of the document moved is rendered to be 2 at step P3026. If there is no folder preceding the record pointer, the level of the document moved is rendered to be 1 at step P3028.

<ℓ-2> Movement of Folder

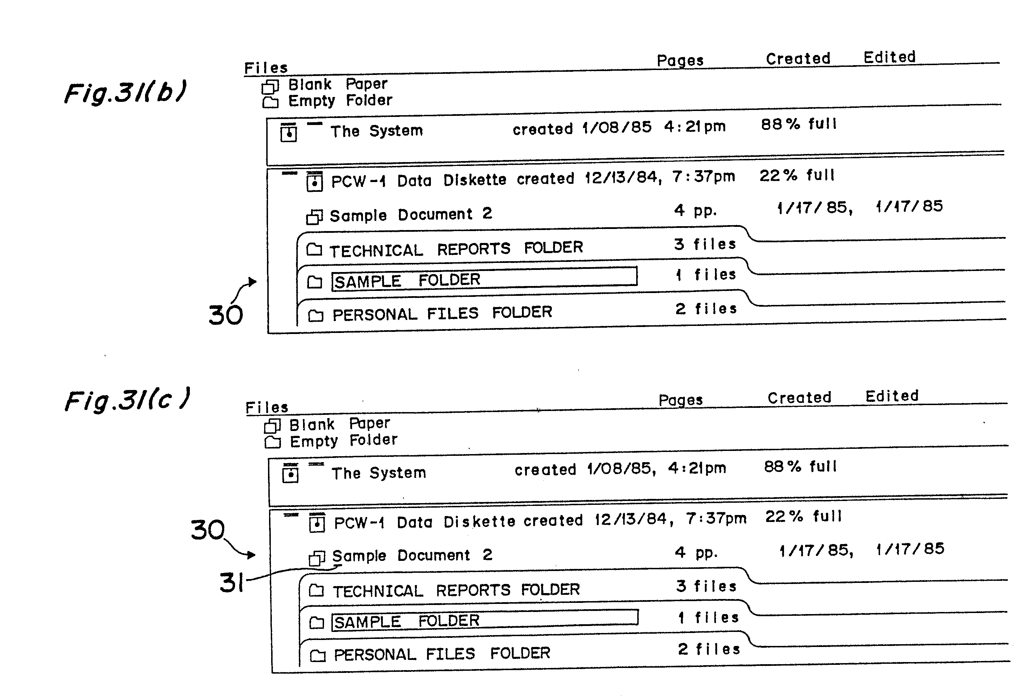

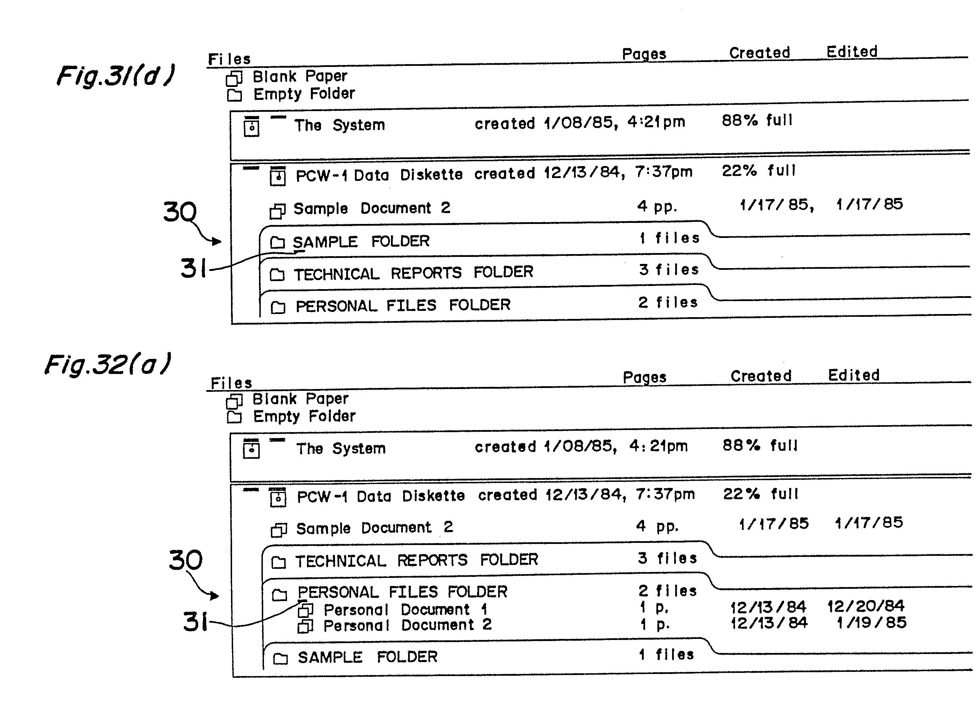

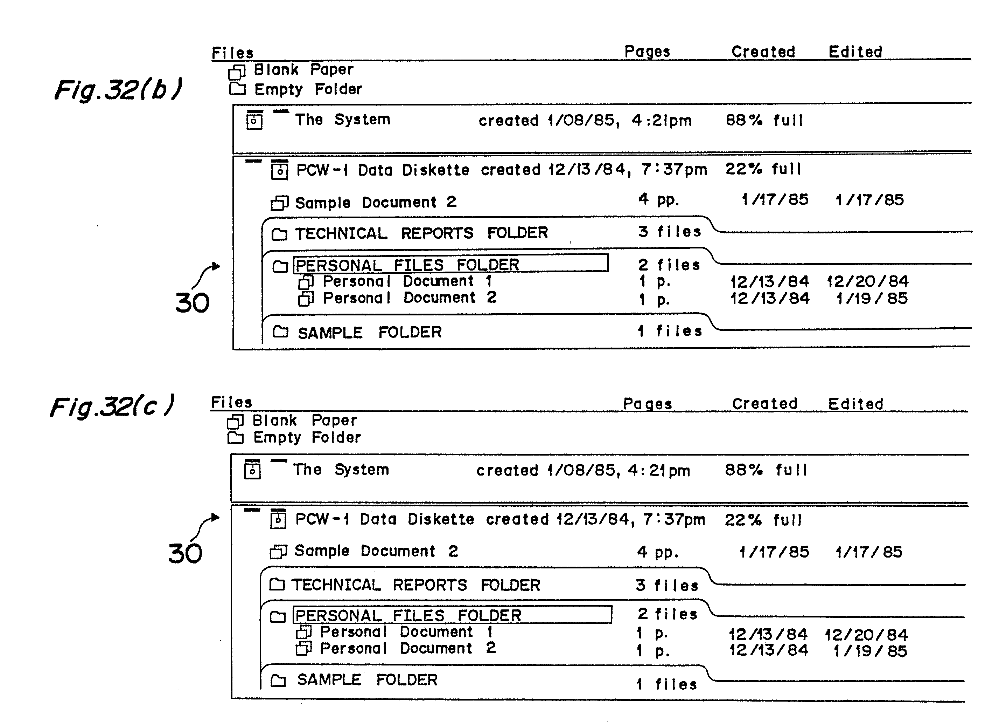

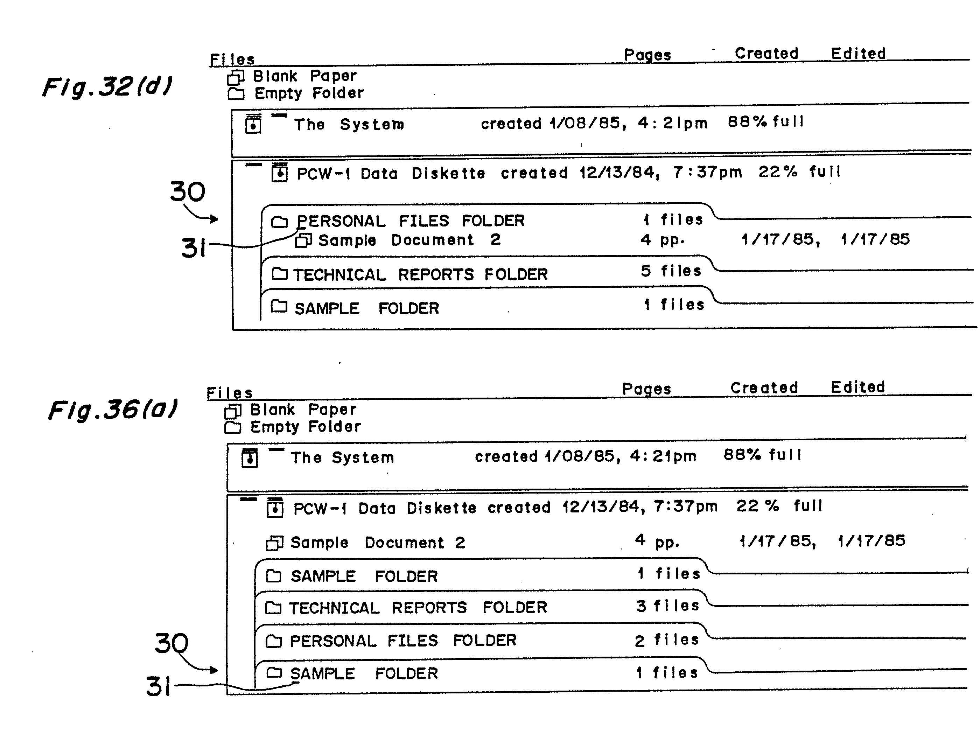

When a folder is to be moved, the operation therefor differs depending on whether the folder is opened or whether it is closed. In the case of the closed folder, both the folder and the document in such folder are moved, but in the case of the opened folder, only the folder is moved. An example applicable where the folder is closed is shown in Figs. 31(a) to 31(d) whereas an example where the folder is opened is shown in Figs. 32(a) to 32(d).

A procedure for the movement of the folder is performed in the following manner.

In the files screen (step #708), the cursor 31 is moved up and down by the manipulation of the cursor moving keys 531 (steps #724 and #728) to a position of the folder to be moved (Figs. 31(a) and 32(a)). Where only the folder is desired to be moved, the folder is opened (Fig. 32(a)), but where both the folder and the documents are desired to be moved, the folder is closed (Fig. 31(a)). When the Move key 534 is subsequently depressed, in the files screen, the folder name is displayed in the form as reversed and a direction is also displayed at the prompt line in the form as reversed (Figs. 31(b) and 32(b)). Then, the cursor 31 is moved to the position to which it is to be moved (Figs. 31(c) and 32(c)), and the Enter key 545 is subsequently depressed. In this way, on the files screen, the folder located at the original position has been deleted and is displayed at a new position (Figs. 31(d) and 32(d)).

- 52 -

During the movement when the folder is opened, only the folder is moved, and the document within such folder remains in the form as presented and is, if there is another folder thereabove, included in such folder. On the other hand, if there is no folder thereabove, it becomes a document of the folder.

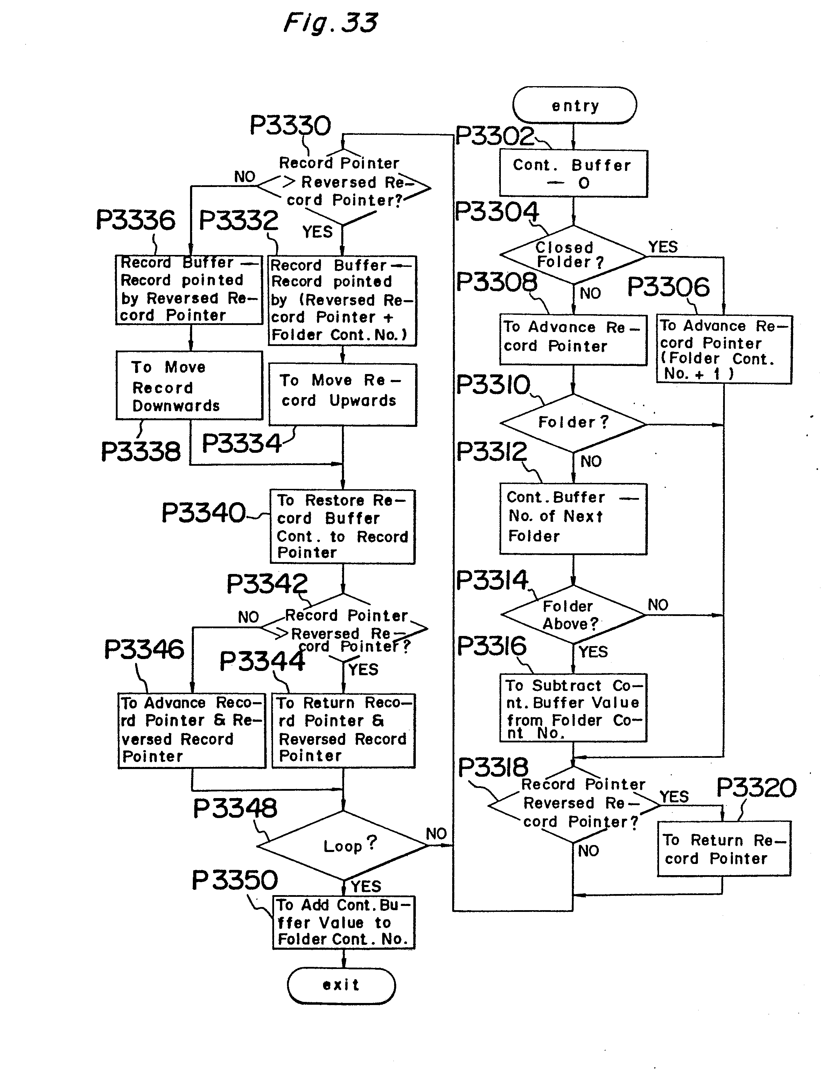

The movement of the closed folder at step P2814 is carried out according to a flowchart shown in Fig. 33. At the outset, the content buffer is zeroed at step P3302, followed by a decision step P3304 to determine whether or not the position of the cursor is a closed folder. If it is, the record pointer is advanced the number of contents of the folder plus 1 at step P3306, but if it is not, the record pointer is advanced one place at step P3308 and the following process takes place. In the first place, a decision is made at step P3310 to determine whether or not the record is a folder. If it is not, that is, if it is a document, the number of documents from the record pointer to the next succeeding folder is rendered to be the content buffer at step P3312 in order to insert it in the folder to be moved. Another decision is made at step P3314 to determine whether or not there is a folder thereabove, and if there is, it means that the document is the one which has been included in such folder, and therefore, the number of contents of such folder is subtracted by the value of the

- 53 -

content buffer at step P3316. Thereafter, the next succeeding step is assumed.

At step P3318, a decision is made to determine whether or not the record pointer is greater than the reversed record pointer. If it is greater, the record pointer is returned one place at step P3320, but if it is· not greater, the next succeeding step is assumed.

Thereafter, the following program flow is repeated a number of times equal to the number of contents of the folder (the number of documents) plus 1. That is, in the first place a decision is made at step P3330 to determine whether or not the record pointer is greater than the reversed record pointer. If it is greater, that is, when moving downwards, the record pointed by the reversed record pointer plus the number of contents of the folder is stored in the record buffer at step p3332, and all of the records from the reversed record pointer plus the number of contents of the folder plus 2 to the record pointer are moved a distance equal to each record at step P3334. On the other hand, if it is not great, that is, when moving upwards, the record pointed out by the reversed record pointer is stored in the record buffer at step P3336 and all of the records from the record pointer to the reversed record pointer less 1 are moved downwards a distance equal to each record. Then, the contents of the record buffer are restored to the position of the record pointer at step P3340, and a decision is made at step P3342 to determine whether or not the record pointer is greater than the reversed record pointer. If it is greater, both the record pointer and the reversed record pointer are subtracted by one at step P3344, but if it is small, both are increased by one at step P3346. Then, a decision is made at step P3348 to determine whether or not the loop of the above described process has been repeated a number of times equal to the number of contents of the folder, pointed by the reversed record pointer (the number of documents), plus 1. If it has not been, the program flow returns to step P3330, but if has been, the number of contents of the folder is added with a value of the content buffer at step P3350 and the next succeeding step is assumed.

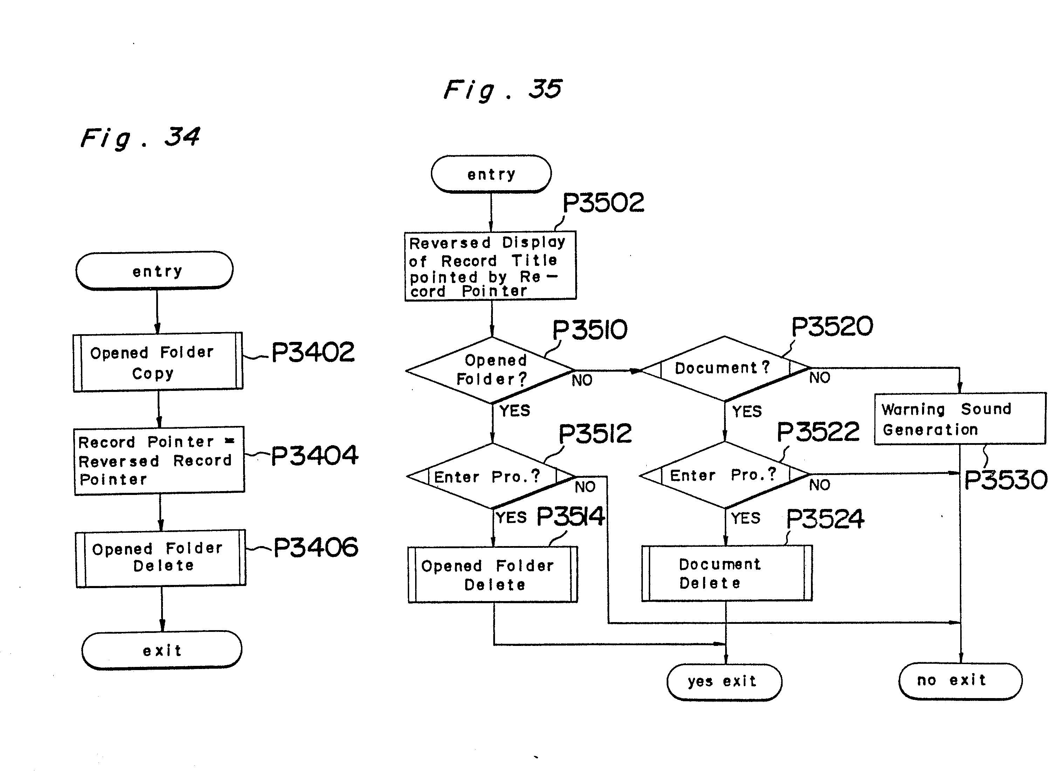

The movement of the opened folder (step P2824) is carried out according to a flowchart shown in Fig. 34. At the outset, a subroutine (step P1544) for the copying of the opened folder is performed at step P3402. Then, the value of the reversed record pointer is rendered to be the value of the record pointer at step P3404. Thereafter, a subroutine (see section <m-1>) for the deletion of the opened folder, which will be described later, is executed at step P3406.

(m) Delete

The deletion of the document and folder can be accomplished by the following procedure.

- 55 -

The deletion of the folder cannot be achieved if the folder is closed. In this case, the depression of the Delete key 533 results in the display of a direction to the effect that the folder should be opened. In the files screen (step #708) displayed by the depression of the Files key 542, the cursor 31 is moved at a position of the document to be deleted (steps #722 to #728) and then the Delete key 533 is depressed. (It is to be noted that, where the cursor 31 is at a position of the closed folder, a direction reading "Open folder to delete individual documents or folder" is displayed at the prompt line and, therefore, the Delete key 533 has to be again depressed after the Select key 537 has been depressed to open the folder.) In this way, the title of the document and others is displayed in the form as reversed and, at the same time, a direction reading "Press ENTER to confirm deletion, Press CANCEL to quit" is displayed at the prompt line in the form as reversed. When the Enter key 545 is subsequently depressed, the document and others are deleted and the cursor is displayed at a position of the title one line thereabove.

The deletion (step #740) can be executed according to a flowchart shown in Fig. 35. When the Delete key 533 is depressed, the title of the record pointed by the record pointer is displayed in the form as reversed at step P3502. Then, a decision is made at step P3510 to determine whether or not the record to be deleted is an opened folder. If it

- 56 -

is an opened folder, and when an Enter process is subsequently carried out at step P3512, the opened folder is deleted at step P3513 and the next succeeding step P3514 takes place.

If it is not an opened folder, another decision is made at step P3520 to determine whether or not it is a document. If it is a document, and when an Enter process is subsequently performed at step P3522, the document is deleted at step P3524, followed by the next step.

If it is not a document, a warning sound is generated at step P3530 and the next succeeding key input is awaited.

<m-1> Deletion of Opened Folder

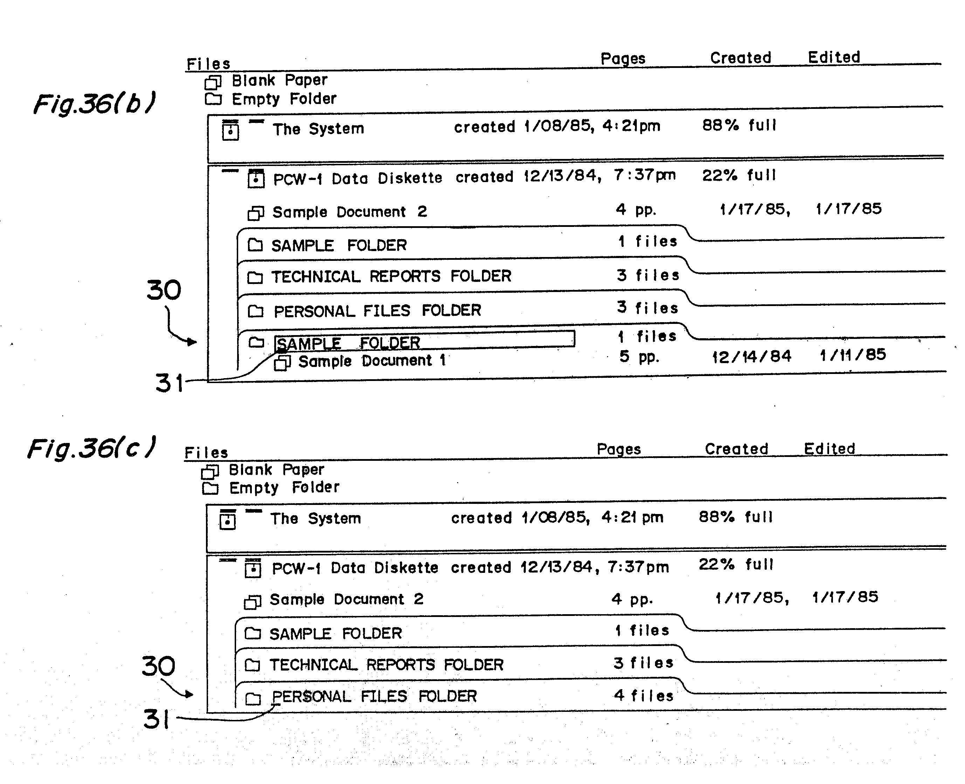

The deletion of the opened folder is carried out in a manner as shown in Figs. 36(a) to 36(c). In the files screen, the cursor 31 is moved to a position of the folder desired to be deleted as shown in Fig. 36(a). After the Select key 537 has been depressed to open the folder and the Delete key 533 has subsequently been depressed, the name of the folder is displayed in the form as reversed and a direction is also displayed at the prompt line in the form as reversed, as shown in Fig. 36(b). When the Enter key 545 is then depressed, the folder is deleted and the document within the folder is inserted in a folder immediately thereabove, as shown in Fig. 36(c).

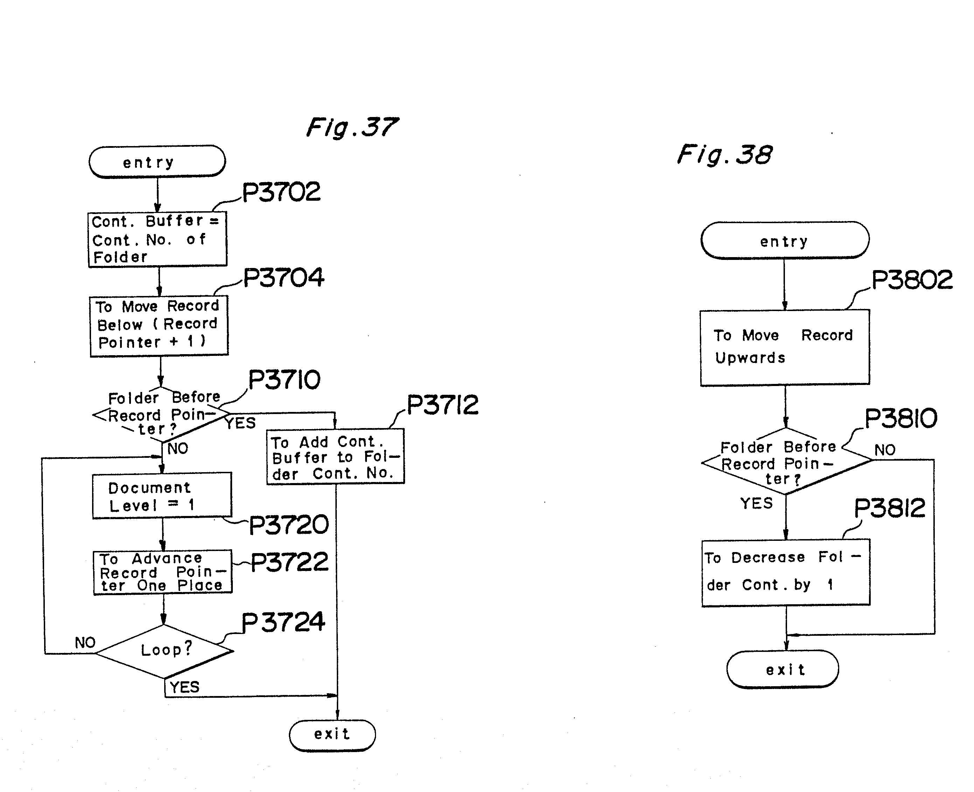

The deletion of the opened folder (step P3514) shown in Fig. 35 is carried out according to a flow chart shown in Fig. 37. In the first place, the number of contents of the folder is transferred to the content buffer at step P3702 and, then, the records from the record pointer plus 1 to the last record are upwardly moved a distance equal to each record at step P3704.

At step P3710, a decision is made to determined whether or not there is a folder above the record pointer. If there is, the value of the content buffer is added to the number of contents of the folder at step P3712, followed by the next succeeding step.

If there is no folder thereabove, the level of the document in this opened folder is rendered to be 1 (independent document) at step P3720 and the value of the record pointer is increased by 1 at step P3722. At step P3724, a decision is made to determine whether or not this process has been performed a number of times equal to the number of documents within this opened folder. If it has not been, this process is repeated. After the completion of this process, the next succeeding step is assumed.

<m-2> Deletion of Document

The deletion of the document (step P3524) shown in Fig. 35 is carried out according to the flowchart shown in Fig. 38. At the outset, all of the records from the record, pointed by the value of the record pointer plus 1, to the last record are upwardly moved a distance equal to each record at step P3802. Then, a decision is made at step P3810 to determine whether or not there is a folder preceding the record pointer. If there is, the number of content (the number of files) of the folder is subtracted by 1 at step P3812 and the next succeeding step is assumed, but if there is not, the next succeeding step is assumed in the form as presented.

(n) Sort (In Alphabetical Order)

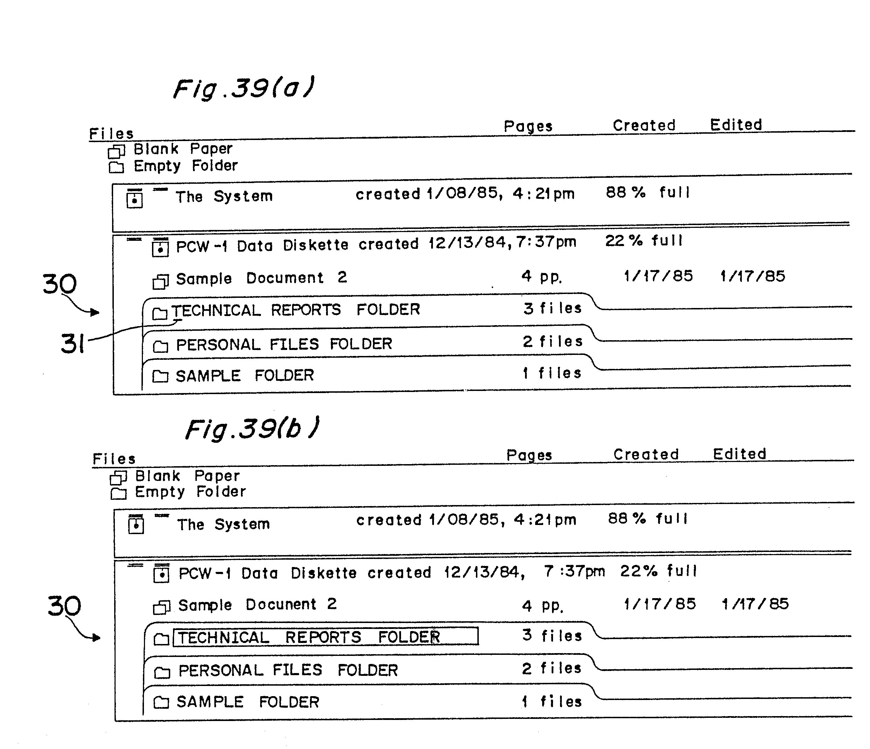

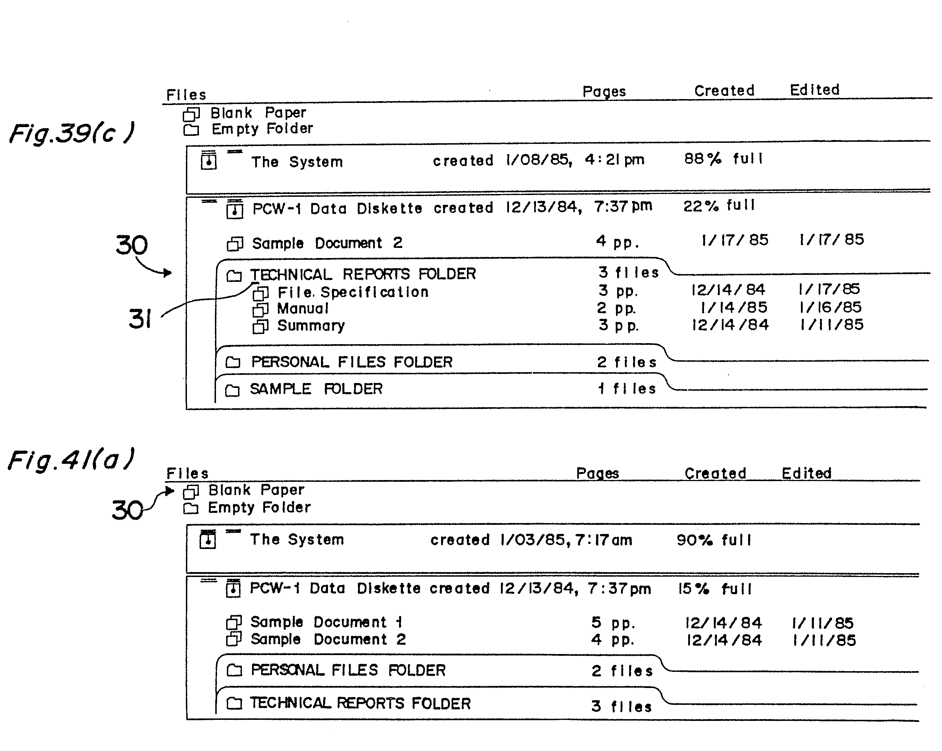

At the time of a sort process (Step #744 in Fig. 7), the documents within one folder or not falling within the·folder are arranged in alphabetic order. In the files screen displayed by the depression of the Files key 542, the cursor 31 is moved to a position of the folder desired to be sorted as shown in Fig. 39(a). At this time, the folder may be either closed or opened, and the cursor 31 may be located anywhere. When the Change key 532 is depressed (step #720), the folder name is displayed in the form as reversed and a direction reading "Press ENTER to begin sorting. Press CANCEL to quit" is also displayed at the prompt line in the form as reversed as shown in Fig. 39(b). When at this time the Enter key 545 is depressed, and if the cursor 31 has been located within the folder, the documents within such folder are moved and arranged in alphabetic order. Should the cursor 31 have been located outside the folder, the documents within the folder are similarly arranged in alphabetical order as shown in Fig. 39(c).

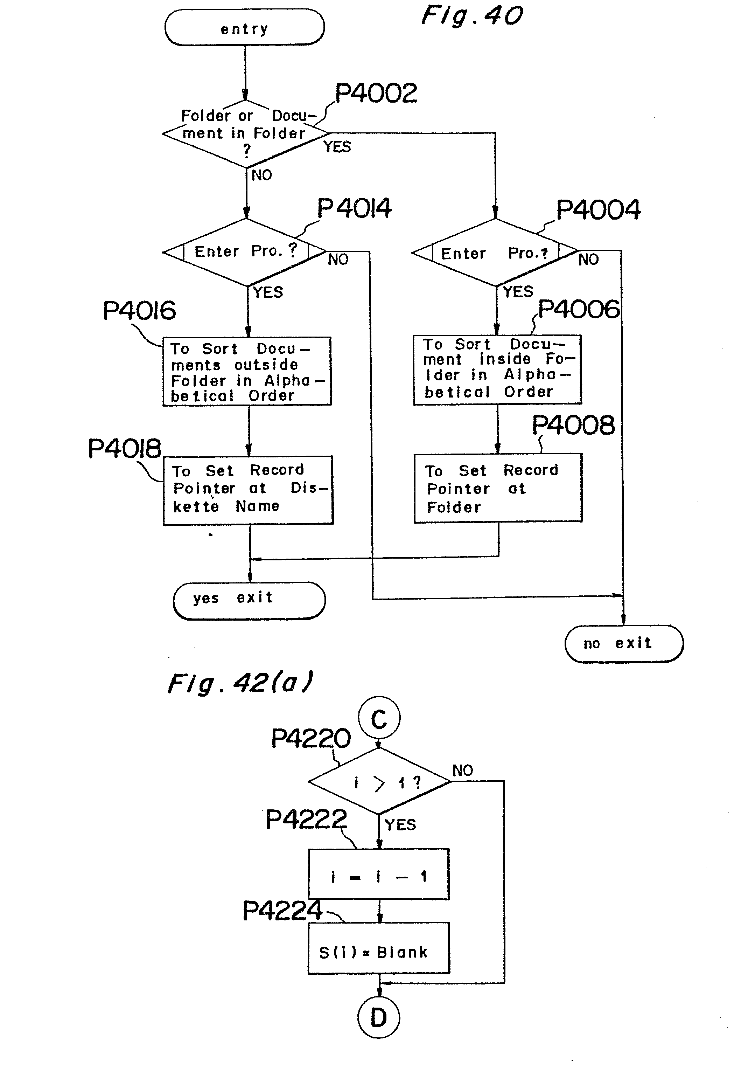

The sort process (step #744 in Fig. 7) is carried out according to a flowchart shown in Fig. 40. At the beginning, a decision is made at step P4002 to determine whether or not the position of the cursor 31 at the time of depression of the Change key 532 is within the folder. If it is within the folder, and when the Enter key 545 is subsequently depressed, the Enter process (Fig. 13) is executed at step P4004, followed by step P4006 during which the documents with the folder are arranged in alphabetical order. Then, the cursor 31 is moved to the position of the folder at step P4008 and the next succeeding step is assumed. If it is not within the folder or if it is a diskette name, and when the Enter key is subsequently depressed, the Enter process (Fig. 13) is executed at step P4014, followed by step P4016 during which the documents outside the folder are arranged in alphabetical order, and the cursor 31 is thereafter moved to the position of the diskette name.

(o) Search

Where the document or folder contained in the diskette is desired to be search for, the following procedure is taken.

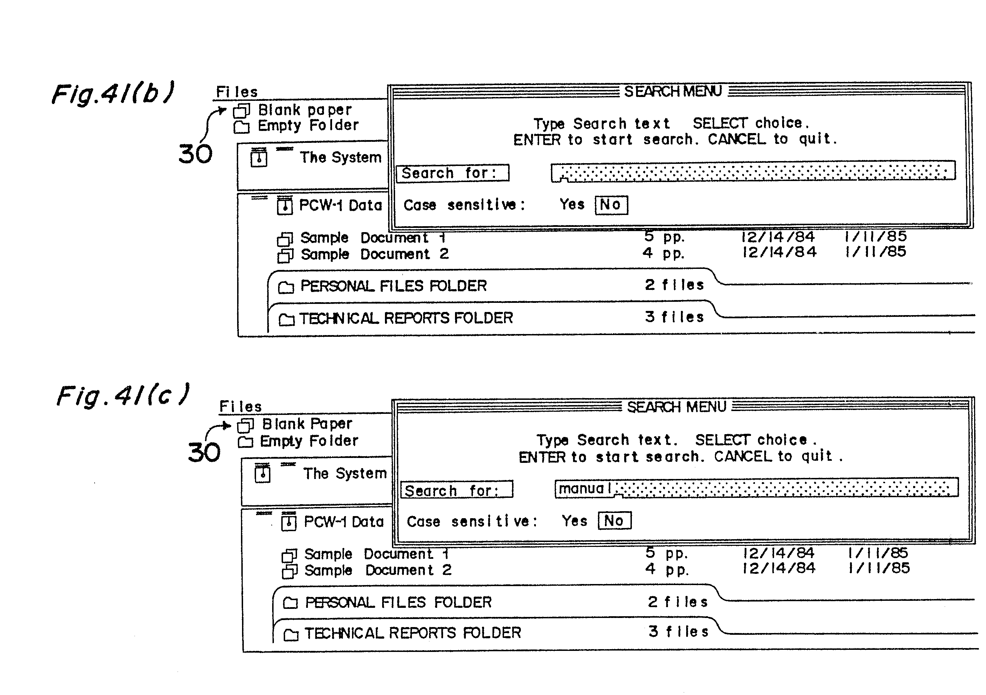

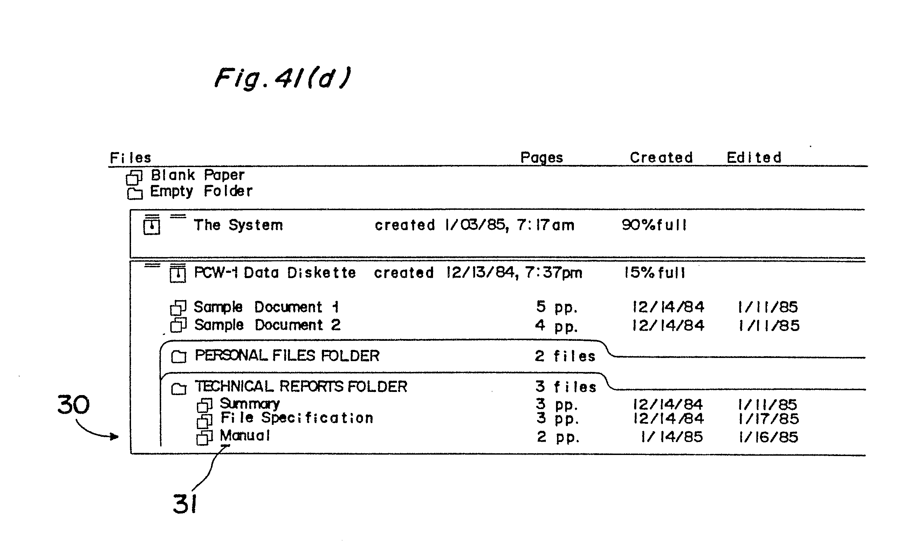

When the files key 542 is depressed, the document name, the folder name and others are displayed on the screen as shown in Fig. 41(a) and a search buffer is initialized. When the Search key 543 is subsequently depressed, a search process (step #752 in Fig. 7) is instituted and "SEARCH MENU" is displayed as shown in Fig. 41(b). Then, when the Enter key 545 has to be depressed after the name of the document of folder to be search for has been keyed in as. shown in Fig. 41(c), the display of "MENU" disappears and the search is executed while the cursor 31 is positioned at that position as shown in Fig. 41(d). Where the same record is subsequently search for, it is enough to simple depress the Enter key 545. Where even though the folder is closed during the search, the document to be searched for is included in such folder, the folder is opened and it is then displayed. In the event that the document to be searched for is not included in such folder, a legend "Search text not found" is displayed at the prompt line in the form as reversed.

The search process (step #752 in Fig. 7) is carried out according to a flowchart shown in Fig. 42 composed of Figs. 42(a) and 42(b). It is to be noted that characters S and i used in Fig. 42 represent the search buffer and a search buffer index, respectively. After the depression of the Search key 543, the title is keyed in at step P4202. At first, a decision is made at step P4202 to determine whether or not the key input is Cancel. If it is, the program flow returns. At step P4206, a decision is made to determine whether or not it is characters or blank.

If the result of the decision at step P4206 is yes, the key input is transferred to the i-th bit of the search buffer at step P4212 and after i has been incremented by 1 at step P4214, a decision is made at step P4216 to determine whether or not it is smaller than a predetermined number (for example, 33 in this instance). If it exceeds N, it means that the title is composed of characters of a number greater than the predetermined number and, therefore, a warning sound is generated at step P4218, followed by the waiting for the next succeeding key input. If it is smaller than N, the next succeeding key input is awaited at step P4202.

At step P4208, a decision is made to determine whether or not the key input is Back Space. If it is, then, another decision is made at step P4220 to determine whether it is the first character. If it is the first character, another key input is awaited at step P4202. If it is not the first character, i is subtracted by 1 at step P4222, a character S(i) preceding one character is left blank at step P4224, and the next succeeding key input is awaited.

At step P4210, a decision is made to determine whether or not the key input is Enter. If it is not, it means that the wrong key has been depressed and, therefore, a warning sound is generated at step P4218 before the next succeeding key input is fed at step P4202. Where the Enter key 545 has been depressed, a decision is made at step P4230 to determine whether or not i is greater than 1. If i is equal to 1, it means that no character of the title has yet been keyed in and, therefore, a legend "No Search text" is displayed at the prompt line in the form as reversed at step P4232, followed by the return of the program flow.

At step P4240, a decision is made to determine whether or not the title pointed by the record pointer contains a character string stored in the search buffer. If it contains one, another decision is made at step P4242 to determined whether or not such title is a document included in the folder. If it is, the program flow returns after the folder has been opened at step P4244, but if it is not, the program flow returns directly.

On the other hand, if no character within the search buffer exists in the title pointed by the record pointer, the record pointer is advanced one place at step P4246, a decision is then made at step P4248 to determine whether or not the record is to be terminated, and the search is continued until it terminates. If it does not exist within all of the records, a legend "Search text not found" is displayed at the prompt line in the form as reversed at step P4250, followed by the return of the program flow.

- 63 -

From the foregoing description of the present invention, it has now become clear that the document or documents can be displayed and sorted on the screen together with the folder. Therefore, the handling, arrangement and search of a number of documents can be facilitated. By way of example, the present invention provided the following advantages:

i) Since both the folder and the document are displayed with no need to change the screen, the search of the document is easy to perform.

ii) A number of documents can be sorted.

iii) A single data diskette can be used by a number of users and can accept folders of different users.

iv) Since the movement of the document takes place together with the folder, the document can be easily controlled.

Although the present invention has been fully described by way of example in connection with a preferred embodiment thereof with reference to the accompanying drawings, it is to be noted that various changes and modifications are apparent to those skilled in the art. Such changes and modifications are to be understood as included within the scope of the present invention as defined by the appended claims unless they depart therefrom.

What is claimed is:

1.      A word processor system capable of storing the text of documents in a recording medium, the title of a document and the image of folders, comprising:

a display means (100) for displaying on a screen (102), document control data stored in the recording medium;

a key input means (500) for keying in characters and symbols to the recording medium;

a manipulatable input means for handling a record of the document control data displayed on the screen including a designating means for designating a document or a folder to be handled;

a document control means for inputting the document control data in a document control data section at a determined location of the recording medium, or outputting data stored in the recording medium to display means (100), in dependence on an input signal from the key input means (500) or the manipulatable input means, and

said document control data comprises a first record, including a name and a level of a document recorded in the recording medium corresponding to such document, and a second record including a name and a level of a folder unit in which documents of a lower level are brought together; said second record being arranged preceding the first record of any documents included in such folder unit, said document control means is operable upon receipt of a signal from the manipulatable input means to provide a file display, to cause the display means (100) to successively display from the top to the bottom of the screen (102) a list of at least those names of respective documents which are included in the record stored in the document control data section, said document control means further includes a folder specifying means for specifying a folder unit at the time of display of data connected with the folder unit, an editing means for editing the document control data on the screen (102) in response to a signal from the manipulatable input means, and a renewing means for renewing the document control data in correspondence with the editing, wherein said editing means is operable to cause the display means (100) to display an empty document in at least a portion of said list and, in the event that after the designation of the display of the empty document said designating means designates a portion at which a document is to be prepared, to prepare the document at such position in response to a signal from the manipulatable input means resulting from the operation to prepare the document.

2.      A word processor system as claimed in Claim 1, wherein in said list, said folder specifying means is a means operable to draw a line to divide at least a portion of the perimeter of the display of the folder unit.

3.      A word processor system as claimed in Claim 1, wherein in said list, said folder specifying means is a means for displaying a marking in front of the display of the folder name for indicating the folder unit.

4.       A word processor system as claimed in Claim 1, wherein said folder specifying means is a means for, in said list, displaying while the front of the folder name is displaying the name of the document belonging the folder.

5.       A word processor system as claimed in Claim 1, wherein said document control means includes a folder opening means operable, after the display of the folder designated by said designating means in the list and in the event that no data of the document belonging to such folder is displayed, to cause the display means (100) to display the document in response to a control signal generated from the manipulatable input means for displaying data of such document on the screen (102).

6.       A word processor system capable of storing the text of documents in a recording medium, the title of a document and the image of folders, comprising:

          a display means (100) for displaying on a screen (102), document control data stored in the recording medium;

          a key input means (500) for keying in characters and symbols to the recording medium;

          a manipulatable input means for handling a record of the document control data displayed on the screen (102) including a designating means for designating a document or a folder to be handled;

a document control means for inputting the document control data in a document control data section at a determined location of the recording medium, or outputting data stored in the recording medium to display means (100), in dependence on an input signal from the key input means (500) or the manipulatable input means, and

said document control data comprises a first record, including a name and a level of a document recorded in the recording medium corresponding to such document, and a second record including a name and a level of a folder unit in which documents of a lower level are brought together; said second record being arranged preceding the first record of any documents included in such folder unit, said document control means is operable upon receipt of a signal from the manipulatable input means to provide a file display, to cause the display means to successively display from the top to the bottom of the screen a list of at least those names of respective documents which are included in the record stored in the document control data section, said document control means further includes a folder specifying means for specifying a folder unit at the time of display of data connected with the folder unit, an editing means for editing the document control data on the screen in response to a signal from the manipulatable input means, and a renewing means for renewing the document control data in correspondence with the editing, wherein said editing means is operable in the event that after the designation of a folder in said list said designating means designates a position to which the folder is to be copied or moved, to copy or move the folder at or to such position in response to a signal from the manipulatable input means resulting from the operation of folder copying or moving.

7.      The invention of Claim 6, wherein said editing means includes a folder closing means operable, in the event that, after the display of said list of folder images designated by said designating means, no display of a document belonging to such folder takes place, and in response to a control signal from the manipulatable input means for deleting data of the document from the screen (102), to cause the display means to delete the display of such document from the screen (102).

8.      The invention of Claim 6, wherein said editing means is operable to cause the display means to display an empty folder in at least a portion of said list and to, in the event that said designating means designates, after the designation of the display of the empty folder, a position at which a folder image is to be formed, form the folder image at such position in response to a signal from the manipulatable input means resulting from the operation to compose a document.

9.      The invention of Claim 6, wherein said editing means is operable to delete a folder image in response to the operation performed by the manipulatable input means to delete such folder image after said designating means has designated the folder in said list.

10.     The invention of Claim 6, wherein said editing means is operable to cause the display means (100) to display an empty document in at least a portion of said list and, in the event that after the designation of the display of the empty document said designating means designates a position at which a document is to be prepared, to prepare the document at such position in response to a signal from the manipulatable input means resulting from the operation to prepare the document.

11.     The invention of Claim 6, wherein said editing means is operable, in the event that after the designation of the document in said list said designating means designates a position at which the document is to be copied, and to copy the document at such position in response to a signal from the manipulatable input means resulting from the operation to copy such document.

12.     The invention of Claim 6, wherein said editing means is operable, in the event that after the designation of the document in said list, said designating means designates a position to which the document is to be moved, to move the document to such position in response to a signal from the manipulatable input means resulting from the operation to move such document.

13.     The invention of Claim 6, wherein said editing means is operable to delete a document in response to the operation performed by the manipulatable input means, and after said designating means has designated such document in said list, to delete such document.

14.     The invention of Claim 6, wherein said editing means is operable, when a name of the document or folder designated by said designating means in said list is modified by the operation of the key input means (500), to effect a display corresponding to such modification.

15.     The invention of Claim 6, wherein said editing means is operable to arrange in alphabetical order documents included in the folder designated by the designating means, or documents in a folder to which the document designated thereby belongs.

16.     The invention of Claim 6, wherein said editing means is operable to make a search on said list for the document designated by said key input means (500) and to display said document on the screen (102).

17.     A word processor system capable of storing the text of documents in a recording medium the title of a document and the image of folders, comprising:

        a display means (100) for displaying on a screen (102), document control data stored in the recording medium;

        a key input means (500) for keying in characters and symbols to the recording medium;

a manipulatable input means for handling a record of the document control data displayed on the screen including a designating means for designating a document or a folder to be handled;

a document control means for inputting the document control data in a document control data section at a determined location of the recording medium, or outputting data stored in the recording medium to display means, in dependence on an input signal from the key input means (500) or the manipulatable input means, and

said document control data comprises a first record, including a name and a level of a document recorded in the recording medium corresponding to such document, and a second record including a name and a level of a folder unit in which documents of a lower level are brought together; said second record being arranged preceding the first record of any documents included in such folder unit, said document control means is operable upon receipt of a signal from the manipulatable input means to provide a file display, to cause the display means (100) to successively display from the top to the bottom of the screen (102) a list of at least those names of respective documents which are included in the record stored in the document control data section, said document control means further includes a folder specifying means for specifying a folder unit at the time of display of data connected with the folder unit, an editing means for editing the document control data on the screen (102) in response to a signal from the manipulatable input means, and a renewing means for renewing the document control data in correspondence with the editing, wherein said editing means is operable to cause the display means (100) to display an empty folder unit in at least a portion of said list and to, in the event that said designating means designates, after the designation of the display of an empty folder unit, a position at which a folder is to be formed and form the folder unit at such position in response to a signal from the manipulatable input means resulting from the operation to compose a document.

18.     A word processor system capable of storing the text of documents in a recording medium, the title of a document and the image of folders, comprising:

a display means (100) for displaying on a screen (102), document control data stored in the recording medium;

a key input means (500) for keying in characters and symbols to the recording medium;

a manipulatable input means for handling a record of the document control data displayed on the screen including a designating means for designating a document or a folder to be handled;

a document control means for inputting the document control data in a document control data section at a determined location of the recording medium, or outputting data stored in the recording medium to display means, in dependence on an input signal from the key input means (500) or the manipulatable input means, and

said document control data comprises a first record, including a name and a level of a document recorded in the recording medium corresponding to such document, and a second record including a name and a level of a folder unit in which documents of a lower level are brought together; said second record being arranged preceding the first record of any documents included in such folder unit, said document control means is operable upon receipt of a signal from the manipulatable input means to provide a file display, to cause the display means (100) to successively display from the top to the bottom of the screen a list of at least those names of respective documents which are included in the record stored in the document control data section, said document control means further includes a folder specifying means for specifying a folder unit at the time of display of data connected with the folder unit, an editing means for editing the document control data of the screen (102) in response to a signal from the manipulatable input means, and a renewing means for renewing the document control data in correspondence with the editing, wherein said editing means is operable, in the event that after the designation of the document in said list, said designating means designates a position to which the document is moved, to move the document to such a position in response to a signal from the manipulatable input means resulting from the operation to move such document.

19.      A word processor system capable of storing the text of documents in a recording medium, the title of a document and the image of folders, comprising:

a display means (100) for displaying on a screen (102), document control data stored in the recording medium;

a key input means (500) for keying in characters and symbols to the recording medium;

a manipulatable input means for handling a record of the document control data displayed on the screen including a designating means for designating a document or a folder to be handled;

a document control means for inputting the document control data in a document control data section at a determined location of the recording medium, or outputting data stored in the recording medium to display means, in dependence on an input signal from the key input means (500) or the manipulatable input means, and

said document control data comprises a first record, including a name and a level of a document recorded in the recording medium corresponding to such document, and a second record including a name and a level of a folder unit in which documents of a lower level are brought together; said second record being arranged preceding the first record of any documents included in such folder unit, said document control means is operable upon receipt of a signal from the manipulatable input means to provide a file display, to cause the display means (100) to successively display from the top to the bottom of the screen a list of at least those names of respective documents which are included in the record stored in the document control data section, said document control means further includes a folder specifying means for specifying a folder unit at the time of display of data connected with the folder unit, an editing means for editing the document control data of the screen (102) in response to a signal from the manipulatable input means, and a renewing means for renewing the document control data in correspondence with the editing, wherein said editing means is operable, in the event that after the designation of the document in said list, said designating means designates a position at which the document is to be copied, to copy the document at such position in response to a signal from the manipulatable input means resulting from the operation to copy such document.

20.     In an improved word processor system having a printer (400), an image display (100), a keyboard (500), a word processing program, memory means for storing a program to enable a word processing mode of operation, means for executing the program including a pair of receptacles (301, 302) for receiving disks capable of storing data as a recording medium and means for storing and processing the input of the keyboard to permit display, revision, and editing of the text on the image display by the word processing program before providing a copy of the display from the printer, the improvement comprising:

means for simultaneously displaying a list of data files in the form of document titles and folder images from both disks inserted in the receptacles;

means for inputting document control data to be stored in the means for storing including a designating means for designating a document or a folder to be handled on the image displays, and

a document control means for inputting the document control data in a document control data section at a determined location of the recording medium, or outputting data stored in the recording medium to display whereby the operator reacts to the display as a prompt rather than being forced to generate commands to retrieve documents.

21.     A word processor which comprises, in combination:

a display means (100) for displaying characters and others on a screen (102);

a key input means (510) including a manipulatable input means utilizeable for keying in the characters and others and also for causing document control data to be displayed on the screen (102) or editing the document control data on the screen (102);

a printing means (400) for printing document data;

a document composing means for composing a document based on data inputed from the key input means (510), storing the document in a recording medium, and outputing it to the printing means (400); and

a document control means for inputing the document control data in a document control data section at a predetermined location of the recording medium, or outputing the data stored in the recording medium to the display means (100) in dependence on an input signal from the key input means, said document control data in the recording medium comprising a first record, having a name of the document, a level of the document and access information to a file of the recording medium corresponding to such document, said name, level and access information being recorded in the recording medium, and a second record having a name and a level of a folder for dividing for each unit of a group of documents of lower level to be brought together, said second record being arranged preceding the first record of documents included in said folder, said document control means being operable upon receipt from the manipulatable input means of a signal instructing a file display to cause the document name, the folder name and a list of data including the name of the document within the folder to be successively displayed on the screen (102) of said display means (100) from the record stored in the document control data section, said document control means including a folder specifying means for specifying a folder at the time of display of data connected with the folder.

22. A word processor as claimed in Claim 21, wherein in said list, said folder specifying means is a means operable to draw a line to divide at least a portion of the perimeter of the display of the folder.

23. A word processor as claimed in Claim 21, wherein in said list, said folder specifying means is a means for displaying a marking in front of the display of the folder name for indicating the folder.

24. A word processor as claimed in Claim 21, wherein said folder specifying means is a means for, in said list, displaying while the front of the folder name is displayed in either side from a position of the front of the display of the name of the document belonging to the folder.

25. A word processor as claimed in Claim 21, wherein said manipulatable input means includes a designating means for, in said list, designating a document or folder to be manipulated, and said document control means includes a folder opening means operable, after the display of the folder designated by said designating means in the list and in the event that no data of the document belonging to such folder is displayed, to cause the display means (100) to display the document in response to a control signal generated from the manipulatable input means for displaying data of such document on the screen (102).

26. A word processor as claimed in Claim 21, wherein said manipulatable input means includes a designating means for, in said list, designating a document or folder to be manipulated, and said document control means includes a folder closing means operable, after the display of the folder designated by said designating means in the list and in the event that the data of the document belonging to such folder is displayed, to cause the display means (100) to display the document in response to a control signal generated from the manipulatable input means for displaying data of such document on the screen (102).

27. A word processor which comprises, in combination:

a display means (100) for displaying on a screen (102), document control data stored in a recording medium;

a key input means (510) for keying in characters and others;

a manipulatable input means for handling a record of the document control data displayed on the screen; and

a document control means for inputing the document control data in a document control data section at a predetermined location of the recording medium, or outputing data stored in the recording medium to the display means, in dependence on an input signal from the key input means (510) or the manipulatable input means;

wherein said document control data comprises a first record, including a name and a level of a document recorded in the recording medium and access information to a file within the recording medium corresponding to such document, and a second record including a name and a level of a unit (hereinafter referred to as a folder) in which documents of lower level are brought together; said second record being arranged preceding the first record of the document included in such folder,

wherein said document control means is operable upon receipt from the manipulatable input means a signal, instructing of a file display, to cause the display means (100) to successively display from top to bottom on the screen (102) a list of at least names of respective documents included in the record stored in the document control data section,

wherein said document control means includes a folder specifying means for specifying a folder at the time of display of data connected with the folder, an editing means for editing the document control data on the screen (102) in response to a signal from the manipulatable input means, and a renewing means for renewing the document control data in correspondence with the edition.

28. A word processor as claimed in Claim 27, wherein said manipulatable input means includes a designating means for, in said list, designating a document or a folder to be handled, and wherein said editing means includes a folder closing means operable, in the even that, after the display in said list of the folder designated by said designating means no display of the document belonging to such folder takes place, and in response to a control signal from the manipulatable input means for deleting data of the document from the screen, to cause the display means to delete the display of such document from the screen (102).

29. A word processor as claimed in Claim 27, wherein said manipulatable input means includes a designating means for, in said list, designating a document or a folder to be handled, and wherein said editing means includes a folder opening means operable, in the even that, after the display in said list of the folder designated by said designating means display of the document belonging to such folder takes place, and in response to a control signal from the manipulatable input means for deleting data of the document from the screen, to cause the display means to delete the display of such document from the screen (102).

30.     A word processor as claimed in Claim 27, wherein said manipulatable input means includes a designating means for, in said list, designating a document or a folder to be handled, and wherein said editing means is operable to cause the display means to display an empty folder at at least a portion of said list and to, in the event that said designating means designates, after the designation of the display of the empty folder, a position at which a folder is to be formed, form the folder at such position in response to a signal from the manipulatable input means resulting from the operation to compose a document.

31.     A word processor as claimed in Claim 27, wherein said manipulatable input means includes a designating means for, in said list, designating a document or folder to be handled, and said editing means is operable, in the event that after the designation of a folder in said list said designating means designates a position to which the folder is to be copied or moved, to copy or move the folder at or to such position in response to a signal from the manipulatable input means resulting from the operation of folder copying or moving.

32.     A word processor as claimed in Claim 27, wherein said manipulatable input means includes a designating means for, in said list, designating a document or folder to be handled, and said editing means is operable, in the event that after the designation of a folder in said list said designating means designates a position to which the folder is to be moved, to move the folder at or to such position in response to a signal from the manipulatable input means resulting from the operation of folder moving.

33. A word processor as claimed in Claim 27, wherein said manipulatable input means includes a designating means for, in said list, designating a document or a folder to be handled, and said editing means is operable to delete a folder in response to the operation performed by the manipulatable input means to delete such folder after said designating means has designated the folder in said list.

34. A word processor as claimed in Claim 27, wherein said manipulatable input means includes a designating means for, in said list, designating a document to be handled, and said editing means is operable to cause the display means to display an empty document in at least a portion of said list and, in the event that after the designation of the display of the empty document said designating means designates a position at which a document is to be prepared, to prepare the document at such position in response to a signal from the manipulatable input means resulting from the operation to prepare the document.

35.      A word processor as claimed in Claim 27, wherein said manipulatable input means includes a designating means for, in said list, designating a document to be handled, and said editing means is operable, in the event that after the designation of the document in said list said designating means designates a position at which the document is to be copied, to copy the document at such position in response to a signal from the manipulatable input means resulting from the operation to copy such document.

36.      A word processor as claimed in Claim 27, wherein said manipulatable input means includes a designating means for designating in said list a document to be handled, and said editing means is operable, in the event that after the designation of the document in said list, said designating means designates a position to which the document is moved, to move the document to such position in response to a signal from the manipulatable input means resulting from the operation to move such document.

37.      A word processor as claimed in Claim 27, wherein said manipulatable input means includes a designating means for designating in said list a document to be handled, and said editing means is operable to delete a document in response to the operation performed by the manipulatable input means, after said designating means has designated such document in said list, to delete such document.

38.     A word processor as claimed in Claim 27, wherein said manipulatable input means includes a designating means for designating in said list a document or folder to be handled, and said editing means is operable, when a name of the document or folder designated by said designating means in said list is modified by the operation from the key input means, to effect a display corresponding to such modification.

39.     A word processor as claimed in Claim 27, wherein said manipulatable input means includes a designating means for designating in said list a document or folder to be handled, and said editing means is operable to arrange in alphabetical order documents included in the folder designated by the designating means, or documents in a folder to which the documents designated thereby belong.

40.     A word processor as claimed in Claim 27, wherein said manipulatable input means includes a designating means for designating in said list a document to be handled, and said editing means is operable to make a search on said list for the document designated by said key input means and to display said document on the screen (102).

## Fig.1

| Files | Pages | Created | Edited |
|---|---|---|---|
| 🗋 Blank Paper —3 | | | |
| 🗀 Empty Folder—5 | | | |
| 🗑 ═ The System—11 | created 1/08/85, 4:21 pm | 88% full | |
| 12 | | | |
| ═ 🗑 PCW-1 Data Diskette | created 12/13/84, 7:37 pm | 22% full | |
| 🗋 Sample Document 1 —21 | 5 pp. | 12/14/84 | 1/11/85 |
| 🗋 Sample Document 2 —21 | 4 pp. | 1/17/85 | 1/17/85 |
| 🗀 TECHNICAL REPORTS FOLDER —23 | 3 files | | |
| 🗋 File Specification —21 | 3 pp. | 12/14/84 | 1/17/85 |
| 🗋 Manual —21 | 2 pp. | 1/14/85 | 1/16/85 |
| 🗋 Summary —21 | 3 pp. | 12/14/84 | 1/11/85 |
| 🗀 PERSONAL FILES FOLDER —23 | 2 files | | |
| 🗋 Personal Document 1 —21 | 1 p. | 12/13/84 | 12/20/84 |
| 🗋 Personal Document 2 —21 | 1 p. | 12/13/84 | 1/19/85 |

40 —Thursday, January 17, 1985 1:58 pm          Insert

1/48

0200227

2/48

**Fig.2**

Fig.3

**Fig.4**

31  104  102

**Fig.5**

532 533 534 535   541 542 543 544

| Change | Delete | Move | Copy |
|--------|--------|------|------|
| Cancel 536 537 | | | Select |

531b
531a
531
530

| Menu + | Files − | Search X | Calc ÷ |
|--------|---------|----------|--------|
| 7 | 8 | 9 | CE |
| 4 | 5 | 6 | Clear |
| 1 | 2 | 3 | Enter |
| 0 | | | = |

545
540

**Fig.6**

LEVEL     0               1                    2

TITLE

| W.P. Data Floppy Disk |

Sample Document 1

Sample Document 2

TECHNICAL REPORTS FOLDER

File Specification

Manual

Summary

PERSONAL FILES FOLDER

Personal Document 1

Personal Document 2

**Fig. 7**

Start

#702 → Key Input

#704 Files key? — NO → #706 Document Input and Edition

#704 YES

#708 Files Display

#710 i = 1 Search Buffer Initialization

#760 To write Directory File in Disk

#720 Key Input

#722 Down Cursor Key? — YES → #724 Cursor Down

#722 NO

#726 Up Cursor Key? — YES → #728 Cursor Up

#726 NO

#730 Copy key? — YES → #732 Copy — NO / YES

#730 NO

#734 Move key? — YES → #736 Move — NO / YES

#734 NO

#738 Delete key? — YES → #740 Delete — NO / YES

#738 NO

#742 Change key? — YES → #744 Sort — NO / YES

#742 NO

#746 Select key? — YES → #748 Select — NO / YES

#746 NO

#750 Search key? — YES → #752 Search

#750 NO

#754 Warning Signal Generation

**Fig. 8 (a)**

**Fig. 13**

## Fig. 8 (b)

**(X)**

**P830** **(A)** — Type = C ?  →NO→ **P840** Type = F ? →NO→ **P860** Type = D & Level = I ? →NO→

**(B)**

- Type = C ? — YES ↓
- Type = F ? — YES ↓
- Type = D & Level = I ? — YES ↓

**P832** Display Diskette Marking at Left or Right Diskette Position

**P834** To Display Title (Entry Name)

**P836** To Display Dates of Composition & Renewal

**P838** To Display No. of Contents (Disk Storage Capacity)

**P842** To Display Folder Outer Framework and Marking

**P844** To Display Title (Folder Name)

**P846** To Display No. of Contents (No. of Documents)

**P862** To Display Document Marking

**P864** To Display Title (Document Name)

**P866** To Display No. of Contents (No. of Pages)

**P868** To Display Date of Composition

**P869** To Display Date of Renewal

**P870** To Advance Display Record Pointer one Place

**P872** Record Comp.? →NO→

**P880** YES ↓ To Display at Prompt Line

exit

0200227

7/48

# Fig.9

| Files | Pages | Created | Edited |
|---|---|---|---|
| ⊡ Blank Paper | | | |
| ⊟ Empty Folder | | | |
| ⊡ The System | created 1/08/85, 4:21pm | 88% full | |
| ⊟ PCW-1 Data Diskette | created 12/13/84, 7:37pm | 22% full | |
| ⊡ Sample Document 1 | 5 pp. | 12/14/84 | 1/11/85 |
| ⊡ Sample Document 2 | 4 pp. | 1/17/85 | 1/17/85 |
| ⊟ TECHNICAL REPORTS FOLDER | 3 files | | |
| ⊟ PERSONAL FILES FOLDER | 2 files | | |

30

22

4

## Fig. 10

```
              ┌─────────┐
              │  entry  │
              └─────────┘
                   │
                   ▼
            P1010                                    P1015
         ◇ Blank ◇      YES      ┌──────────────────────────┐
         ◇ Paper Position? ◇ ──────▶ │  To Move to Empty        │
            ◇          ◇           │  Folder Position         │ ────┐
                │ NO               └──────────────────────────┘     │
                ▼                                                    │
            P1020                                    P1025           │
         ◇ Empty ◇       YES      ┌──────────────────────────┐     │
         ◇ Folder Position? ◇ ─────▶ │  To Move to System       │     │
            ◇          ◇           │  Disk Entry Position     │ ────┤
                │ NO               └──────────────────────────┘     │
                ▼                                                    │
            P1030                                    P1035           │
         ◇ System ◇      YES      ┌──────────────────────────┐     │
         ◇ Disk Entry Posi- ◇ ────▶ │  To Move to Data Disk    │     │
         ◇ tion? ◇                  │  Entry Position and      │ ────┤
            ◇          ◇           │  to Set Record Pointer   │     │
                │ NO               └──────────────────────────┘     │
                ▼                                                    │
            P1040                                    P1045           │
         ◇ Position ◇    YES      ┌──────────────────────────┐     │
         ◇ of Closed Folder? ◇ ───▶ │  To Increment Contents   │     │
            ◇          ◇           │  of Record Pointer by 1  │ ────┤
                │ NO               └──────────────────────────┘     │
                ▼                                                    │
            P1050                                                    │
         ◇ Final ◇       YES                                        │
         ◇ Record Position? ◇ ───────────────────────────────────────┤
            ◇          ◇                                             │
                │ NO                                                 │
                ▼                                                    │
            P1060                                                    │
       ┌──────────────────┐                                         │
       │ To Advance Record│                                         │
       │ Pointer one Place│                                         │
       └──────────────────┘                                         │
                │  ◀────────────────────────────────────────────────┘
                ▼
            ┌─────────┐
            │  exit   │
            └─────────┘
```

**Fig.11**

entry
↓
**P1110**
Blank Paper Position? — YES →
↓ NO
**P1120** Empty Folder Position? — YES → **P1125** To Move to Blank Paper Position →
↓ NO
**P1130** System Disk Entry Position? — YES → **P1135** To Move to Empty Folder Position →
↓ NO
**P1140** Data Disk Entry Position? — YES → **P1145** To Move to System Disk Entry Position →
↓ NO
**P1150** Is Preceding Closed Folder? — YES → **P1155** To Decrement Record Pointer by No. of Contents of Preceding Closed Folder plus 1 →
↓ NO
**P1160** To Decrement Record Pointer by one
↓
exit

## Fig.12

```
         ┌─────────┐
         │  Entry  │
         └─────────┘
              │
              ▼
      P1210              P1212              P1214
   ╱◇────────◇╲       ╱◇────────◇╲     ┌────────────────┐
  ╱  Blank Paper?╲ YES╱   Enter    ╲ YES│ Blank Page Dis-│
  ╲              ╱───▶╲  Process   ╱───▶│ play (New Docu-│────┐
   ╲◇────────◇╱        ╲◇────────◇╱     │ ment)          │    │
        │ NO              │ NO          └────────────────┘    │
        │                 └──────────────────────────────┐   │
        ▼                                                 │   │
     P1220              P1222              P1224           │   │
   ╱◇────────◇╲       ╱◇────────◇╲     ┌────────────────┐ │   │
  ╱  Document? ╲  YES ╱   Enter    ╲ YES│ To Read out    │ │   │
  ╲            ╱─────▶╲  Process   ╱───▶│ Document from  │─┼───┤
   ╲◇────────◇╱        ╲◇────────◇╱     │ Disk and Dis-  │ │   │
        │ NO              │ NO          │ play it        │ │   │
        │                 │             └────────────────┘ │   ▼
        │                 └──────────────────────────┐     │ ┌──────────┐
        ▼                                             │     │ │ yes exit │
     P1230            P1232              P1234         │     │ └──────────┘
   ╱◇────────◇╲    ┌──────────┐      ┌────────────┐   │     │
  ╱  Closed    ╲YES│ To Open  │      │To Display  │   │     │
  ╲  Folder?   ╱──▶│ Folder   │─────▶│Documents   │───┤     │
   ╲◇────────◇╱    └──────────┘      │Within Folder│  │     │
        │ NO                         └────────────┘   │     │
        ▼                                             │     │
     P1240            P1242              P1244         │     │
   ╱◇────────◇╲    ┌──────────┐      ┌────────────┐   │     │
  ╱  Opened    ╲YES│ To Close │      │Files Display│  │     │
  ╲  Folder?   ╱──▶│ Folder   │─────▶│            │───┤     │
   ╲◇────────◇╱    └──────────┘      └────────────┘   │     │
        │ NO                                          │     │
        ▼                                             │     │
     P1250                                            │     │
  ┌──────────────┐                                    │     │
  │Warning Sound │                                    │     │
  │Generation    │────────────────────────────────────┘     │
  └──────────────┘                                           ▼
                                                        ┌──────────┐
                                                        │ no exit  │
                                                        └──────────┘
```

11/48

0200227

Fig. 14

entry

PI410
Type = F ?
NO

YES

PI414
Display Record
Pointer = Record
Pointer

PI412
Warning Sound
Generation

PI420
Type = D &
Level = 2 ?
NO → (A)

YES

PI422
To Display Folder Left-
framework, to Shift Cha-
racter down, & to Dis-
play Document Marking

exit

PI424
To Display Do-
cument Name

PI426
To Display No.
of Pages

PI427
To Display Date
of Composition

PI428
To Display Date
of Renewal

PI429
To Advance Dis-
play Record Po-
inter one Place

**Fig. 15**

0200227

13/48

```
        ┌──────────┐
        │  entry   │
        └────┬─────┘
             │
          PI502
    ┌─────────────────┐
    │ Reversed Dis-   │
    │ play of Title   │
    └────────┬────────┘
             │
          PI504
    ┌─────────────────┐
    │ Reversed Re-    │
    │ cord Pointer =  │
    │ Record Pointer  │
    └────────┬────────┘
```

PI510 / PI512 / PI514 — Blank Paper? YES → Move·Enter Process YES → Preparation of Empty Document

PI520 / PI522 / PI524 — Empty Folder? YES → Move·Enter Process YES → Preparation of Empty Folder

PI530 / PI532 / PI534 — Closed Folder? YES → Move·Enter Process YES → To Copy Closed Folder

PI540 / PI542 / PI544 — Opened Folder? YES → Move·Enter Process YES → To Copy Opened Folder

PI550 / PI552 / PI554 — Document? YES → Move·Enter Process YES → To Copy Document

PI560 — Warning Sound Generation

no exit

yes exit

Fig.16

```
              ( entry )
                  │
     ┌────────────┼──────────────────────────────────────────────┐
     │            ▼                                                │
     │     ┌─────────────┐                                         │
     │     │  Key Input  │──── PI602                               │
     │     └─────────────┘                                         │
     │            │                                                │
     │            ▼                      PI612                     │
     │          ╱ Down ╲  PI610    ┌──────────────┐                │
     │         ╱ Cursor  ╲────────▶│ Cursor  Down │───────────────▶│
     │         ╲  Key?   ╱  YES    └──────────────┘                │
     │          ╲      ╱                                           │
     │            │ NO                                             │
     │            ▼                      PI622                     │
     │          ╱  Up  ╲  PI620     ┌──────────────┐               │
     │         ╱ Cursor ╲──────────▶│  Cursor  Up  │──────────────▶│
     │         ╲  Key?  ╱   YES     └──────────────┘               │
     │          ╲     ╱                                            │
     │            │ NO                              PI632          │
     │            ▼                       ┌──────────────────┐     │
     │          ╱       ╲  PI630          │ Normal  Display  │     │
     │         ╱ Cancel  ╲───────────────▶│ of Title  of Re- │──▶( no exit )
     │         ╲  Key?   ╱    YES         │ cord pointed  by │
     │          ╲      ╱                  │ Reversed  Record │
     │            │ NO                    │ Pointer          │
     │            ▼                       └──────────────────┘
     │          ╱       ╲  PI640
     │         ╱  Enter  ╲─────────────▶( yes exit )
     │         ╲  Key?   ╱    YES
     │          ╲      ╱
     │            │ NO            PI650
     │            ▼
     │     ┌───────────────┐
     └─────│ Warning Sound │
           │ Generation    │
           └───────────────┘
```

## Fig. 17(a)

| Files | Pages | Created | Edited |
|---|---|---|---|
| ▯ Blank Paper | | | |
| ▯ Empty Folder | | | |

30

| ▤ ▬ The System | created 1/08/85, 4:21pm | 88% full |
|---|---|---|

| ▬ ▤ PCW-1 Data Diskette | created 12/13/84, 7:37pm | 22% full |
|---|---|---|

| | Pages | Created | Edited |
|---|---|---|---|
| ▯ Sample Document 1 | 5 pp. | 12/14/84 | 1/11/85 |
| ▯ Sample Document 2 | 4 pp. | 1/17/85 | 1/17/85 |
| ▱ TECHNICAL REPORTS FOLDER | 3 files | | |
| ▱ PERSONAL FILES FOLDER | 2 files | | |

## Fig. 17(b)

| Files | Pages | Created | Edited |
|---|---|---|---|

⌐ Blank Paper

⌐ **Empty Folder**

30 →

| | Pages | Created | Edited |
|---|---|---|---|
| The System | created 1/08/85 4:21pm | 88%full | |
| PCW-1 Data Diskette | created 12/13/84, 7:37pm | 22% full | |
| Sample Document 1 | 5 pp. | 12/14/84 | 1/11/85 |
| Sample Document 2 | 4 pp. | 1/17/85 | 1/17/85 |
| ☐ TECHNICAL REPORTS FOLDER | 3 files | | |
| ☐ PERSONAL FILES FOLDER | 2 files | | |

## Fig. 17(c)

| Files | Pages | Created | Edited |
|---|---|---|---|

⌐ Blank Paper

⌐ Empty Folder

30

31 →

| | Pages | Created | Edited |
|---|---|---|---|
| The System | created 1/08/85,4:21pm | 88% full | |
| PCW-1 Data Diskette | created 12/13/84, 7:37pm | 22%full | |
| Sample Document 1 | 5 pp. | 12/14/84 | 1/11/85 |
| Sample Document 2 | 4 pp. | 1/17/85 | 1/17/85 |
| ☐ TECHNICAL REPORTS FOLDER | 3 files | | |
| ☐ PERSONAL FILES FOLDER | 2 files | | |

## Fig. 17(d)

| Files | Pages | Created | Edited |
|---|---|---|---|

🗋 Blank Paper
🗀 Empty Folder

| 🖬 — The System | created 1/08/85, 4:21pm | 88% full | |
|---|---|---|---|

🖬 PCW-1 Data Diskette  created 12/13/84, 7:37pm  22% full

| 🗋 Sample Document 1 | 5 pp. | 12/14/84 | 1/11/85 |
| 🗋 Sample Document 2 | 4 pp. | 1/17/85 | 1/17/85 |

🗀

🗀 TECHNICAL REPORTS FOLDER    3 files

🗀 PERSONAL FILES FOLDER    2 files

**30**
**31**

## Fig. 17(e)

| Files | Pages | Created | Edited |
|---|---|---|---|

🗋 Blank Paper
🗀 Empty Folder

| 🖬 — The System | created 1/08/85, 4:21pm | 88% full | |
|---|---|---|---|

🖬 PCW-1 Data Diskette  created 12/13/84, 7:37pm  22% full

| 🗋 Sample Document 1    **31** | 5 pp. | 12/14/84 | 1/11/85 |
| 🗋 Sample Document 2 | 4 pp. | 1/17/85 | 1/17/85 |

🗀 SAMPLE FOLDER    0 files

🗀 TECHNICAL REPORTS FOLDER    3 files

🗀 PERSONAL FILES FOLDER    2 files

**30**

## Fig. 18(a)

| Files | Pages | Created | Edited |
|---|---|---|---|
| ▤ Blank Paper | | | |
| ▢ Empty Folder | | | |
| ▤ ═ The System | created 1/08/85, 4:21pm | 88%full | |
| ═ ▤ PCW-1 Data Diskette | created 12/13/84, 7:37pm | 22%full | |
| ▤ Sample Document 1 | 5 pp. | 12/14/84 | 1/11/85 |
| ▤ Sample Document 2 | 4 pp. | 1/17/85 | 1/17/85 |
| ▢ TECHNICAL REPORTS FOLDER | 3 files | | |
| ▢ PERSONAL FILES FOLDER | 2 files | | |

30

## Fig. 18(b)

| Files | Pages | Created | Edited |
|---|---|---|---|
| ▤ Blank Paper | | | |
| ▢ Empty Folder | | | |
| ▤ ═ The System | created 1/08/85, 4:21pm | 88% full | |
| ═ ▤ PCW-1 Data Diskette | created 12/13/84, 7:37 pm | 22% full | |
| ▢ | 2 files | | |
| ▤ Sample Document 1 | 5 pp. | 12/14/84 | 1/11/85 |
| ▤ Sample Document 2 | 4 pp. | 1/17/85 | 1/17/85 |
| ▢ TECHNICAL REPORTS FOLDER | 3 files | | |
| ▢ PERSONAL FILES FOLDER | 2 files | | |

30
31

Fig.19

0200227

19/48

## Fig.20(a)

| Files | Pages | Created | Edited |
|---|---|---|---|

⌸ Blank Pdber
⌸ Empty Folder

| ⎙  The System | created 1/08/85, 4:21pm | 88% full |
|---|---|---|

30 →
31 —

| ⎙ PCW-1 Data Diskette created 12/13/84, 7:37pm | 22% full | | |
|---|---|---|---|
| ⌸ Sample Document 1 | 5 pp. | 12/14/84 | 1/11/85 |
| ⌸ Sample Document 2 | 4 pp. | 1/17/85 | 1/17/85 |
| ⌸ TECHNICAL REPORTS FOLDER | 3 files | | |
| ⌸ PERSONAL FILES FOLDER | 2 files | | |

## Fig.20(b)

| Files | Pages | Created | Edited |
|---|---|---|---|

⌸ Blank Paper
⌸ Empty Folder

| ⎙  The System | created 1/08/85, 4:21pm | 88% full |
|---|---|---|

30 →
31 —

| ⎙ PCW-1 Data Diskette created 12/13/84, 7:37pm | 22% full | | |
|---|---|---|---|
| ⌸ Sample Document 1 | 5 pp. | 12/14/84 | 1/11/85 |
| ⌸ | 0 pp. | 1/17/85 | 1/17/85 |
| ⌸ Sample Document 2 | 4 pp. | 1/17/85 | 1/17/85 |
| ⌸ TECHNICAL REPORTS FOLDER | 3 files | | |
| ⌸ PERSONAL FILES FOLDER | 2 files | | |

*Fig. 21*

Flowchart:

entry
↓
P2102 — To Advance Record Pointer
↓
P2104 — Record? — NO →
↓ YES
P2106 — To Move Records Downwards
↓
P2110 — To Clear Record. Type=D
↓
P2112 — To Read Hour from RTC
↓
P2114 — To Prepare New File Name
↓
P2116 — To Prepare File of New File Name

P2118 — Dating
↓
P2120 — Folder above? — YES → P2122 — Level = 2 → P2124 — To Add 1 to Folder Above
↓ NO
P2126 — Level = 1
↓
P2130 — To Input Document Name
↓
P2132 — Title = Document Name
↓
exit

## Fig.22(a)

| Files | | Pages | Created | Edited |
|---|---|---|---|---|
| 🗎 Blank Paper | | | | |
| 📁 Empty Folder | | | | |
| 💾 The System | created 1/08/85, 4:21 pm | 88% full | | |
| 💾 PCW-1 Data Diskette | created 12/13/84, 7:37 pm | 22% full | | |
| 🗎 Sample Document 2 | | 4 pp. | 1/17/85 | 1/17/85 |
| 📁 TECHNICAL REPORTS FOLDER | | 3 files | | |
| 📁 PERSONAL FILES FOLDER | | 2 files | | |
| 📁 SAMPLE FOLDER | | 1 files | | |
| 🗎 Sample Document 1 | | 5 pp. | 12/14/84 | 1/11/85 |

30 ⟶   31

## Fig.22(b)

| Files | | Pages | Created | Edited |
|---|---|---|---|---|
| 🗎 Blank Paper | | | | |
| 📁 Empty Folder | | | | |
| 💾 The System | created 1/08/85, 4:21 pm | 88% full | | |
| 💾 PCW-1 Data Diskette | created 12/13/84, 7:37 pm | 22% full | | |
| 🗎 Sample Document 2 | | 4 pp. | 1/17/85 | 1/17/85 |
| 📁 TECHNICAL REPORTS FOLDER | | 3 files | | |
| 📁 PERSONAL FILES FOLDER | | 2 files | | |
| 📁 SAMPLE FOLDER | | 1 files | | |
| 🗎 Sample Document 1 | | 5 pp. | 12/14/84 | 1/11/85 |

30 ⟶

## Fig 22(c)

| Files | | Pages | Created | Edited |
|---|---|---|---|---|
| ⊡ Blank Paper | | | | |
| ⊡ Empty Folder | | | | |
| ⊟ The System | created 1/08/85, 4:21pm | | 88% full | |
| ⊟ PCW-1 Data Diskette | created 12/13/84, 7:37pm | | 22% full | |
| ⊡ Sample Document 2 | | 4 pp. | 1/17/85 | 1/17/85 |
| ▭ TECHNICAL REPORTS FOLDER | | 3 files | | |
| ▭ PERSONAL FILES FOLDER | | 2 files | | |
| ▭ SAMPLE FOLDER | | 2 files | | |
| ⊡ Sample Document 1 | | 5 pp. | 12/14/84 | 1/11/85 |
| ⊡ Sample Document 1 | | 5 pp. | 1/17/85 | 1/17/85 |

30

31

## Fig 24(a)

| Files | | Pages | Created | Edited |
|---|---|---|---|---|
| ⊡ Blank Paper | | | | |
| ⊡ Empty Folder | | | | |
| ⊟ The System | created 1/08/85, 4:21pm | | 88% full | |
| ⊟ PCW-1 Data Diskette | created 12/13/84, 7:37pm | | 22% full | |
| ⊡ Sample Document 2 | | 4 pp. | 1/17/85, | 1/17/85 |
| ▭ SAMPLE FOLDER | | 1 files | | |
| ▭ TECHNICAL REPORTS FOLDER | | 3 files | | |
| ▭ PERSONAL FILES FOLDER | | 2 files | | |

30

31

Fig.23

```
                                      ┌─────────┐
                                      │  entry  │
                                      └────┬────┘
                                           │        P2302
                                      ┌────▼────────┐
                                      │ To Advance  │
                                      │Record Pointer│
                                      └────┬────────┘
                                           │      P2304
                                        ╱──▼──╲      NO
                                      ╱ Record ? ╲──────┐
                                      ╲         ╱       │
                                        ╲──┬──╱         │
                                      YES │   P2306     │
                                      ┌────▼────────┐   │
                                      │To Move Re-  │   │
                                      │cords Down-  │   │
                                      │wards        │   │
                                      └────┬────────┘   │
                                           │◄───────────┘
                                      ┌────▼────────┐ P2310
                                      │  To  Copy   │
                                      └────┬────────┘
                                      ┌────▼────────┐ P2320
                                      │To Read Hour │
                                      │from RTC     │
                                      └────┬────────┘
                                      ┌────▼────────┐
                                      │To Prepare   │ P2322
                                      │New File Name │
                                      └────┬────────┘
                                      ┌────▼────────┐
                                      │To Copy Old  │ P2324
                                      │File in New  │
                                      │File         │
                                      └─────────────┘
```

P2326

Dating

P2330

Folder above?

P2336   NO         YES   P2332

Level of Cop-ied Document = 1

Level of Cop-ied Document = 2

P2334

To Add 1 to Folder Cont. No.

exit

## Fig.24(b)

| Files | Pages | Created | Edited |
|---|---|---|---|

🗇 Blank Paper
🗀 Empty Folder

⧉ ▬ The System    created 1/08/85, 4:21pm    88% full

▬ ⧉ PCW-1 Data Diskette  created 12/13/84, 7:37pm  22% full

30 →

🗇 Sample Document 2    4 pp.    1/17/85,  1/17/85

🗀 | SAMPLE FOLDER |    1 files

🗀 TECHNICAL REPORTS FOLDER    3 files

🗀 PERSONAL FILES FOLDER    2 files

## Fig.24(c)

| Files | Pages | Created | Edited |
|---|---|---|---|

🗇 Blank Paper
🗀 Empty Folder

⧉ ▬ The System    created 1/08/85, 4:21pm    88% full

▬ ⧉ PCW-1 Data Diskette  created 12/13/84, 7:37pm  22% full

30 →

🗇 Sample Document 2    4 pp.    1/17/85,  1/17/85

🗀 | SAMPLE FOLDER |    1 files

🗀 TECHNICAL REPORTS FOLDER    3 files

31 → 🗀 PERSONAL FILES FOLDER    2 files

0200227

## Fig.24(d)

| Files | Pages | Created | Edited |
|---|---|---|---|
| 🗂 Blank Poper | | | |
| 📁 Empty Folder | | | |
| 💾 ⎯ The System | created 1/08/85, 4:21pm | 88% full | |
| ⎯ 💾 PCW-1 Data Diskette created 12/13/84, 7:37pm 22% full | | | |
| 🗂 Sample Document 2 | 4 pp. | 1/17/85, | 1/17/85 |
| 📁 SAMPLE FOLDER | 1 files | | |
| 📁 TECHNICAL REPORTS FOLDER | 3 files | | |
| 📁 PERSONAL FILES FOLDER | 2 files | | |
| 📁 SAMPLE FOLDER | 1 files | | |

30

31

## Fig.25(a)

| Files | Pages | Created | Edited |
|---|---|---|---|
| 🗂 Blank Paper | | | |
| 📁 Empty Folder | | | |
| 💾 ⎯ The System | created 1/08/85, 4:21pm | 88% full | |
| ⎯ 💾 PCW-1 Data Diskette created 12/13/84, 7:37pm 22% full | | | |
| 🗂 Sample Document 2 | 4 pp. | 1/17/85 | 1/17/85 |
| 📁 TECHNICAL REPORTS FOLDER | 3 files | | |
| 📁 PERSONAL FILES FOLDER | 2 files | | |
| 🗂 Personal Document 1 | 1 p. | 12/13/84 | 12/20/84 |
| 🗂 Personal Document 2 | 1 p. | 12/13/84 | 1/19/85 |
| 📁 SAMPLE FOLDER | 1 files | | |

30

31

**Fig.25(b)**

| Files | | Pages | Created | Edited |
|---|---|---|---|---|
| 🗋 Blank Paper | | | | |
| 🗀 Empty Folder | | | | |

The System    created 1/08/85, 4:21pm    88% full

30 →

PCW-1 Data Diskette created 12/13/84, 7:37pm    22% full

| 🗋 Sample Document 2 | 4 pp. | 1/17/85 | 1/17/85 |
|---|---|---|---|
| 🗀 TECHNICAL REPORTS FOLDER | 3 files | | |
| 🗀 PERSONAL FILES FOLDER | 2 files | | |
|   🗋 Personal Document 1 | 1 p. | 12/13/84 | 12/20/84 |
|   🗋 Personal Document 2 | 1 p. | 12/13/84 | 1/19/85 |
| 🗀 SAMPLE FOLDER | 1 files | | |

**Fig.25(c)**

| Files | | Pages | Created | Edited |
|---|---|---|---|---|
| 🗋 Blank Paper | | | | |
| 🗀 Empty Folder | | | | |

The System    created 1/08/85, 4:21pm    88% full

30 →

31 —

PCW-1 Data Diskette created 12/13/84, 7:37pm    22% full

| 🗋 Sample Document 2 | 4 pp. | 1/17/85 | 1/17/85 |
|---|---|---|---|
| 🗀 TECHNICAL REPORTS FOLDER | 3 files | | |
| 🗀 PERSONAL FILES FOLDER | 2 files | | |
|   🗋 Personal Document 1 | 1 p. | 12/13/84 | 12/20/84 |
|   🗋 Personal Document 2 | 1 p. | 12/13/84 | 1/19/85 |
| 🗀 SAMPLE FOLDER | 1 files | | |

## Fig.25(d)

| Files | Pages | Created | Edited |
|---|---|---|---|
| ⊡ Blank Paper | | | |
| ◻ Empty Folder | | | |

| ▣ ▬ The System | created 1/08/85, 4:21pm | 88% full | |
|---|---|---|---|

| ▣ PCW-1 Data Diskette created 12/13/84, 7:37pm | | 22% full | |
|---|---|---|---|
| ⊡ Sample Document 2 | 4 pp. | 1/17/85 | 1/17/85 |
| ◻ PERSONAL FILES FOLDER | 0 files | | |
| ◻ TECHNICAL REPORTS FOLDER | 3 files | | |
| ◻ PERSONAL FILES FOLDER | 2 files | | |
| ⊡ Personal Document 1 | 1 p. | 12/13/84 | 12/20/84 |
| ⊡ Personal Document 2 | 1 p. | 12/13/84 | 1/19/85 |
| ◻ SAMPLE FOLDER | 1 files | | |

30
31

## Fig.29(a)

| Files | Pages | Created | Edited |
|---|---|---|---|
| ⊡ Blank Paper | | | |
| ◻ Empty Folder | | | |

| ▣ ▬ The System | created 1/08/85, 4:21pm | 88% full | |
|---|---|---|---|

| ▣ PCW-1 Data Diskette created 12/13/84, 7:37pm | | 22% full | |
|---|---|---|---|
| ⊡ Sample Document 1 | 5 pp. | 12/14/84 | 1/11/85 |
| ⊡ Sample Document 2 | 4 pp. | 1/17/85 | 1/17/85 |
| ◻ SAMPLE FOLDER | 0 files | | |
| ◻ TECHNICAL REPORTS FOLDER | 3 files | | |
| ◻ PERSONAL FILES FOLDER | 2 files | | |

30
31

Fig.26

entry

P2602 — Cont. Buffer = 0

P2604 — Closed Folder?
- YES → P2606 — To Advance Record Pointer
- NO → P2608

P2608 — To Advance Record Pointer One Place

P2610 — Folder ?
- YES →
- NO → P2612

P2612 — Cont. Buffer = No. of Document from Record Pointer to Next Folder

P2614 — Folder above?
- NO →
- YES → P2616

P2616 — To Subtract Cont.Buffer Value from No. of Pre. Folder

P2620 — Record ?
- YES → P2622 — To Move Record Downwards
- NO →

P2624 — Reversed Record Pointer > Record Pointer
- YES → P2626 — To Advance Record Pointer
- NO → P2628 — To Copy Record pointed by Reversed Record Pointer

P2630 — To Advance Record Pointer One Place

P2632 — To Read Hour from RTC

P2634 — To Prepare New File Name

P2636 — To Copy Old File In New File

P2638 — Dating

P2640 — Loop?
- NO →
- YES → P2642 — To Add Cont. Buffer Value to No. off Folder

exit

30/48

*Fig. 27*

```
                                          ┌──────────┐
                                          │  entry   │
                                          └────┬─────┘
                              P2702            │
                                          ┌────┴─────┐
                                          │Cont. Buffer│
                                          │   = 0      │
                                          └────┬──────┘
                         P2704               │
                                          ╱──┴──╲      YES
                                         ╱ Closed ╲──────────┐
                                         ╲ Folder?╱          │
                         P2708            ╲──┬──╱ NO   P2706 │
                                            │                │
                   ┌─────────────┐    ┌─────┴──────┐   ┌─────┴──────────┐
            P2720  │             │    │To Advance  │   │To Advance      │
         ╱─────╲   │             │    │Record Point│   │Record Pointer  │
    NO  ╱ Record?╲ │             │    │er One Place│   │No. of Folder +1│
    ┌───╲        ╱ │             │    └─────┬──────┘   └────────┬───────┘
    │    ╲──┬──╱   │       P2710   │                 │
    │       │ YES  P2722         ╱──┴──╲     YES      │
    │   ┌────┴──────┐            ╱ Closed ╲───────────┤
    │   │To Move Record│         ╲ Folder?╱           │
    │   │downwards     │   P2712  ╲──┬──╱ NO          │
    │   └────┬────────┘            │                  │
    │        │           ┌─────────┴──────┐           │
    │        │           │Cont. Buffer    │           │
    │   P2724│           │=No. of Do-     │           │
    │     ╱──┴──╲        │cuments         │           │
    │    ╱Reversed╲      └─────────┬──────┘           │
    │   ╱Record    ╲      P2714    │                  │
P2726│  ╲Pointer    ╱            ╱──┴──╲     NO        │
  ╱──┴──╲╲Record    ╱           ╱ Folder ╲────────────┤
 ╱ YES   ╲╲Pointer?╱            ╲ Above? ╱            │
┌─┴───────┐╲──┬──╱ NO   P2716    ╲──┬──╱ YES          │
│To Advance│  │           ┌────────┴───────┐          │
│Reversed  │  │           │To Subtract Co- │          │
│Record    │  │           │nt Buffer Value │          │
│One Place │  │           │from Cont. No.of│          │
└─┬────────┘  │           │pre. Folder     │          │
  │           │           └────────┬───────┘          │
  └───────────┤                    └──────────────────┤
         P2728│                                        │
       ┌──────┴────────┐                               │
       │To Copy Folder │                               │
       │from Reversed Re│                              │
       │cord Pointer to │                              │
       │Record Pointer  │                              │
       └──────┬────────┘                               │
       ┌──────┴────────┐                               │
P2730  │Cont. No. of Fo-│                              │
       │lder = Cont.    │                              │
       │Buffer          │                              │
       └──────┬────────┘                               │
          ┌───┴────┐                                   │
          │  exit  │◄──────────────────────────────────┘
          └────────┘
```

*Fig.28*

```
        ( entry )
            |        P2802
  +---------------------+
  | Reversed Display    |
  | of Record Title     |
  | Pointed by Record   |
  | Pointer             |        P2804
  +---------------------+
            |
  +---------------------+
  | Reversed Record     |
  | Pointer = Record    |
  | Pointer             |
  +---------------------+
```

P2810    Closed Folder?    YES → P2818 Move Enter    YES → P2814 Closed Folder Move
              NO                          NO

P2820    Opened Folder?    YES → P2822 Move Enter    YES → P2824 Opened Folder Move
              NO                          NO

P2830    Document?    YES → P2832 Move Enter    YES → P2834 Document Move
              NO                          NO

P2840    Warning Sound Generation

( no exit )          ( yes exit )

## Fig 29(b)

| | Pages | Created | Edited |
|---|---|---|---|
| **Files** | | | |
| ⊡ Blank Paper | | | |
| ⌂ Empty Folder | | | |
| ⊡ ▬ The System created 1/08/85, 4:21pm 88%full | | | |
| ▬ ⊡ PCW-1 Data Diskette created 12/13/84, 7:37pm 22% full | | | |
| ⊡ Sample Documet 1 | 5 pp. | 12/14/84 | 1/11/85 |
| ⊡ Sample Document 2 | 4 pp. | 1/17/85 | 1/17/85 |
| ⌂ SAMPLE FOLDER | 0 files | | |
| ⌂ TECHNICAL REPORTS FOLDER | 3 files | | |
| ⌂ PERSONAL FILES FOLDER | 2 files | | |

30

## Fig.29(c)

| | Pages | Created | Edited |
|---|---|---|---|
| **Files** | | | |
| ⊡ Blank Paper | | | |
| ⌂ Empty Folder | | | |
| ⊡ ▬ The System created 1/08/85, 4:21pm 88%full | | | |
| ▬ ⊡ PCW-1 Data Diskette created 12/13/84, 7:37pm 22% full | | | |
| ⊡ Sample Document 1 | 5 pp. | 12/14/84 | 1/11/85 |
| ⊡ Sample Document 2 | 4 pp. | 1/17/85 | 1/17/85 |
| ⌂ SAMPLE FOLDER | 0 files | | |
| ⌂ TECHNICAL REPORTS FOLDER | 3 files | | |
| ⌂ PERSONAL FILES FOLDER | 2 files | | |

30
31

32/48

0200227

## Fig.29(d)

| Files | Pages | Created | Edited |
|---|---|---|---|
| ▱ Blank Paper | | | |
| ▱ Empty Folder | | | |

▱ The System     created 1/08/85, 4:21pm    88% full

▱ PCW-1 Data Diskette created 12/13/84 7:37pm   22% full

| ▱ Sample Document 2 | 4 pp. | 1/17/85, | 1/17/85 |
|---|---|---|---|
| ▱ SAMPLE FOLDER | 1 files | | |
| ▱ Sample Document 1 | 5 pp. | 12/14/84 | 1/11/85 |
| ▱ TECHNICAL REPORTS FOLDER | 3 files | | |
| ▱ PERSONAL FILES FOLDER | 2 files | | |

30

31

## Fig.31(a)

| Files | Pages | Created | Edited |
|---|---|---|---|
| ▱ Blank Paper | | | |
| ▱ Empty Folder | | | |

▱ The System     created 1/08/85, 4:21pm    88% full

▱ PCW-1 Data Diskette created 12/13/84, 7:37pm   22% full

| ▱ Sample Document 2 | 4 pp. | 1/17/85, | 1/17/85 |
|---|---|---|---|
| ▱ TECHNICAL REPORTS FOLDER | 3 files | | |
| ▱ SAMPLE FOLDER | 1 files | | |
| ▱ PERSONAL FILES FOLDER | 2 files | | |

30

31

**Fig.30**

```
                    ┌──────────────┐
                    │    entry     │
                    └──────┬───────┘
                           │
        P3002          ◇ Folder Before      YES      ┌─────────────────┐
                      Reversed Re-     ──────────────▶│ To Subtract Fo- │  P3004
                       cord Pointer ◇                 │ lder Cont. No. by 1 │
                           │ NO                       └────────┬────────┘
                           │                                   │
        P3010          ┌───▼──────────┐                 ┌──────▼─────────┐
                       │ To Retract Re-│                │ Folder Display │  P3006
                       │ cord in Record│                └────────────────┘
                       │ Buffer        │
                       └───┬──────────┘
                           │
        P3012          ◇ Record Pointer       NO
                       Reversed Re- ──────────────────┐
                        cord Pointer? ◇               │
                           │ YES                      │
        P3014          ┌───▼──────────┐        ┌──────▼─────────┐
                       │ To Move Record│        │ To Move Record │  P3016
                       │ from (Reversed Re-│    │ from Record Poin-│
                       │ cord Pointer+1) to│    │ ter to (Reversed │
                       │ Record Pointer│        │ Record Pointer) │
                       └───┬──────────┘        └──────┬─────────┘
                           │◀─────────────────────────┘
        P3018          ┌───▼──────────┐
                       │ To Restore Record│
                       │ Buffer Cont. to │
                       │ Record Pointer │
                       └───┬──────────┘
                           │
        P3020          ◇ Folder Before        NO
                       Record Poin- ──────────────────┐
                          ter? ◇                       │
                           │ YES                       │
        P3022          ┌───▼──────────┐                │
                       │ To Open Folder│                │
                       └───┬──────────┘                │
                           │                            │
        P3024          ┌───▼──────────┐        ┌───────▼────────┐
                       │ To Increase Folder│    │ To Set to 1    │  P3028
                       │ Cont.No. by 1 │        │ Level of Docu- │
                       └───┬──────────┘        │ ment Moved     │
                           │                    └───────┬────────┘
        P3026          ┌───▼──────────┐                │
                       │ To Set to 2 Le-│               │
                       │ vel of Document│               │
                       │ Moved         │                │
                       └───┬──────────┘                │
                           │◀────────────────────────────┘
                    ┌──────▼───────┐
                    │    exit      │
                    └──────────────┘
```

**Fig.31(b)**

| Files | Pages | Created | Edited |
|---|---|---|---|
| ⊟ Blank Paper | | | |
| ⊟ Empty Folder | | | |

▣ The System created 1/08/85 4:21pm 88% full

▣ PCW-1 Data Diskette created 12/13/84, 7:37pm 22% full

⊟ Sample Document 2 4 pp. 1/17/85, 1/17/85

⊡ TECHNICAL REPORTS FOLDER 3 files

⊡ SAMPLE FOLDER 1 files

⊡ PERSONAL FILES FOLDER 2 files

30

**Fig.31(c)**

| Files | Pages | Created | Edited |
|---|---|---|---|
| ⊟ Blank Paper | | | |
| ⊟ Empty Folder | | | |

▣ The System created 1/08/85, 4:21pm 88% full

▣ PCW-1 Data Diskette created 12/13/84, 7:37pm 22% full

30

⊟ Sample Document 2 4 pp. 1/17/85, 1/17/85

31

⊡ TECHNICAL REPORTS FOLDER 3 files

⊡ SAMPLE FOLDER 1 files

⊡ PERSONAL FILES FOLDER 2 files

## Fig.31(d)

| Files | | Pages | Created | Edited |
|---|---|---|---|---|
| ⊡ Blank Paper | | | | |
| ☐ Empty Folder | | | | |
| ⊡ The System | created 1/08/85, 4:21pm | | 88% full | |
| ⊡ PCW-1 Data Diskette | created 12/13/84, 7:37pm | | 22% full | |
| ⊡ Sample Document 2 | | 4 pp. | 1/17/85, | 1/17/85 |
| ☐ SAMPLE FOLDER | | 1 files | | |
| ☐ TECHNICAL REPORTS FOLDER | | 3 files | | |
| ☐ PERSONAL FILES FOLDER | | 2 files | | |

30

31

## Fig.32(a)

| Files | | Pages | Created | Edited |
|---|---|---|---|---|
| ⊡ Blank Paper | | | | |
| ☐ Empty Folder | | | | |
| ⊡ The System | created 1/08/85, 4:21pm | | 88% full | |
| ⊡ PCW-1 Data Diskette | created 12/13/84, 7:37pm | | 22% full | |
| ⊡ Sample Document 2 | | 4 pp. | 1/17/85 | 1/17/85 |
| ☐ TECHNICAL REPORTS FOLDER | | 3 files | | |
| ☐ PERSONAL FILES FOLDER | | 2 files | | |
| ⊡ Personal Document 1 | | 1 p. | 12/13/84 | 12/20/84 |
| ⊡ Personal Document 2 | | 1 p. | 12/13/84 | 1/19/85 |
| ☐ SAMPLE FOLDER | | 1 files | | |

30

31

0200227

## Fig.32(b)

| Files | Pages | Created | Edited |
|-------|-------|---------|--------|
| ⊟ Blank Paper | | | |
| ▱ Empty Folder | | | |

| ▣ ▬ The System | created 1/08/85, 4:21pm | 88% full |

| ▣ PCW-1 Data Diskette created 12/13/84, 7:37pm | 22% full | | |
|---|---|---|---|
| ⊟ Sample Document 2 | 4 pp. | 1/17/85 | 1/17/85 |
| ▱ TECHNICAL REPORTS FOLDER | 3 files | | |
| ▱ PERSONAL FILES FOLDER | 2 files | | |
|   ⊟ Personal Document 1 | 1 p. | 12/13/84 | 12/20/84 |
|   ⊟ Personal Document 2 | 1 p. | 12/13/84 | 1/19/85 |
| ▱ SAMPLE FOLDER | 1 files | | |

30

## Fig.32(c)

| Files | Pages | Created | Edited |
|-------|-------|---------|--------|
| ⊟ Blank Paper | | | |
| ▱ Empty Folder | | | |

| ▣ ▬ The System | created 1/08/85, 4:21pm | 88% full |

| ▣ PCW-1 Data Diskette created 12/13/84, 7:37pm | 22% full | | |
|---|---|---|---|
| ⊟ Sample Document 2 | 4 pp. | 1/17/85 | 1/17/85 |
| ▱ TECHNICAL REPORTS FOLDER | 3 files | | |
| ▱ PERSONAL FILES FOLDER | 2 files | | |
|   ⊟ Personal Document 1 | 1 p. | 12/13/84 | 12/20/84 |
|   ⊟ Personal Document 2 | 1 p. | 12/13/84 | 1/19/85 |
| ▱ SAMPLE FOLDER | 1 files | | |

30

**Fig.32(d)**

| Files | Pages | Created | Edited |
|---|---|---|---|
| 🗐 Blank Paper | | | |
| 🗀 Empty Folder | | | |

The System     created 1/08/85, 4:21pm   88% full

PCW-1 Data Diskette created 12/13/84, 7:37pm 22% full

30 →
31 →

| 🗀 PERSONAL FILES FOLDER | 1 files | | |
| 🗐 Sample Document 2 | 4 pp. | 1/17/85, | 1/17/85 |
| 🗀 TECHNICAL REPORTS FOLDER | 5 files | | |
| 🗀 SAMPLE FOLDER | 1 files | | |

**Fig.36(a)**

| Files | Pages | Created | Edited |
|---|---|---|---|
| 🗐 Blank Paper | | | |
| 🗀 Empty Folder | | | |

The System     created 1/08/85, 4:21pm   88% full

PCW-1 Data Diskette created 12/13/84, 7:37pm 22% full

| 🗐 Sample Document 2 | 4 pp. | 1/17/85, | 1/17/85 |
| 🗀 SAMPLE FOLDER | 1 files | | |
| 🗀 TECHNICAL REPORTS FOLDER | 3 files | | |
| 🗀 PERSONAL FILES FOLDER | 2 files | | |
| 🗀 SAMPLE FOLDER | 1 files | | |

30 →
31 →

Fig. 33

39/48

0200227

# Fig. 34

```
        ┌──────────┐
        │  entry   │
        └────┬─────┘
             │
    ┌────────┴────────┐
    │ Opened Folder   │──── P3402
    │     Copy        │
    └────────┬────────┘
             │
    ┌────────┴────────┐
    │ Record Pointer= │──── P3404
    │ Reversed Record │
    │ Pointer         │
    └────────┬────────┘
             │
    ┌────────┴────────┐
    │ Opened Folder   │──── P3406
    │    Delete       │
    └────────┬────────┘
             │
        ┌────┴─────┐
        │   exit   │
        └──────────┘
```

# Fig. 35

```
                    ┌──────────┐
                    │  entry   │
                    └────┬─────┘
                         │         P3502
              ┌──────────┴──────────┐
              │ Reversed Display    │
              │ of Record Title     │
              │ pointed by Re-      │
              │ cord Pointer        │
              └──────────┬──────────┘
                         │
          P3510          │                   P3520
        ┌────────┐       │        ┌──────────┐
       ╱ Opened   ╲  NO  │       ╱ Document? ╲  NO
      ╱  Folder?   ╲─────┼──────╱             ╲──────┐
      ╲            ╱     │      ╲             ╱       │
       ╲          ╱      │       ╲           ╱        │
        └───┬────┘       │        └────┬────┘    ┌────┴────────┐
          YES│           │          YES│         │ Warning Sound│
         P3512           │         P3522          │ Generation  │
        ┌────────┐       │        ┌──────────┐   └────┬────────┘
       ╱ Enter    ╲  NO  │       ╱ Enter     ╲  NO   │  P3530
      ╱  Pro.?     ╲─────┤      ╱  Pro.?      ╲──────┤
       ╲          ╱      │       ╲           ╱       │
        └───┬────┘       │        └────┬────┘        │
          YES│  P3514     │          YES│  P3524     │
    ┌────────┴────────┐  │    ┌─────────┴───────┐    │
    │ Opened Folder   │  │    │   Document      │    │
    │    Delete       │  │    │   Delete        │    │
    └────────┬────────┘  │    └─────────┬───────┘    │
             │           │              │            │
             └───────────┴──────┬───────┘            │
                                │                    │
                          ┌─────┴─────┐        ┌──────┴──────┐
                          │ yes exit  │        │  no exit    │
                          └───────────┘        └─────────────┘
```

*Fig.36(b)*

| Files | | Pages | Created | Edited |
|---|---|---|---|---|
| 🗐 Blank Paper | | | | |
| 🗀 Empty Folder | | | | |
| 🖳 — The System | created 1/08/85, 4:21pm | | 88% full | |
| — 🖳 PCW-1 Data Diskette | created 12/13/84, 7:37pm | | 22% full | |
| 🗐 Sample Document 2 | | 4 pp. | 1/17/85, | 1/17/85 |
| 🗀 SAMPLE FOLDER | | 1 files | | |
| 🗀 TECHNICAL REPORTS FOLDER | | 3 files | | |
| 🗀 PERSONAL FILES FOLDER | | 3 files | | |
| 🗀 SAMPLE FOLDER | | 1 files | | |
| 🗐 Sample Document 1 | | 5 pp. | 12/14/84 | 1/11/85 |

30

31

*Fig.36(c)*

| Files | | Pages | Created | Edited |
|---|---|---|---|---|
| 🗐 Blank Paper | | | | |
| 🗀 Empty Folder | | | | |
| 🖳 — The System | created 1/08/85, 4:21 pm | | 88% full | |
| — 🖳 PCW-1 Data Diskette | created 12/13/84, 7:37pm | | 22% full | |
| 🗐 Sample Document 2 | | 4 pp. | 1/17/85, | 1/17/85 |
| 🗀 SAMPLE FOLDER | | 1 files | | |
| 🗀 TECHNICAL REPORTS FOLDER | | 3 files | | |
| 🗀 PERSONAL FILES FOLDER | | 4 files | | |

30

31

# Fig.37

```
       ┌──────────┐
       │  entry   │
       └────┬─────┘
            │                    ┌─ P3702
   ┌────────▼────────┐
   │ Cont. Buffer =  │
   │ Cont. No. of    │
   │ Folder          │
   └────────┬────────┘
            │                    ┌─ P3704
   ┌────────▼────────┐
   │ To Move Record  │
   │ Below ( Record  │
   │ Pointer + 1 )   │
   └────────┬────────┘
            │                ┌─ P3710
       ╱────▼────╲                        ┌─ P3712
      ╱ Folder    ╲                ┌──────────────────┐
     ╱  Before     ╲  YES          │ To Add Cont.     │
     ╲ Record Poin-╱──────────────▶│ Buffer to Fol-   │
      ╲ ter?      ╱                │ der Cont. No.    │
       ╲────┬────╱                 └────────┬─────────┘
            │ NO                            │
   ┌────────▼────────┐                      │
   │ Document        │                      │
   │ Level = 1       │                      │
   └────────┬────────┘                      │
            │          ┌─ P3720             │
   ┌────────▼────────┐ P3722                │
   │ To Advance      │                      │
   │ Record Poin-    │                      │
   │ ter One Place   │                      │
   └────────┬────────┘                      │
            │          ┌─ P3724             │
       ╱────▼────╲                          │
  NO  ╱           ╲                         │
◀────╱   Loop?     ╲                        │
     ╲            ╱                         │
      ╲────┬─────╱                          │
           │ YES                            │
           └───────────────┐               │
                           ▼               ▼
                        ┌──────────┐
                        │   exit   │
                        └──────────┘
```

# Fig.38

```
       ┌──────────┐
       │  entry   │
       └────┬─────┘
            │                    ┌─ P3802
   ┌────────▼────────┐
   │ To Move  Record │
   │ Upwards         │
   │                 │
   └────────┬────────┘
            │                ┌─ P3810
       ╱────▼────╲
      ╱ Folder    ╲  NO
     ╱  Before     ╲─────────────┐
     ╲ Record Poin-╱             │
      ╲ ter?      ╱              │
       ╲────┬────╱               │
            │ YES    ┌─ P3812    │
   ┌────────▼────────┐           │
   │ To Decrease Fol-│           │
   │ der Cont. by 1  │           │
   └────────┬────────┘           │
            │                    │
            ◀────────────────────┘
            ▼
       ┌──────────┐
       │  exit    │
       └──────────┘
```

## Fig.39(a)

| Files | Pages | Created | Edited |
|---|---|---|---|
| ⊡ Blank Paper | | | |
| ☐ Empty Folder | | | |
| ⊡ ▬ The System | created 1/08/85, 4:21pm | 88 % full | |
| ▬ ⊡ PCW-1 Data Diskette | created 12/13/84, 7:37pm | 22 % full | |
| ⊡ Sample Document 2 | 4 pp. | 1/17/85 | 1/17/85 |
| ☐ TECHNICAL REPORTS FOLDER | 3 files | | |
| ☐ PERSONAL FILES FOLDER | 2 files | | |
| ☐ SAMPLE FOLDER | 1 files | | |

30

31

## Fig.39(b)

| Files | Pages | Created | Edited |
|---|---|---|---|
| ⊡ Blank Paper | | | |
| ☐ Empty Folder | | | |
| ⊡ ▬ The System | created 1/08/85, 4:21pm | 88 % full | |
| ▬ ⊡ PCW-1 Data Diskette | created 12/13/84, 7:37pm | 22% full | |
| ⊡ Sample Document 2 | 4 pp. | 1/17/85 | 1/17/85 |
| ☐ TECHNICAL REPORTS FOLDER | 3 files | | |
| ☐ PERSONAL FILES FOLDER | 2 files | | |
| ☐ SAMPLE FOLDER | 1 files | | |

30

**Fig.39(c)**

| Files | Pages | Created | Edited |
|---|---|---|---|
| 🗇 Blank Paper | | | |
| 🗀 Empty Folder | | | |
| 🗄 ▭ The System    created 1/08/85, 4:21pm | 88% full | | |
| 🗄 PCW-1 Data Diskette created 12/13/84, 7:37pm | 22% full | | |
| 🗇 Sample Document 2 | 4 pp. | 1/17/85 | 1/17/85 |
| 🗀 TECHNICAL REPORTS FOLDER | 3 files | | |
| 🗇 File. Specification | 3 pp. | 12/14/84 | 1/17/85 |
| 🗇 Manual | 2 pp. | 1/14/85 | 1/16/85 |
| 🗇 Summary | 3 pp. | 12/14/84 | 1/11/85 |
| 🗀 PERSONAL FILES FOLDER | 2 files | | |
| 🗀 SAMPLE FOLDER | 1 files | | |

30
31

**Fig.41(a)**

| Files | Pages | Created | Edited |
|---|---|---|---|
| 🗇 Blank Paper | | | |
| 🗀 Empty Folder | | | |
| 🗄 ▭ The System    created 1/03/85, 7:17am | 90% full | | |
| 🗄 PCW-1 Data Diskette created 12/13/84, 7:37pm | 15% full | | |
| 🗇 Sample Document 1 | 5 pp. | 12/14/84 | 1/11/85 |
| 🗇 Sample Document 2 | 4 pp. | 12/14/84 | 1/11/85 |
| 🗀 PERSONAL FILES FOLDER | 2 files | | |
| 🗀 TECHNICAL REPORTS FOLDER | 3 files | | |

30

45/48  0200227

Fig.40

Fig.42(a)

## Fig.41(b)

Files

→ Blank paper
  Empty Folder

**30**

☐ The System

☐ PCW-1 Data

| | | | |
|---|---|---|---|
| Sample Document 1 | 5 pp. | 12/14/84 | 1/11/85 |
| Sample Document 2 | 4 pp. | 12/14/84 | 1/11/85 |

| ☐ PERSONAL FILES FOLDER | 2 files |
|---|---|
| ☐ TECHNICAL REPORTS FOLDER | 3 files |

≡ SEARCH MENU ≡

Type Search text    SELECT choice.
ENTER to start search. CANCEL to quit.

Search for: [                                        ]

Case sensitive:    Yes [No]

## Fig.41(c)

Files

→ Blank Paper
  Empty Folder

**30**

☐ The System

☐ PCW-1 Data

| | | | |
|---|---|---|---|
| Sample Document 1 | 5 pp. | 12/14/84 | 1/11/85 |
| Sample Document 2 | 4 pp. | 12/14/84 | 1/11/85 |

| ☐ PERSONAL FILES FOLDER | 2 files |
|---|---|
| ☐ TECHNICAL REPORTS FOLDER | 3 files |

≡ SEARCH MENU ≡

Type Search text.   SELECT choice.
ENTER to start search. CANCEL to quit.

Search for: [manual                              ]

Case sensitive:    Yes [No]

46/48

0200227

## Fig. 41(d)

| Files | Pages | Created | Edited |
|---|---|---|---|
| ▱ Blank Paper | | | |
| 🗁 Empty Folder | | | |

| ⊡ ═ The System | created 1/03/85, 7:17am | 90%full | |

| ═ ⊡ PCW-1 Data Diskette created 12/13/84, 7:37pm | 15%full | | |
|---|---|---|---|
| ▱ Sample Document 1 | 5 pp. | 12/14/84 | 1/11/85 |
| ▱ Sample Document 2 | 4 pp. | 12/14/84 | 1/11/85 |
| 🗁 PERSONAL FILES FOLDER | 2 files | | |
| 🗁 TECHNICAL REPORTS FOLDER | 3 files | | |
| ▱ Summary | 3 pp. | 12/14/84 | 1/11/85 |
| ▱ File Specification | 3 pp. | 12/14/84 | 1/17/85 |
| ▱ Manual | 2 pp. | 1/14/85 | 1/16/85 |

30

31

48/48   0200227

## Fig.42(b)